# EUROPEAN PATENT APPLICATION

(11) **EP 4 797 637 A1**
(43) Date of publication of application: **26.08.2026**
(21) Application number: 24898134.2
(22) Date of filing: 27.11.2024
(51) Int. Cl.: H04L 27/26, H04L 5/00

(54) **METHOD AND APPARATUS FOR ESTIMATING DOWNLINK CHANNEL ON BASIS OF SOUNDING REFERENCE SIGNAL BY COMPARING PRECODED CHANNEL STATE INFORMATION IN COMMUNICATION SYSTEM**

(30) Priority: 28.11.2023 KR 20230168365
(71) Applicant: Samsung Electronics Co., Ltd., Suwon-si, Gyeonggi-do 16677 (KR)
(72) Inventor: LIM, Seongmok, Suwon-si, Gyeonggi-do 16677 (KR); JANG, Youngrok, Suwon-si, Gyeonggi-do 16677 (KR); JI, Hyoungju, Suwon-si, Gyeonggi-do 16677 (KR); ABEBE, Ameha Tsegaye, Suwon-si, Gyeonggi-do 16677 (KR); CHOI, Kyungjun, Suwon-si, Gyeonggi-do 16677 (KR)
(74) Representative: Gulde & Partner
(86) International application number: PCT/KR2024/019034
(87) International publication number: WO 2025/116540

(57) **Abstract**

The present disclosure relates to a 5G or 6G communication system for supporting higher data transmission rates. The present disclosure relates to the operations of a terminal and a base station in a wireless communication system and, more specifically, the present disclosure relates to a method and apparatus for estimating a downlink channel on the basis of a sounding reference signal by comparing precoded channel state information in a communication system. The present disclosure provides an apparatus and method capable of effectively providing services in a mobile communication system.

## Description

### [Technical Field]

The present disclosure relates to operations of a terminal and a base station in a wireless communication system. More particularly, the present disclosure relates to a method for estimating an enhanced downlink channel based on SRS antenna switching and an apparatus capable of performing the same.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosed embodiment is directed to providing an apparatus and method capable of effectively providing services in a mobile communication system.

The technical problems to be achieved in the present disclosure are not limited to those mentioned above, and other technical problems not mentioned may be considered by those skilled in the art from various embodiments of the present disclosure to be described below.

### [Solution to Problem]

According to an embodiment of the present disclosure, a method performed by a terminal in a communication system comprises: receiving a sounding reference signal (SRS)-related configuration including a usage parameter indicating antenna switching via higher layer signaling; transmitting an SRS corresponding to the antenna switching; receiving a channel state information reference signal (CSI-RS); transmitting CSI report based on the CSI-RS; receiving a plurality of precoded CSI-RSs, the plurality of precoded CSI-RSs including a first precoded CSI-RS corresponding to the SRS and a second precoded CSI-RS corresponding to the CSI report; and transmitting compensate information based on the plurality of precoded CSI-RSs.

According to an embodiment of the present disclosure, the compensate information may be for compensating for an SRS-based downlink channel estimation corresponding to the antenna switching.

According to an embodiment of the present disclosure, the compensate information may be for compensating for the SRS-based downlink channel estimation corresponding to the antenna switching during a certain time interval in which the SRS-based downlink channel estimation corresponding to the antenna switching is applied.

According to an embodiment of the present disclosure, the certain time interval may be predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel.

According to an embodiment of the present disclosure, the downlink channel received within the certain time interval may be based on precoding related to the SRS-based downlink channel estimation corresponding to the antenna switching compensated according to the compensate information.

According to an embodiment of the present disclosure, the plurality of precoded CSI-RSs may be received based on a plurality of CSI-RS resource configurations, and the plurality of CSI-RS resource configurations may be associated with a CSI report configuration, the plurality of CSI-RS resource configurations and the CSI report configuration may be received via the higher layer signaling, and the CSI report configuration may comprise a reportQuantity parameter that indicates reporting of a CSI related quantity corresponding to the compensate information.

According to an embodiment of the present disclosure, the transmitting of the compensate information may comprise: determining a first precoder based on the first precoded CSI-RS; determining a second precoder based on the second precoded CSI-RS; determining a channel estimation corresponding to the CSI-RS and a first effective channel estimation based on the first precoder; determining a second effective channel estimation based on the channel estimation corresponding to the CSI-RS and the second precoder; determining a compensate value corresponding to the precoder based on the first effective channel estimation and the second effective channel estimation, the compensate value being a value in which a difference between the first effective channel estimation and the second effective channel estimation is minimized, or a value in which a correlation between the first effective channel estimation and the second effective channel estimation is maximized; and transmitting compensate information including the compensate value.

According to an embodiment of the present disclosure, the method may further comprise: transmitting UE capability information related to whether support for the SRS-based downlink channel estimation corresponding to the antenna switching is enabled based on the compensate information; and receiving information indicating activation for the SRS-based downlink channel estimation corresponding to the antenna switching based on the compensate information via the higher layer signaling.

According to an embodiment of the present disclosure, a terminal of a communication system may comprise: a transceiver; and a processor connected to the transceiver, in which the processor may be configured to: receive a sounding reference signal (SRS)-related configuration including a usage parameter indicating antenna switching via higher layer signaling; transmit an SRS corresponding to the antenna switching; receive a channel state information reference signal (CSI-RS); transmit CSI report based on the CSI-RS; receive a plurality of precoded CSI-RSs, the plurality of precoded CSI-RSs including a first precoded CSI-RS corresponding to the SRS and a second precoded CSI-RS corresponding to the CSI report; and transmit compensate information based on the plurality of precoded CSI-RSs.

According to an embodiment of the present disclosure, the compensate information may be for compensating for an SRS-based downlink channel estimation corresponding to the antenna switching.

According to an embodiment of the present disclosure, the compensate information may be for compensating for the SRS-based downlink channel estimation corresponding to the antenna switching during a certain time interval in which the SRS-based downlink channel estimation corresponding to the antenna switching is applied, the certain time interval may be predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and the downlink channel received within the certain time interval may be based on precoding related to the SRS-based downlink channel estimation corresponding to the antenna switching compensated according to the compensate information.

According to an embodiment of the present disclosure, the plurality of precoded CSI-RSs may be received based on a plurality of CSI-RS resource configurations, and the plurality of CSI-RS resource configurations may be associated with a CSI report configuration, the plurality of CSI-RS resource configurations and the CSI report configuration may be received via the higher layer signaling, and the CSI report configuration may comprise a reportQuantity parameter that indicates reporting of a CSI related quantity corresponding to the compensate information.

According to an embodiment of the present disclosure, in transmitting the compensate information, the processor may be configured to: determine a first precoder based on the first precoded CSI-RS; determine a second precoder based on the second precoded CSI-RS; determine a channel estimation corresponding to the CSI-RS and a first effective channel estimation based on the first precoder; determine a channel estimation corresponding to the CSI-RS and a second effective channel estimation based on the second precoder; determine a compensate value corresponding to the precoder based on the first effective channel estimation and the second effective channel estimation, the compensate value being a value in which a difference between the first effective channel estimation and the second effective channel estimation is minimized, or a value in which a correlation between the first effective channel estimation and the second effective channel estimation is maximized; and transmit compensate information including the compensate value.

According to an embodiment of the present disclosure, the processor may be configured to: transmit UE capability information related to whether support for the SRS-based downlink channel estimation corresponding to the antenna switching is enabled based on the compensate information; and receive information indicating activation for the SRS-based downlink channel estimation corresponding to the antenna switching based on the compensate information via the higher layer signaling.

According to an embodiment of the present disclosure, a method performed by a base station in a communication system comprises: transmitting a sounding reference signal (SRS)-related configuration including a usage parameter indicating antenna switching via higher layer signaling; receiving an SRS corresponding to the antenna switching; transmitting a channel state information reference signal (CSI-RS); receiving CSI report corresponding to the CSI-RS; transmitting a plurality of precoded CSI-RSs, the plurality of precoded CSI-RSs including a first precoded CSI-RS corresponding to the SRS and a second precoded CSI-RS corresponding to the CSI report; and receiving compensate information based on the plurality of precoded CSI-RSs.

According to an embodiment of the present disclosure, the compensate information may be for compensating for an SRS-based downlink channel estimation corresponding to the antenna switching.

According to an embodiment of the present disclosure, the compensate information may be for compensating for the SRS-based downlink channel estimation corresponding to the antenna switching during a certain time interval in which the SRS-based downlink channel estimation corresponding to the antenna switching is applied, the certain time interval may be predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and the downlink channel transmitted within the certain time interval may be based on precoding related to the SRS-based downlink channel estimation corresponding to the antenna switching compensated according to the compensate information.

According to an embodiment of the present disclosure, the plurality of precoded CSI-RSs may be based on a plurality of CSI-RS resource configurations, and the plurality of CSI-RS resource configurations may be associated with a CSI report configuration, the plurality of CSI-RS resource configurations and the CSI report configuration may be transmitted via the higher layer signaling, and the CSI report configuration may comprise a reportQuantity parameter that indicates reporting of a CSI related quantity corresponding to the compensate information.

According to an embodiment of the present disclosure, a base station of a communication system includes: a transceiver; and a processor connected to the transceiver, in which the processor may be configured to: transmit a sounding reference signal (SRS)-related configuration including a usage parameter indicating antenna switching via higher layer signaling; receive an SRS corresponding to the antenna switching; transmit a channel state information reference signal (CSI-RS); receive CSI report corresponding to the CSI-RS; transmit a plurality of precoded CSI-RSs, the plurality of precoded CSI-RSs including a first precoded CSI-RS corresponding to the SRS and a second precoded CSI-RS corresponding to the CSI report; and receive compensate information based on the plurality of precoded CSI-RSs.

According to an embodiment of the present disclosure, the compensate information may be for compensating for an SRS-based downlink channel estimation corresponding to the antenna switching.

According to an embodiment of the present disclosure, the compensate information may be for compensating for the SRS-based downlink channel estimation corresponding to the antenna switching during a certain time interval in which the SRS-based downlink channel estimation corresponding to the antenna switching is applied, the certain time interval may be predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and the downlink channel transmitted within the certain time interval may be based on precoding related to the SRS-based downlink channel estimation corresponding to the antenna switching compensated according to the compensate information.

The embodiments described above are merely some of the preferred embodiments of the present disclosure, and various embodiments reflecting the technical features of various embodiments of the present disclosure may be derived and understood by those skilled in the art based on the detailed description to be described below.

### [Advantageous Effects of Invention]

The disclosed embodiments may provide an apparatus and method capable of effectively providing services in a mobile communication system.

The effects that can be obtained from the present disclosure are not limited to the effects mentioned above, and other effects not mentioned may be clearly derived and understood by those skilled in the art based on the detailed description below.

### [Brief Description of Drawings]

FIG. 1 is a diagram illustrating a basic structure of a time-frequency domain in a wireless communication system according to an embodiment of the present disclosure.
FIG. 2 is a diagram illustrating a structure of a frame, a subframe, and a slot in the wireless communication system according to an embodiment of the present disclosure.
FIG. 3 is a diagram illustrating an example of base station beam allocation according to a transmission configuration indicator (TCI) state configuration in the wireless communication system according to an embodiment of the present disclosure.
FIG. 4 is a diagram illustrating a beam application time that may be considered when using a unified TCI scheme in the wireless communication system according to an embodiment of the present disclosure.
FIG. 5 is a diagram illustrating another MAC-CE structure for activating and indicating a joint TCI state or a separate DL or UL TCI state in the wireless communication system according to an embodiment of the present disclosure.
FIG. 6 is a diagram illustrating an example of an aperiodic CSI report method.
FIG. 7 is a diagram illustrating an SRS antenna switching operation according to an embodiment of the present disclosure.
FIG. 8 is an example comparing a method for estimating a downlink channel based on CSI-RS with a method for estimating a downlink channel based on SRS and reciprocity.
FIG. 9 illustrates an example of a case where, when a UE supports 1T4R, the UE performs SRS antenna switching and a base station acquires the downlink channel.
FIG. 10 is a diagram illustrating an example of a terminal structure supporting four receive antennas.
FIG. 11 is a diagram illustrating an example of an operation sequence diagram of the base station and the UE according to an embodiment.
FIG. 12 is a diagram illustrating a structure of a terminal in a wireless communication system according to an embodiment of the present disclosure.
FIG. 13 is a diagram illustrating a structure of a base station in a wireless communication system according to an embodiment of the present disclosure.

### [Mode for the Invention]

Hereinafter, embodiments of the present disclosure will be described in detail with reference to the accompanying drawings.

In describing the embodiments, descriptions of technical contents that are well known in the technical field to which the present disclosure pertains and are not directly related to the present disclosure will be omitted. The reason why an unnecessary description is omitted is to make the gist of the present disclosure clear.

For the same reason, some components in the accompanying drawings are exaggerated, omitted, or schematically illustrated. In addition, the size of each component does not entirely reflect the actual size. The same reference numerals are assigned to the same or corresponding components in each drawing.

Advantages and features of the present disclosure and methods accomplishing them will become apparent from the following description of embodiments with reference to the accompanying drawings. However, the present disclosure is not limited to embodiments to be described below, but may be implemented in various different forms. These embodiments will be provided only in order to make the present disclosure complete and allow those skilled in the art to completely recognize the scope of the present disclosure, and the present disclosure will be defined by the scope of the claims. Throughout the specification, like reference numerals denote like components. In addition, in describing the present disclosure, when it is determined that a detailed description for the functions or configurations related to the present disclosure may unnecessarily obscure the gist of the present disclosure, the detailed description thereof will be omitted. Further, the following terms are defined in consideration of the functions in the present disclosure and may be construed in different ways by the intention of users and operators, practice, etc. Therefore, the definitions thereof should be construed based on the contents throughout the present specification.

Hereinafter, a base station is an entity that performs resource assignment of a terminal, and may be at least one of a gNode B, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. In the present disclosure, downlink (DL) refers to a wireless transmission path of a signal transmitted from a base station to a terminal, and uplink (UL) refers to a wireless transmission path of a signal transmitted from a terminal to a base station. In addition, although an LTE or LTE-A system may be described below as an example, embodiments of the present disclosure may also be applied to other communication systems having a similar technical background or channel type. For example, the 5th generation (5G) mobile communication technology (new radio, NR) developed after LTE-A may be included therein, and the 5G below may also be a concept that includes the legacy LTE, LTE-A, and other similar services. In addition, the present disclosure may be applied to other communication systems through certain modifications, as determined by those skilled in the art, without significantly departing from the scope of the present disclosure.

In this case, it will be appreciated that each block of processing flowcharts and combinations of the flowcharts may be executed by computer program instructions. Since these computer program instructions may be mounted in a processor of a general-purpose computer, a special-purpose computer, or other programmable data processing apparatuses, these computer program instructions executed through the processor of the computer or other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks may occur regardless of order in some alternative embodiments. For example, two blocks that are continuously illustrated may be simultaneously performed in fact or be performed in a reverse sequence depending on corresponding functions.

In this case, the term '~unit' used in the present embodiment means software or hardware components such as field programmable gate array (FPGA) or application specific integrated circuit (ASIC), and the '~unit' performs certain roles. However, the '~unit' is not meant to be limited to the software or hardware. The "unit" may be configured to be stored in a storage medium that can be addressed or may be configured to reproduce one or more processors. Accordingly, as an example, the '~unit' includes components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit'. In addition, components and '~ units' may be implemented to reproduce one or more CPUs in a device or a secure multimedia card. In addition, in an embodiment, the '~unit' may include one or more processors.

Wireless communication systems have evolved from their initial voice-centric services to broadband wireless communication systems that provide high-speed, high-quality packet data services, as exemplified by communication standards such as 3GPP's high speed packet access (HSPA), long term evolution (LTE) (or evolved universal terrestrial radio access (E-UTRA)), LTE-advanced (LTE-A), LTE-Pro, 3GPP2's high rate packet data (HRPD), ultra mobile broadband (UMB), and IEEE's 802.16e.

As a representative example of the broadband wireless communication systems, for the LTE system, orthogonal frequency division multiplexing (OFDM) is employed in downlink (DL) and single carrier frequency division multiple access (SC-FDMA) is employed in uplink (UL). The uplink refers to a radio link through which a terminal (user equipment (UE) or mobile station (MS)) transmits data or control signals to a base station (eNode B or base station (BS)), and the downlink refers to a radio link through which a base station transmits data or control signals to a terminal. The multiple access scheme as described above typically allocates and operates time-frequency resources to carry and transmit data or control information to each user so that the time-frequency resources do not overlap, i.e., orthogonality is ensured, thereby allowing the data or control information of each user to be distinguished.

The future communication systems beyond LTE, that is, the 5G communication systems should be able to freely reflect various requirements of users and service providers. Therefore, services simultaneously satisfying various requirements should be supported. The services being considered for the 5G communication systems include enhanced mobile broadband (eMBB), massive machine type communication (mMTC), ultra reliability low latency communication (URLLC), etc.

The eMBB aims to provide a data transmission speed that is even higher than that supported by the legacy LTE, LTE-A, or LTE-Pro. For example, in the 5G communication system, the eMBB should be able to provide a peak data rate of 20 Gbps in the downlink and a peak data rate of 10 Gbps in the uplink from the viewpoint of a single base station. In addition, the 5G communication systems should provide not only the peak data rate but also an increased user perceived data rate of a terminal. To meet these requirements, there is a need to improve various transmission and reception technologies, including more enhanced multi-input multi-output (MIMO) transmission technology. Furthermore, the LTE transmits signals using a maximum transmission bandwidth of 20MHz in the 2GHz band, while 5G communication systems may satisfy data transmission speed required by the 5G communication systems by using a wider frequency bandwidth than 20MHz in the 3 to 6GHz or 6GHz or higher frequency bands.

Simultaneously, the mMTC is being considered to support application services such as the Internet of Things (IoT) in the 5G communication systems. To efficiently provide the IoT, the mMTC requires support for access of a large number of terminals within a cell, enhanced terminal coverage, enhanced battery life, and reduced terminal costs, etc. The IoT is attached to various sensors and devices to provide communication functions, and therefore, should be able to support a large number of terminals (e.g., 1,000,000 terminals/km2) within a cell. In addition, due to the nature of the service, terminals supporting the mMTC are highly likely to be located in shadowed areas, such as basements of buildings where cell fails to cover. Therefore, wider coverage may be required for mMTC compared to other services provided by 5G communication systems. The terminal supporting the mMTC should be configured to be low-cost, and since it is difficult to frequently replace their batteries, a very long battery life time, such as 10 to 15 years, may be required.

Finally, the URLLC refers to a cellular-based wireless communication service used for specific mission-critical purposes. For example, services or the like used for remote control of robots or machinery, industrial automation, unmanned aerial vehicles, remote health care, and emergency alert, etc., may be considered. Therefore, the communication provided by the URLLC should provide extremely low latency and extremely high reliability. For example, services supporting the URLLC should satisfy radio access latency (air interface latency) less than 0.5 milliseconds, and at the same time, has requirements of a packet error rate (PER) of 10⁻⁵ or less. Therefore, for the services supporting the URLLC, the 5G systems should provide a shorter transmit time interval (TTI) than other services, and at the same time, may require design specifications that allocate wider resources in the frequency band to secure the reliability of communication links.

Three services of the 5G, that is, eMBB, URLLC, and mMTC, may be multiplexed and transmitted within one system. In this case, to satisfy distinct requirements of each service, different transmission and reception techniques and transmission and reception parameters may be used between services. Of course, the 5G is not limited to the three services described above.

Hereinafter, a/b may be understood as at least one of a or b.

### [NR Time-Frequency Resource]

Hereinafter, a frame structure of a 5G system will be describe in more detail below with reference to the drawings.

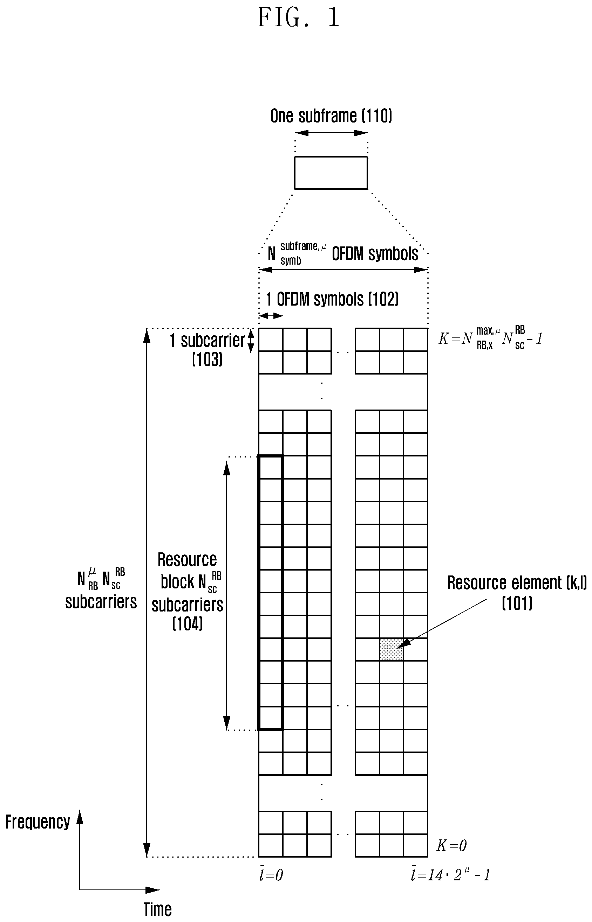

FIG. 1 is a diagram illustrating a basic structure of a time-frequency domain that is a radio resource area where data or control channels are transmitted in a 5G system.

In FIG. 1, a horizontal axis represents a time domain, and a vertical axis represents a frequency domain. A basic unit of resources in the time and frequency domains is a resource element (RE) 101, which may be defined as 1 OFDM symbol 102 on a time domain and 1 subcarrier 103 on a frequency domain. In the frequency domain, ${N}_{SG}^{RB}$ (e.g., 12) contiguous REs may constitute one resource block (RB) 104. On the time domain, one subframe 110 may include a plurality of OFDM symbols 102. For example, a length of one subframe may be 1 ms.

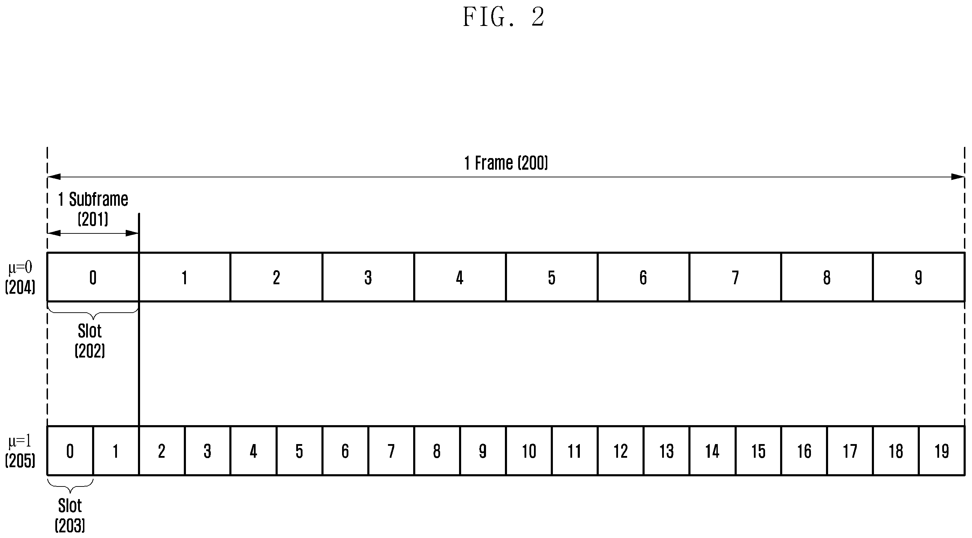

FIG. 2 is a diagram illustrating a structure of a frame, a subframe, and a slot in the wireless communication system according to an embodiment of the present disclosure.

FIG. 2 illustrates an example of a structure of a frame 200, a subframe 201, and a slot 202. 1 frame 200 may be defined as 10 ms. 1 subframe 201 may be defined as 1 ms. Accordingly, 1 frame 200 may be composed of a total of 10 subframes 201. 1 slot 202 and 203 may be defined as 14 OFDM symbols (i.e., the number ${N}_{symb}^{slot}$ of symbols per slot = 14). 1 subframe 201 may be composed of one or more slots 202 and 203, and the number of slots 202 and 203 per subframe 201 may vary depending on configuration values µ 204 and 205 for subcarrier spacing. In an example of FIG. 2, a case where the configuration value for the subcarrier spacing is µ=0 204 and a case where the configuration value for the subcarrier spacing is µ=1 205 are illustrated. When µ=0 204, 1 subframe 201 may be composed of one slot 202, and when µ=1 205, 1 subframe 201 may be composed of two slots 203. That is, the number
${N}_{slot}^{subframe , μ}$ of slots per subframe may vary depending on the configuration value µ for the subcarrier spacing, and the number ${N}_{slot}^{frame , μ}$ of slots per frame may vary accordingly. The ${N}_{slot}^{subframe , μ}$ and ${N}_{slot}^{frame , μ}$ depending on the configuration values µ for each subcarrier spacing may be defined as in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [QCL, TCI state]

In a wireless communication system, one or more different antenna ports (or these ports may be replaced with one or more channels, signals, or combinations thereof, but for convenience, in the following description of the present disclosure, are collectively referred to as different antenna ports) may be associated with each other through a quasi-co-location (QCL) configuration as shown in [Table 2] below. The TCI state is to notify the QCL relationship between the PDCCH (or PDCCH DMRS) and other RSs or channels. The fact that a reference antenna port A (reference RS #A) and another target antenna port B (target RS #B) are QCLed with each other means that the UE is allowed to apply some or all of the large-scale channel parameters estimated from the antenna port A to the channel measurement from the antenna port B. The QCL may need to associate different parameters with each other depending on the situations, such as 1) time tracking affected by average delay and delay spread, 2) frequency tracking affected by Doppler shift and Doppler spread, 3) radio resource management (RRM) affected by average gain, and 4) beam management (BM) affected by spatial parameters. Accordingly, NR supports four types of QCL relationships as shown in [Table 2] below.

**[Table 2]**

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameters may collectively refer to some or all of various parameters such as angle of arrival (AoA), power angular spectrum (PAS) of AoA, angle of departure (AoD), PAS of AoD, transmit/receive channel correlation, transmit/receive beamforming, and spatial channel correlation.

The QCL relationship can be configured for the UE via the RRC parameters TCI-state and QCL-Info, as shown in Table 9 below. Referring to [Table 3], the base station may configure one or more TCI states for the UE and inform the UE of up to two QCL relationships (qcl-Type 1, qcl-Type2) for the RS (i.e., target RS) referencing the ID of the TCI state. In this case, each QCL information (QCL-Info) included in each of the TCI states includes a serving cell index and a BWP index of the reference RS indicated by the corresponding QCL information, the type and ID of the reference RS, and the QCL type as shown in Table 2 above.

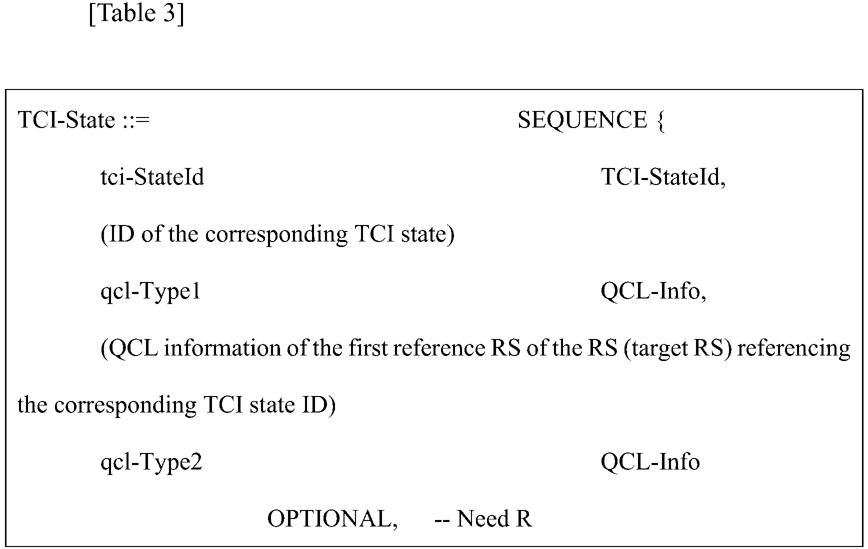

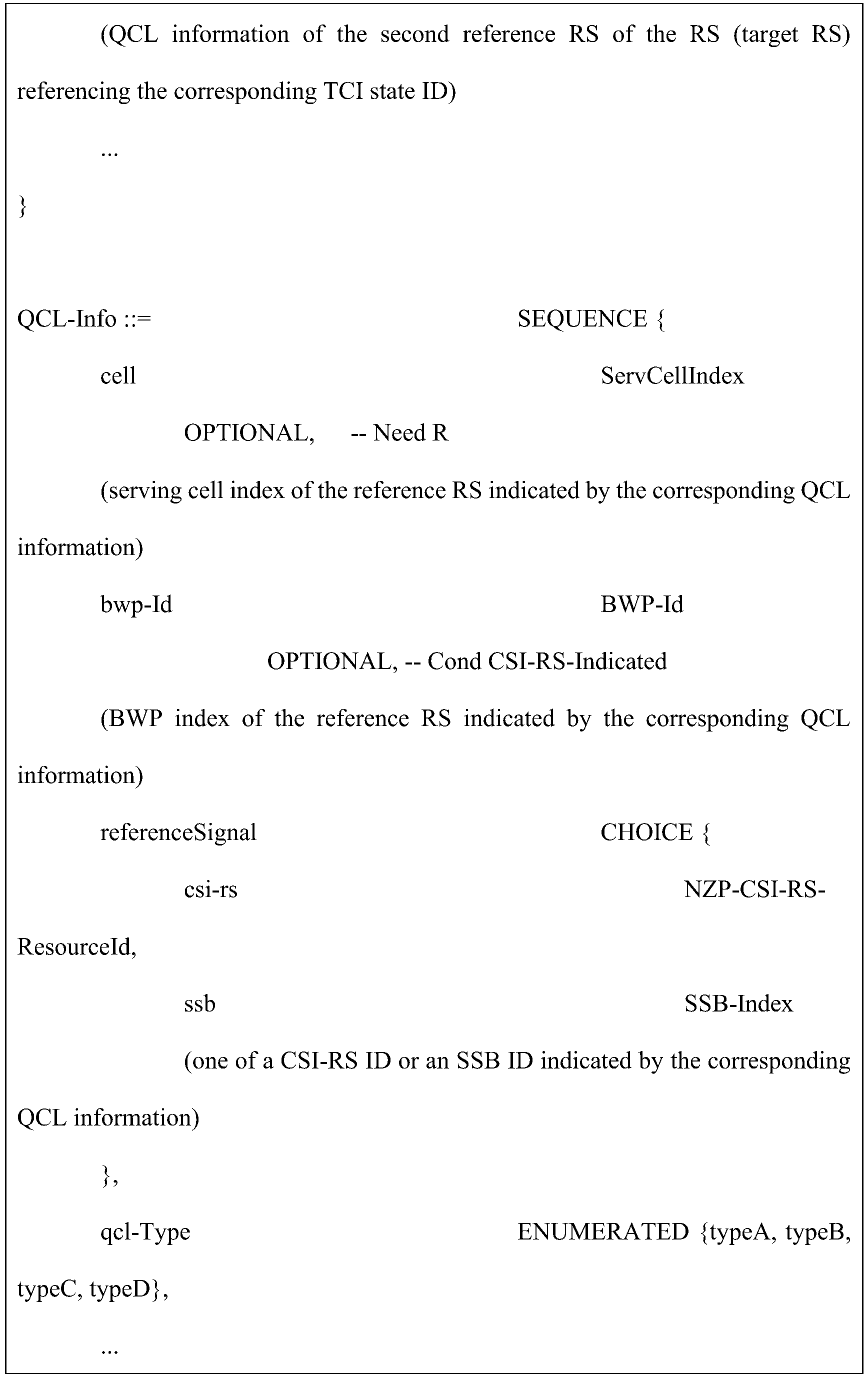

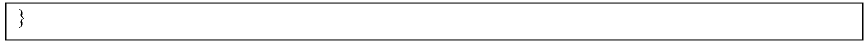

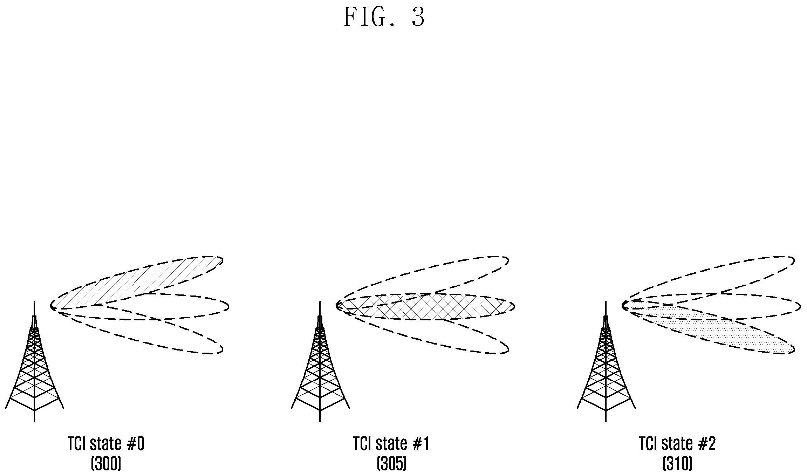

FIG. 3 is a diagram illustrating an example of base station beam allocation according to a TCI state configuration.

Referring to FIG. 3, the base station may deliver information on N different beams to the UE through N different TCI states. For example, as illustrated in FIG. 3, when N=3, the base station may notify that the antenna ports referencing the different TCI states 300, 305, or 310 are associated with different spatial Rx parameters (i.e., different beams) by associating the qcl-Type2 parameters included in the three TCI states 300, 305, or 310 with a CSI-RS or an SSB corresponding to the different beams and configuring the qcl-Type2 parameters to QCL type D.

Tables 4 to 8 below show valid TCI state configurations according to the type of target antenna port.

[Table 4] shows the valid TCI state configuration when the target antenna port is a CSI-RS for tracking (i.e., TRS). The TRS means an NZP CSI-RS among the CSI-RSs in which a repetition parameter is not configured and trs-Info is configured to true. Configuration No. 3 in Table 10 may be used for aperiodic TRS.

**[Table 4]**

| Valid TCI state configuration when target antenna port is CSI-RS for tracking (TRS) | | | | |
|---|---|---|---|---|
| **Valid TCI state Configuration** | **DL RS 1** | **qcl-Type1** | **DL RS 2 (if configured)** | **qcl-Type2 (if configured)** |
| **1** | SSB | QCL-TypeC | SSB | QCL-TypeD |
| **2** | SSB | QCL-TypeC | CSI-RS (BM) | QCL-TypeD |
| **3** | TRS (periodic) | QCL-TypeA | TRS (same as DL RS 1) | QCL-TypeD |

[Table 5] shows the valid TCI state configuration when the target antenna port is a CSI-RS for CSI. The CSI-RS for CSI means the NZP CSI-RS among the CSI-RSs in which a parameter indicating repetition (e.g., repetition parameter) is not configured and the trs-Info is not also configured to true.

**[Table 5]**

| Valid TCI state configuration when target antenna port is CSI-RS for CSI | | | | |
|---|---|---|---|---|
| **Valid TCI state Configuration** | **DL RS 1** | **qcl-Type1** | **DL RS 2 (if configured)** | **qcl-Type2 (if configured)** |
| **1** | TRS | QCL-TypeA | SSB | QCL-TypeD |
| **2** | TRS | QCL-TypeA | CSI-RS for BM | QCL-TypeD |
| **3** | TRS | QCL-TypeA | TRS (same as DL RS 1) | QCL-TypeD |
| **4** | TRS | QCL-TypeB | | |

[Table 6] shows the valid TCI state configuration when the target antenna port is a CSI-RS for beam management (BM) (the same meaning as CSI-RS for L1 RSRP reporting). The CSI-RS for BM refers to the NZP CSI-RS among the CSI-RSs in which the repetition parameter is configured to have an on or off value and the trs-Info not configured to true.

**[Table 6]**

| Valid TCI state configuration when target antenna port is CSI-RS for BM (for L1 RSRP reporting) | | | | |
|---|---|---|---|---|
| **Valid TCI state Configuration** | **DL RS 1** | **qcl-Type1** | **DL RS 2 (if configured)** | **qcl-Type2 (if configured)** |
| **1** | TRS | QCL-TypeA | TRS (same as DL RS 1) | QCL-TypeD |
| **2** | TRS | QCL-TypeA | CSI-RS (BM) | QCL-TypeD |
| **3** | SS/PBCH Block | QCL-TypeC | SS/PBCH Block | QCL-TypeD |

[Table 7] shows the valid TCI state configuration when the target antenna port is a PDCCH DMRS.

**[Table 7]**

| Valid TCI state configuration when target antenna port is PDCCH | | | | |
|---|---|---|---|---|
| DMRS | | | | |
| **Valid TCI state Configuration** | **DL RS 1** | **qcl-Type1** | **DL RS 2 (if configured)** | **qcl-Type2 (if configured)** |
| **1** | TRS | QCL-TypeA | TRS (same as DL RS 1) | QCL-TypeD |
| **2** | TRS | QCL-TypeA | CSI-RS (BM) | QCL-TypeD |
| **3** | CSI-RS (CSI) | QCL-TypeA | CSI-RS (same as DL RS 1) | QCL-TypeD |

[Table 8] shows the valid TCI state configuration when the target antenna port is a PDSCH DMRS.

**[Table 8]**

| Valid TCI state configuration when target antenna port is PDSCH DMRS | | | | |
|---|---|---|---|---|
| **Valid TCI state Configuration** | **DL RS1** | **qcl-Type1** | **DL RS 2 (if configured)** | **qcl-Type2 (if configured)** |
| **1** | TRS | QCL-TypeA | TRS | QCL-TypeD |
| **2** | TRS | QCL-TypeA | CSI-RS (BM) | QCL-TypeD |
| **3** | CSI-RS (CSI) | QCL-TypeA | CSI-RS (CSI) | QCL-TypeD |

A representative QCL configuration method, as shown in [Table 4] to [Table 8], operates by configuring the target antenna ports and reference antenna ports for each step as "SSB" -> "TRS" -> "CSI-RS for CSI, or CSI-RS for BM, PDCCH DMRS, or PDSCH DMRS." In this way, by linking statistical characteristics measurable from the SSB and TRS to each antenna port, it is possible to assist the reception operation of the UE.

### [Unified TCI state]

The single TCI state indication and activation method based on the unified TCI scheme will be described below. The unified TCI scheme may mean a scheme in which a transmit/receive beam management scheme distinguished into a TCI state scheme used for downlink reception by a UE and a spatial relation information scheme used for uplink transmission in the existing Rel-15 and Rel-16 is unified into a TCI state and managed. Therefore, when the UE is indicated by the base station based on the unified TCI scheme, the UE may perform the beam management using the TCI state even for uplink transmission. If the UE is configured, by the base station, with a TCI-State which is a higher layer signaling with tci-stateId-r17 as higher layer signaling, the UE may use the corresponding TCI-State to perform operations based on the unified TCI scheme. The TCI-State may exist in two forms: a joint TCI state or a separate TCI state.

The first form is the joint TCI state, in which the UE is indicated, by the base station, with all the TCI states to be applied for uplink transmission and downlink reception through a single TCI state. If the UE is indicated with the joint TCI state-based TCI-State, the UE may use the RS corresponding to the qcl-Type1 within the joint TCI state-based TCI-State to determine the parameters to be used for the downlink channel estimation, and use the RS corresponding to the qcl-Type2 to determine the parameters to be used as the downlink receive beam or reception filter. If the UE is indicated with the joint TCI state-based TCI-State, the UE may be indicated with parameters to be used as the uplink transmission beam or transmission filter using the RS corresponding to the qcl-Type2 within the corresponding joint DL/UL TCI state-based TCI-State. In this case, if the UE is indicated with the joint TCI state, the UE may apply the same beam to both the uplink transmission and downlink reception.

The second type is the separate TCI state, in which the UE may be individually indicated by the base station to select the UL TCI state to be applied to the uplink transmission and the DL TCI state to be applied to the downlink reception. If the UE is indicated with the UL TCI state, the UE may be indicated with the parameters to be used as the uplink transmission beam or the transmission filter using the reference RS or the source RS configured within the corresponding UL TCI state. If the UE is indicated with the DL TCI state, the UE may be indicated with the parameters to be used for the downlink channel estimation using the RS corresponding to the qcl-Type1 configured within the corresponding DL TCI state and the parameters to be used as the downlink receive beam or the reception filter using the RS corresponding to the qcl-Type2.

If the UE is indicated with both the DL TCI state and the UL TCI state, the UE may be indicated with the parameters to be used as the uplink transmission beam or the transmission filter using the reference RS or source RS configured within the corresponding UL TCI state, parameters to be used for the downlink channel estimation using the RS corresponding to the qcl-Type1 configured within the corresponding DL TCI state, and the parameters to be used as the downlink receive beam or the reception filter using the RS corresponding to the qcl-Type2. In this case, if the reference RS or the source RS configured within the DL TCI state and the UL TCI state with which the UE is indicated are different, the UE may individually apply beams to the uplink transmission and the downlink reception, respectively, based on the indicated UL TCI state and DL TCI state.

The UE may receive up to 128 joint TCI states from the base station for each specific bandwidth part within a specific cell as the higher layer signaling. Among the separate TCI states, a DL TCI state may be configured, based on a UE capability report, via higher layer signaling with up to 64 or 128 TCI states for each specific bandwidth part (BWP) within a specific cell. Among the separate TCI states, the DL TCI state and the joint TCI state may use the same higher layer signaling structure. For example, if 128 joint TCI states are configured and 64 DL TCI states are configured among the separate TCI states, the 64 DL TCI states may be included in the 128 joint TCI states.

Among the separate TCI states, up to 32 or 64 UL TCI states may be configured as higher layer signaling for each specific bandwidth part within a specific cell, based on the UE capability report. Similar to the relationship between the DL TCI state and the joint TCI state among the separate TCI states, the UL TCI state and the joint TCI state among the separate TCI states may also use the same higher layer signaling structure, and the UL TCI state among the separate TCI states may use different higher layer signaling structures from the joint TCI state and the DL TCI state among the separate TCI states.

As such, the use of different or identical higher layer signaling structures may be defined in the specification, and the higher layer signaling structures may be distinguished through another higher layer signaling configured by the base station based on the UE capability report, which includes information indicating which of two use schemes the UE may support.

The UE may receive the transmit/receive beam-related indications based on the unified TCI scheme by using one scheme of the joint TCI state and the separate TCI state configured by the base station. The UE may be configured by the base station, via the higher layer signaling, with the information indicating whether to use one of the joint TCI state and the separate TCI state.

The UE may receive the transmit/receive beam-related indications using the selected one of the joint TCI state or the separate TCI state via the higher layer signaling. In this case, the transmit/receive beam indication methods by the base station may include two types: the MAC-CE based indication method and the MAC-CE-based activation and DCI-based indication method.

If the UE receives the transmit/receive beam-related indications using the joint TCI state scheme via the higher layer signaling, the UE may receive the MAC-CE indicating the joint TCI state from the base station to perform transmit/receive beam application operations, and the base station may schedule the UE to receive the PDSCH including the corresponding MAC-CE through the PDCCH. If the MAC-CE includes one joint TCI state, the UE may determine the uplink transmit beam or transmit filter and the downlink receive beam or receive filter using the indicated joint TCI state, starting from 3 ms after transmitting the PUCCH including HARQ-ACK information indicating whether the PDSCH including the corresponding MAC-CE was successfully received, and when the MAC-CE includes two or more joint TCI states, the UE may confirm that, starting from 3 ms after transmitting the PUCCH including the HARQ-ACK information indicating whether the PDSCH including the corresponding MAC-CE was successfully received, a plurality of joint TCI states indicated by the MAC-CE correspond to each code point of the TCI state field of DCI format 1_1 or 1_2, and activate the indicated joint TCI state. Thereafter, the UE may receive the DCI format 1_1 or 1_2 to apply one joint TCI state indicated by the TCI state field within the corresponding DCI to the uplink transmit and downlink receive beams. In this case, the DCI format 1_1 or 1_2 may include the downlink data channel scheduling information (with DL assignment) or may not include the downlink data channel scheduling information (without DL assignment).

If the UE receives the transmit/receive beam-related indications using the separate TCI state scheme via the higher layer signaling, the UE may receive the MAC-CE indicating the separate TCI state from the base station to perform transmit/receive beam application operations, and the base station may schedule the UE to receive the PDSCH including the corresponding MAC-CE through the PDCCH. If the MAC-CE includes one set of separate TCI states, the UE may determine the uplink transmit beam or transmit filter and the downlink receive beam or receive filter using the separate TCI states included in the set of indicated separate TCI states, starting from 3 ms after transmitting the PUCCH including the HARQ-ACK information indicating whether the corresponding PDSCH was successfully received. In this case, the set of separate TCI states may refer to a single or a plurality of separate TCI states that one code point in the TCI state field within the DCI format 1_1 or 1_2 may have, and one set of separate TCI states may include one DL TCI state, one UL TCI state, or one DL TCI state and one UL TCI state. If the MAC-CE includes two or more sets of separate TCI states, the UE may confirm that, starting from 3 ms after transmitting the PUCCH including the HARQ-ACK information indicating whether the corresponding PDSCH is successfully received, a plurality of sets of separate TCI state indicated by the MAC-CE correspond to each code point of the TCI state field of the DCI format 1_1 or 1_2, and may activate the set of indicated separate TCI states. In this case, each code point of the TCI state field of the DCI format 1_1 or 1_2 may indicate one DL TCI state, one UL TCI state, or one DL TCI state and one UL TCI state each. The UE may receive the DCI format 1_1 or 1_2 to apply the set of separate TCI states indicated by the TCI state field within the corresponding DCI to the uplink transmit and downlink receive beams. In this case, the DCI format 1_1 or 1_2 may include the downlink data channel scheduling information (with DL assignment) or may not include the downlink data channel scheduling information (without DL assignment).

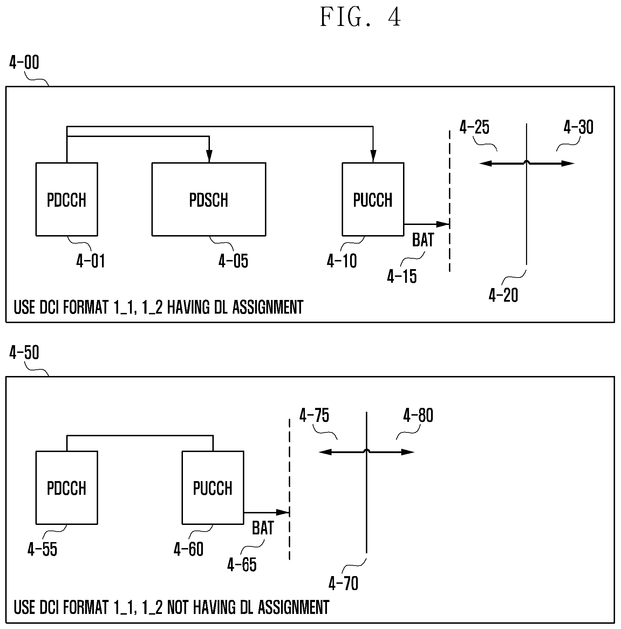

FIG. 4 is a diagram illustrating a beam application time that may be considered when using a unified TCI scheme in the wireless communication system according to an embodiment of the present disclosure. As described above, the UE may receive, from the base station, the DCI format 1_1 or 1_2, which may include the downlink data channel scheduling information (with DL assignment) or may not include the downlink data channel scheduling information (without DL assignment), and apply one joint TCI state or the set of separate TCI states indicated by the TCI state field within the corresponding DCI to the uplink transmit and downlink receive beams.
- DCI format 1_1 or 1_2 with DL assignment 400: If the UE receives, from the base station, the DCI format 1_1 or 1_2 including the downlink data channel scheduling information 401 and is indicated with one joint TCI state or the set of separate TCI states based on the unified TCI scheme, the UE may receive the PDSCH scheduled based on the received DCI 405 and transmit the PUCCH including the HARQ-ACK indicating whether the DCI and the PDSCH was successfully received 410. In this case, the HARQ-ACK may include the information indicating whether both the DCI and the PDSCH was successfully received. When at least one of the DCI and PDSCH is not received, the UE may transmit a NACK, and when both the DCI and PDSCH are successfully received, the UE may transmit an ACK.
- DCI format 1_1 or 1_2 without DL assignment 450: When the UE receives, from the base station, the DCI format 1_1 or 1_2 without downlink data channel scheduling information 455 and is indicated with one joint TCI state or the set of separate TCI states based on the unified TCI scheme, the UE may assume at least one combination of the following matters for the corresponding DCI.

▪ Including a scrambled CRC using CS-RNTI.
▪ All bits assigned to all fields used as a redundancy version (RV) field have a value of 1.
▪ All bits assigned to all fields used as a modulation and coding scheme (MCS) field have a value of 1.
▪ All bits assigned to all fields used as a new data indication (NDI) field have a value of 0.
▪ For a frequency domain resource allocation (FDRA) Type 0, all bits assigned to the FDRA field have a value of 0. For FDRA Type 1, all bits assigned to the FDRA field have a value of 1. When the FDRA scheme is dynamicSwitch, all bits assigned to the FDRA field have a value of 0.

The UE may transmit the PUCCH including the HARQ-ACK indicating whether the DCI format 1_1 or 1_2 assuming the above-described matters is successfully received 460.
- For both the DCI format 1_1 or 1_2 with DL assignment 400 and without DL assignment 450, when the new TCI state indicated by the DCI 401 and 455 is the same as the TCI state that has already been indicated and applied to the uplink transmit and downlink receive beams, the UE may maintain the previously applied TCI state. When the new TCI state is different from the previously indicated TCI state, the UE may determine an application time of the joint TCI state or the set of separate TCI states that may be indicated from the TCI state field included in the DCI as 430 and 480 after first slots 420 and470 after a time equal to a beam application time (BAT) 415 and 465 after the PUCCH transmission, and use the previously indicated TCI-state until 425 and 475 before the corresponding slots 420 and 470.
- For both the DCI format 1_1 or 1_2 with DL assignment 400 and without DL assignment 450, the BAT, which is a specific number of OFDM symbols, may be configured via the higher layer signaling based on UE capability report information, and the numerology for the BAT and the first slot after the BAT may be determined based on the smallest numerology among all cells to which the joint TCI state or the set of separate TCI states indicated by the DCI is applied.

The UE may apply one joint TCI state indicated by the MAC-CE or DCI to reception of control resource sets associated with all UE-specific search spaces, reception of the PDSCH scheduled by the PDCCH transmitted from the corresponding control resource set, transmission of the PUSCH, and transmission of all PUCCH resources.

When one set of separate TCI states indicated by the MAC-CE or DCI includes one DL TCI state, the UE may apply one set of separate TCI states to reception of all the control resource sets associated with the UE-specific search space, reception of the PDSCH scheduled by the PDCCH transmitted from the corresponding control resource set, and all PUSCH and PUCCH resources based on the previously indicated UL TCI state.

When one set of separate TCI states indicated by the MAC-CE or DCI includes one UL TCI state, the UE may apply the UL TCI state to all the PUSCH and PUCCH resources, the reception of all the control resource sets associated with the UE-specific search space based on the previously indicated DL TCI state, and the reception of the PDSCH scheduled by the PDCCH transmitted from the corresponding control resource sets.

When one set of separate TCI states indicated by the MAC-CE or DCI includes one DL TCI state and one UL TCI state, the UE may apply the DL TCI state to the reception of all the control resource sets associated with the UE-specific search space and the reception of the PDSCH scheduled by the PDCCH transmitted from the corresponding control resource set, and apply the UL TCI state to all the PUSCH and PUCCH resources.

### [Unified TCI state MAC-CE]

The single TCI state indication and activation method based on the unified TCI scheme will be described below. The UE may be scheduled, by the base station, with the PDSCH including the following MAC-CE, and interpret each code point of the TCI state field within the DCI format 1_1 or 1_2 based on the information within the MAC-CE received from the base station, starting from three slots after transmitting the HARQ-ACK for the corresponding PDSCH to the base station. That is, the UE may activate each entry of the MAC-CE received from the base station for each code point of the TCI state field within the DCI format 1_1 or 1_2.

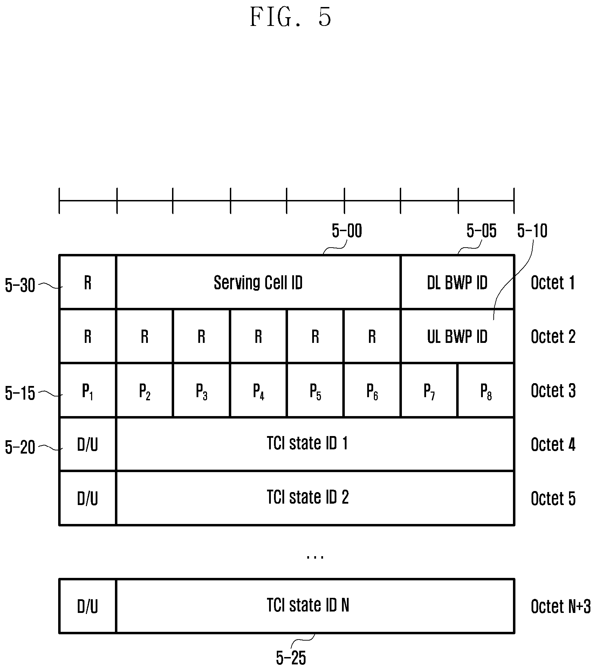

FIG. 5 is a diagram illustrating another MAC-CE structure for activating and indicating a joint TCI state or a separate DL or UL TCI state in the wireless communication system according to an embodiment of the present disclosure. The meaning of each field within the corresponding MAC-CE structure may be as follows.
- Serving Cell ID 500: This field may indicate which serving cell the corresponding MAC-CE is applied to. The length of this field may be 5 bits. If the serving cell indicated by this field is included in one or more of simultaneousU-TCI-UpdateList1, simultaneousU-TCI-UpdateList2, simultaneousU-TCI-UpdateList3, or simultaneousU-TCI-UpdateList4 that are the higher layer signaling, the corresponding MAC-CE may be applied to all serving cells included in one or more lists of the simultaneousU-TCI-UpdateList1, simultaneousU-TCI-UpdateList2, simultaneousU-TCI-UpdateList3, or simultaneousU-TCI-UpdateList4 that include the serving cell indicated by this field.
- DL BWP ID 505: This field may indicate which DL BWP the corresponding MAC-CE is applied to, and the meaning of each code point of this field may correspond to each code point of the bandwidth part indicator within the DCI. The length of this field may be 2 bits.
- UL BWP ID 510: This field may indicate which UL BWP the corresponding MAC-CE is applied to, and the meaning of each code point of this field may correspond to each code point of the bandwidth part indicator within the DCI. The length of this field may be 2 bits.
- Pi 515: This field may indicate whether each code point of the TCI state field within the DCI format 1_1 or 1_2 has a plurality of TCI states or has one TCI state. When a value of Pi is 1, it means that a corresponding i-th code point has the plurality of TCI states, which may mean that the corresponding code point may include the separate DL TCI states and separate UL TCI states. When a value of Pi is 0, it means that a corresponding i-th code point has a single TCI state, which may mean that the corresponding code point may include one of the joint TCI state or the separate DCI TCI state, or the separate UL TCI state.
- D/U 520: This field may indicate whether the TCI state ID field within the same octet is the joint TCI state, the separate DL TCI state, or the separate UL TCI state. When this field is 1, the TCI state ID field within the same octet may be the joint TCI state or the separate DL TCI state. When this field is 0, the TCI state ID field within the same octet may be the separate UL TCI state.
- TCI state ID 525: This field may indicate the TCI state that may be identified by the TCI-StateId, which is the higher layer signaling. When the D/U field is configured to 1, this field may be used to express a TCI-StateId that may be expressed in 7 bits. When the D/U field is configured to 0, the most significant bit (MSB) of this field may be considered a reserved bit, and the remaining 6 bits may be used to express UL-TCIState-Id that is the higher layer signaling. The maximum number of TCI states that may be activated is 8 for the joint TCI state and 16 for the separate DL or UL TCI states.
- R: It means a reserved bit and may be configured to 0.

For the MAC-CE structure of FIG. 5 described above, the UE may include a third octet including the P1, P2, ..., P8 fields in FIG. 5 in the corresponding MAC-CE structure regardless of whether unifiedTCI-StateType-r17 in MIMOparam-r17 within ServingCellConfig, which is the higher layer signaling, is configured as joint or separate. In this case, the UE may perform TCI state activation using the fixed MAC-CE structure regardless of the higher layer signaling configured by the base station. As another example, for the MAC-CE structure of FIG. 5 described above, the UE may omit the third octet including the P1, P2, ..., P8 fields in FIG. 5 when the unifiedTCI-StateType-r17 in the MIMOparam-r17 within the ServingCellConfig, which is the higher layer signaling, is configured as the joint. In this case, the UE may save up to 8 bits of a payload of the corresponding MAC-CE according to the higher layer signaling configured by the base station. Furthermore, all D/U fields located at a first bit of a fourth octet in FIG. 5 may be considered R fields, and all the corresponding R fields may be configured to 0 bits.

### [CSI resource configuration]

In NR, the base station has a CSI framework for instructing the UE to measure and report channel state information (CSI). The CSI framework of the NR may be composed of at least two elements of resource setting and report setting, and the report setting may have an association relationship with the resource setting by referring to at least one ID of the resource setting.

According to an embodiment of the present disclosure, the resource setting may include information related to a reference signal (RS) for the UE to measure the channel state information. The base station may configure at least one resource setting for the UE. For example, the base station and the UE may exchange signaling information such as [Table 9] to deliver information on the resource setting.

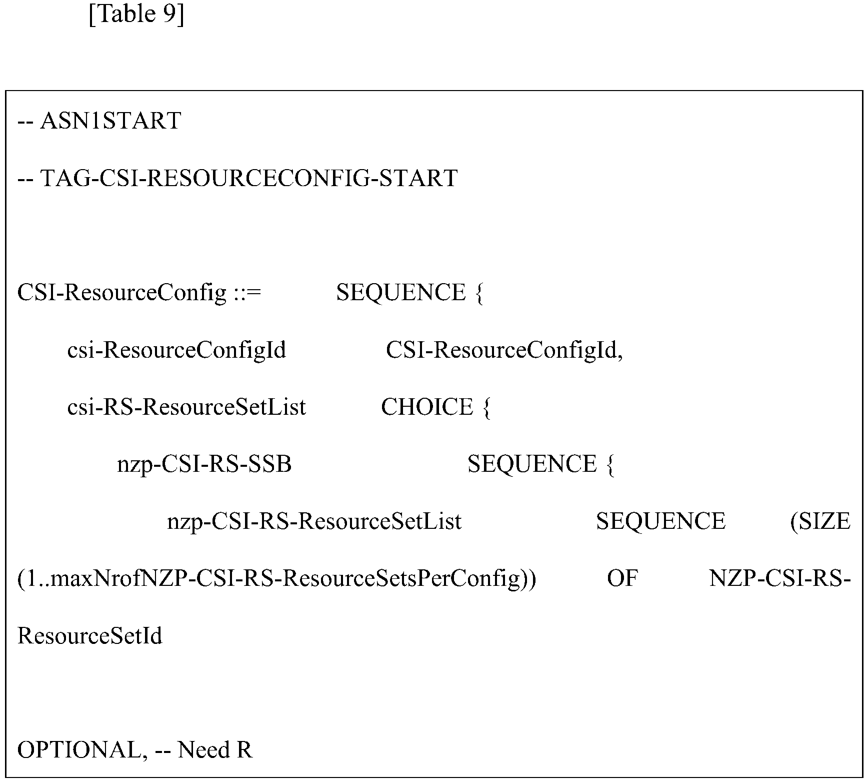

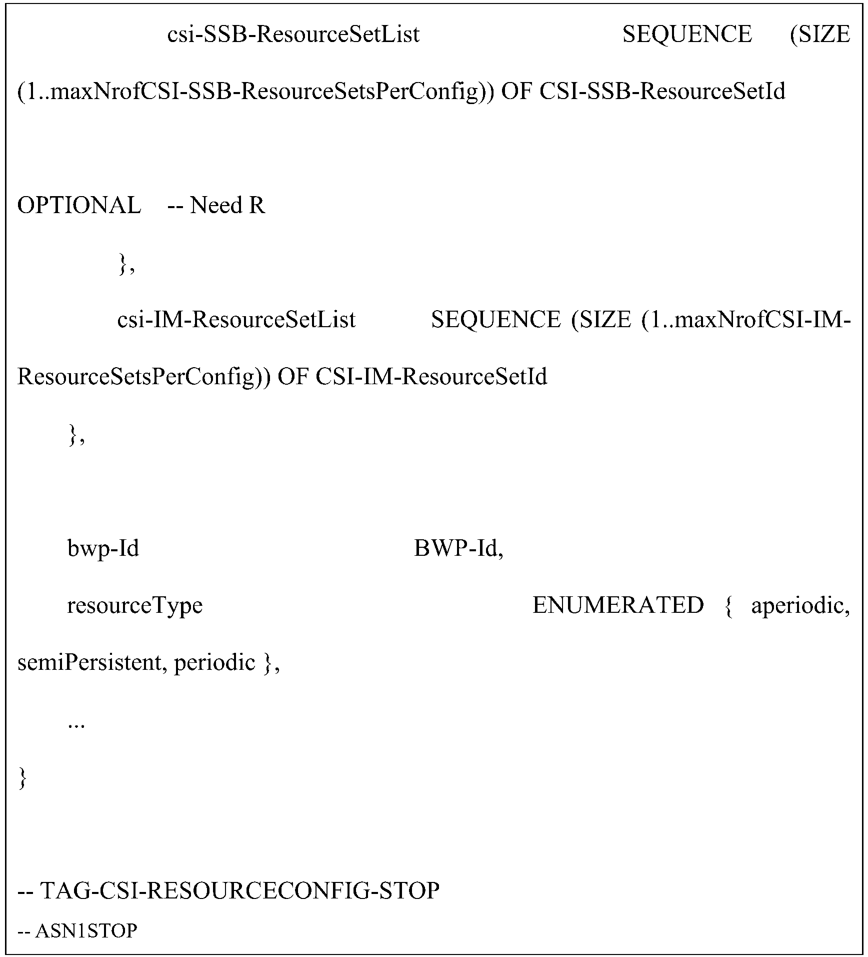

In [Table 9], the signaling information CSI-ResourceConfig includes information on each resource setting. According to the signaling information, each resource setting may include a resource setting index (csi-ResourceConfigId), a BWP index (bwp-ID), a time-domain transmission configuration (resourceType) of a resource, or a resource set list (csi-RS-ResourceSetList) including at least one resource set. The time-domain transmission configuration of the resource may be configured as aperiodic transmission, semi-persistent transmission, or periodic transmission. The resource set list may be a set including resource sets for channel measurement or a set including resource sets for interference measurement. When the resource set list is a set including resource sets for channel measurement, each resource set may include at least one resource, which may be a CSI reference signal (CSI-RS) resource or an index of a synchronous/broadcast channel block (SS/PBCH block, SSB). When the resource set list is a set including resource sets for interference measurement, each resource set may include at least one interference measurement resource (CSI interference measurement (CSI-IM)).

For example, when the resource set includes CSI-RS, the base station and the UE may exchange signaling information such as [Table 10] to deliver information on the resource set.

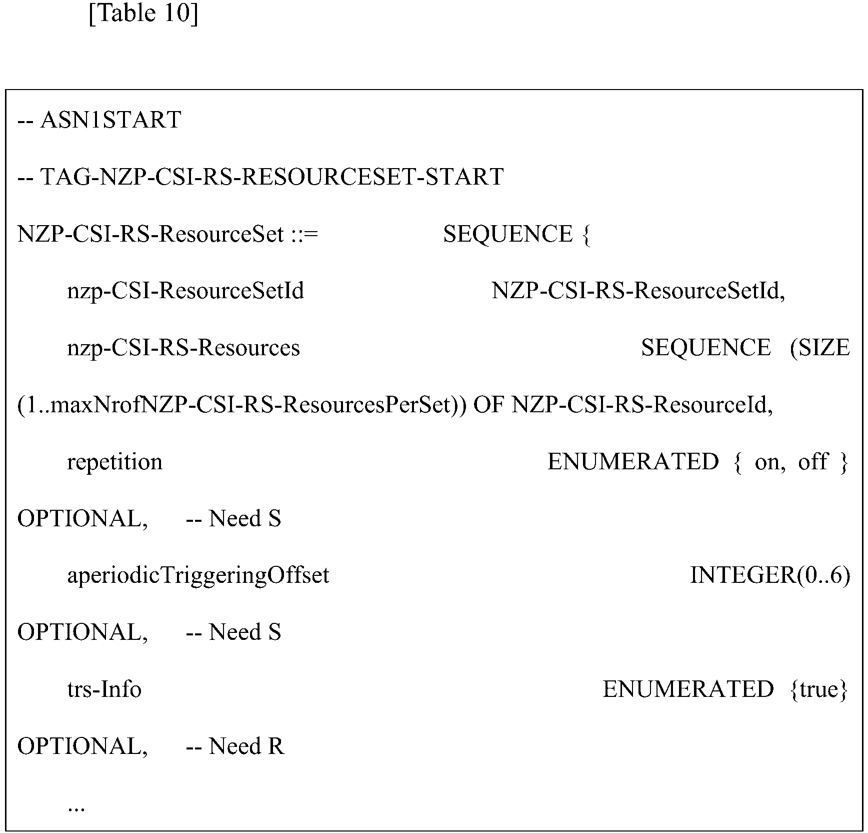

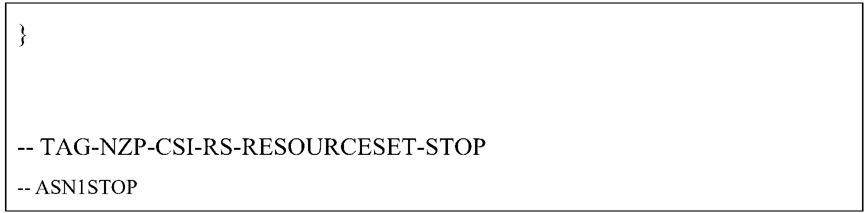

In [Table 10], the signaling information NZP-CSI-RS-ResourceSet includes information on each resource set. According to the signaling information, each resource set includes at least information on a resource set index (nzp-CSI-ResourceSetId) or a set of indices of the included CSI-RS (nzp-CSI-RS-Resources), and may include information on a spatial domain transmission filter of the included CSI-RS resource (repetition) or part of whether the included CSI-RS resource is used for tracking (trs-Info).

The CSI-RS may be the most representative reference signal included in the resource set. The base station and the UE may exchange signaling information as shown in [Table 11] to deliver the information on the CSI-RS resource.

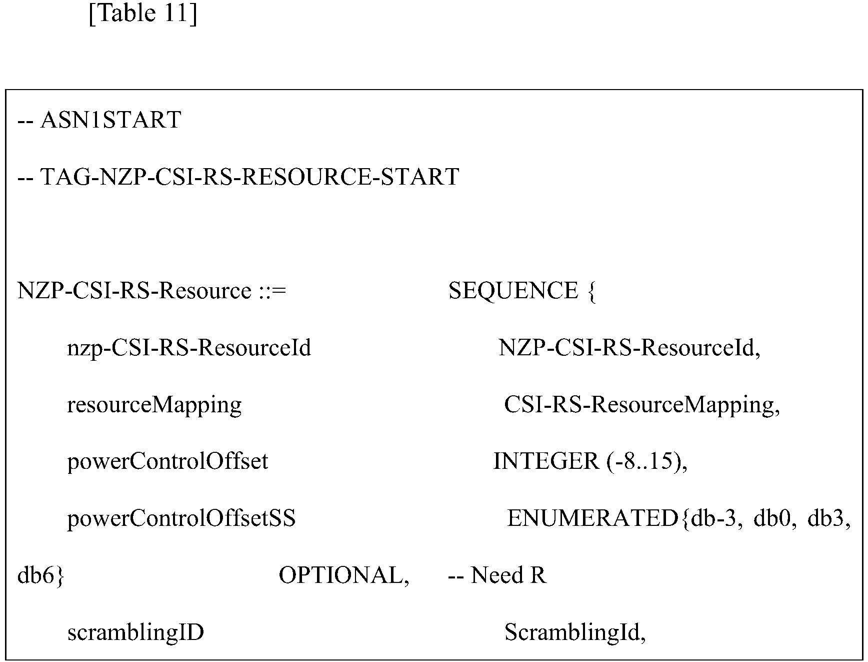

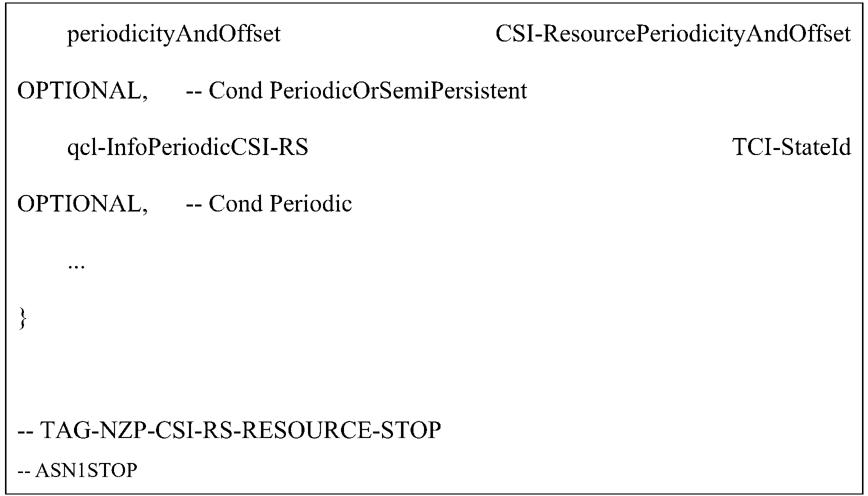

In [Table 11], the signaling information NZP-CSI-RS-Resource includes the information on each CSI-RS. The information included in the signaling information NZP-CSI-RS-Resource may have the following meanings.
- nzp-CSI-RS-ResourceId: CSI-RS resource index
- resourceMapping: Resource mapping information of CSI-RS resource
- powerControlOffset: Ratio between PDSCH EPRE (Energy Per RE) and CSI-RS EPRE
- powerControlOffsetSS: Ratio between SS/PBCH block EPRE and CSI-RS EPRE
- scramblingID: Scrambling index of CSI-RS sequence
- periodicityAndOffset: Transmission periodicity and slot offset of the CSI-RS resource
- qcl-InfoPeriodicCSI-RS: TCI-state information when the corresponding CSI-RS is a periodic CSI-RS

The resourceMapping included in the above signaling information NZP-CSI-RS-Resource represents resource mapping information of the CSI-RS resource and may include frequency resource element (RE) mapping, the number of ports, symbol mapping, a CDM type, frequency resource density, and frequency band mapping information. The number of ports, the frequency resource density, the CDM type, and the time-frequency domain RE mapping that may be configured through the resourceMapping may have a value defined in one of the rows of [Table 12] below.

**[Table 12]**

| Row | Ports *X* | Density *ρ* | cdm-Type | (*k̅,l̅*) | CDM group index *j* | *k'* | *l*' |
|---|---|---|---|---|---|---|---|
| 1 | 1 | 3 | No CDM | (*k*₀*,l*₀), (*k*₀ *+* 4*,l*₀), (*k*₀ *+* 8*,l*₀) | 0,0,0 | 0 | 0 |
| 2 | 1 | 1, 0.5 | No CDM | (*k*₀,*l*₀) | 0 | 0 | 0 |
| 3 | 2 | 1, 0.5 | FD-CDM 2 | (*k*₀*,l*₀) | 0 | 0 , 1 | 0 |
| 4 | 4 | 1 | FD-CDM 2 | (*k*₀*,l*₀),(*k*₀ *+* 2,*l*₀) | 0,1 | 0 , 1 | 0 |
| 5 | 4 | 1 | FD-CDM 2 | (*k*₀*,l*₀), (*k*₀,*l*₀ +1) | 0,1 | 0 , 1 | 0 |
| 6 | 8 | 1 | FD-CDM 2 | (*k*₀*,l*₀)*,* (*k*₁,*l*₀)*,* (*k*₂,*l*₀), (*k*₃*,l*₀) | 0,1,2,3 | 0,1 | 0 |
| 7 | 8 | 1 | FD-CDM 2 | (*k*₀*,l*₀),(*k*₁*,l*₀),(*k*₀*,l*₀ *+*1),(*k*₁,*l*₀ *+* 1) | 0,1,2,3 | 0, 1 | 0 |
| 8 | 8 | 1 | CDM 4 (FD2, TD2) | (*k*₀,*l*₀),(*k*₁*,l*₀) | 0,1 | 0,1 | 0,1 |
| 9 | 12 | 1 | FD-CDM 2 | (*k*₀*,l*₀),(*kₗ,l*₀),(*k*₂,*l*₀),(*k*₃,*l*₀)*,*(*k*₄*,l*₀),(*k*₅*,l*₀) | 0,1,2,3,4,5 | 0,1 | 0 |
| 10 | 12 | 1 | CDM 4 (FD2, TD2) | (*k*₀*,l*₀),(*k*₁*,l*₀)*,*(*k₂,l*₀) | 0,1,2 | 0,1 | 0,1 |
| 11 | 16 | 1, 0.5 | FD-CDM 2 | (*k*₀*,l*₀),*(kₗ,l*₀),(*k*₂*,l*₀),(*k*₃,*l*₀), (*k*₀*,l*₀ *+*1),(*k*₁*,l*₀ +1),(*k₂,l*₀ *+*1),(*k*₃*,l*₀ +1) | 0,1,2,3,4,5,6,7 | 0,1 | 0 |
| 12 | 16 | 1,0.5 | CD M4 (F D2, TD 2) | (*k*₀*,l*₀),(*k*₁*,l*₀),(*k*₂*,l*₀),(*k*₃*,l*₀) | 0,1, 2,3 | 0,1 | 0,1 |
| 1 3 | 2 4 | 1, 0. 5 | FD -C D M2 | (*k*₀*,l*₀),(*k*₁*,l*₀),(*k*₂*,l*₀)*,*(*k*₀*,l*₀ *+*1),(*k*₁*,l*₀ *+*1),(*k*₂*,l*₀ *+*1), (*k*₀*,l*₁),(*k*₁*,l*₁),(*k*₂*,l*₁)*,*(*k*₀*,l*₁ *+*1),(*k*₁,*l*₁ *+*1),(*k*₂,*l*₁ +1) | 0,1, 2,3, 4,5, 6,7, 8,9, 10,1 1 | 0,1 | 0 |
| 1 4 | 2 4 | 1, 0. 5 | CD M4 (F D2, TD 2) | (*k*_{0,}*l*₀),(*k*₁,*l*₀),(*k*₂*,l*₀),(*k*₀,*l*₁),(*k*₁,*l*₁),(*k*₂,*l*₁) | 0,1, 2,3, 4,5 | 0,1 | 0,1 |
| 1 5 | 2 4 | 1, 0. 5 | CD M8 (F D2, TD 4) | (*k*₀,*l*₀),(*k*₁*,l*₀)*,*(*k*₂,*l*₀) | 0,1, 2 | 0,1 | 0 , 1 , 2 , 3 |
| 1 6 | 3 2 | 1, 0. 5 | FD -C D M2 | (*k*₀,*l*₀),(*k*₁,l₀),(*k*₂,*l*₀),(*k*₃*,l*₀), (*k*₀*,l₀ +*1), (*k*₁,*l*₀ *+*1), (*k*₂,*l*₀ *+*1), (*k*₃,*l*₀ + 1), (*k*₀,*l*₁),(*k*₁,*l*₁),(*k*₂*,l*₁),(*k*₃,*l*₁), (*k*₀*,l*₁ *+*1), (*k*₁,*l*₁ *+*1), (*k*₂,*l*₁ +1) *+*1), (*k*₃,*l*₁ +1) | 0,1, 2,3, 4,5, 6,7, 8,9, 10,1 1, 12,1 3,1 4,15 | 0,1 | 0 |
| 1 7 | 3 2 | 1, 0. 5 | CD M4 (F D2, TD 2) | (*k*₀*,l*₀)*,*(*kₗ,l*₀)*,*(*k*₂,*l*₀)*,*(*k*₃,*l*₀),(*k*₀*,l*₁),(*kₗ,l*₁),(*k*₂,*l*₁),(*k*₃,*l*₁) | 0,1, 2,3, 4,5, 6,7 | 0,1 | 0,1 |
| 1 8 | 3 2 | 1, 0. 5 | CD M8 (F D2, TD 4) | (*k*₀,*l*₀),(*k*₁,*l*₀),(*k*₂,*l*₀),(*k*₃,*l*₀) | 0,1, 2,3 | 0,1 | 0 , 1 , 2 , 3 |

[Table 12] shows the frequency resource density, the CDM type, frequency domain and time domain starting positions *k̅*, *l̅*, frequency domain RE count k' and time domain RE count l' of a CSI-RS component RE pattern that can be configured according to the number X of CSI-RS ports. The above-described CSI-RS component RE pattern may be a basic unit constituting the CSI-RS resource. Through Y=1+max(k') REs on the frequency domain and Z=1+max(1') REs on the time domain, the CSI-RS component RE pattern may be composed of YZ REs. When the number of CSI-RS ports is 1 port, the CSI-RS RE position may be designated without subcarrier restrictions within a physical resource block (PRB), and the CSI-RS RE position may be designated by a 12-bit bitmap. When the number of CSI-RS ports is {2, 4, 8, 12, 16, 24, 32} ports and Y=2, the CSI-RS RE positions may be designated for every two subcarriers within the PRB, and the CSI-RS RE positions may be designated by a 6-bit bitmap. When the number of CSI-RS ports is 4 ports and Y=4, the CSI-RS RE positions may be designated for every four subcarriers within the PRB, and the CSI-RS RE positions may be designated by a 3-bit bitmap. Similarly, the time domain RE positions may be designated by a total of 14-bit bitmap.

### [CSI report configuration]

According to an embodiment of the present disclosure, the report setting may have an association relationship with the resource setting by referring to at least one ID of the resource setting, and the resource setting(s) having the association relationship with the report setting provide configuration information including information on a reference signal for channel information measurement. When the resource setting(s) that have the association relationship with the report setting are used for channel information measurement, the measured channel information may be used for the channel information report according to the reporting method configured in the report setting that has the association relationship.

According to an embodiment of the present disclosure, the report setting may include configuration information related to the CSI report method. For example, the base station and the UE may exchange signaling information as shown in [Table 13] to deliver information on the report setting.

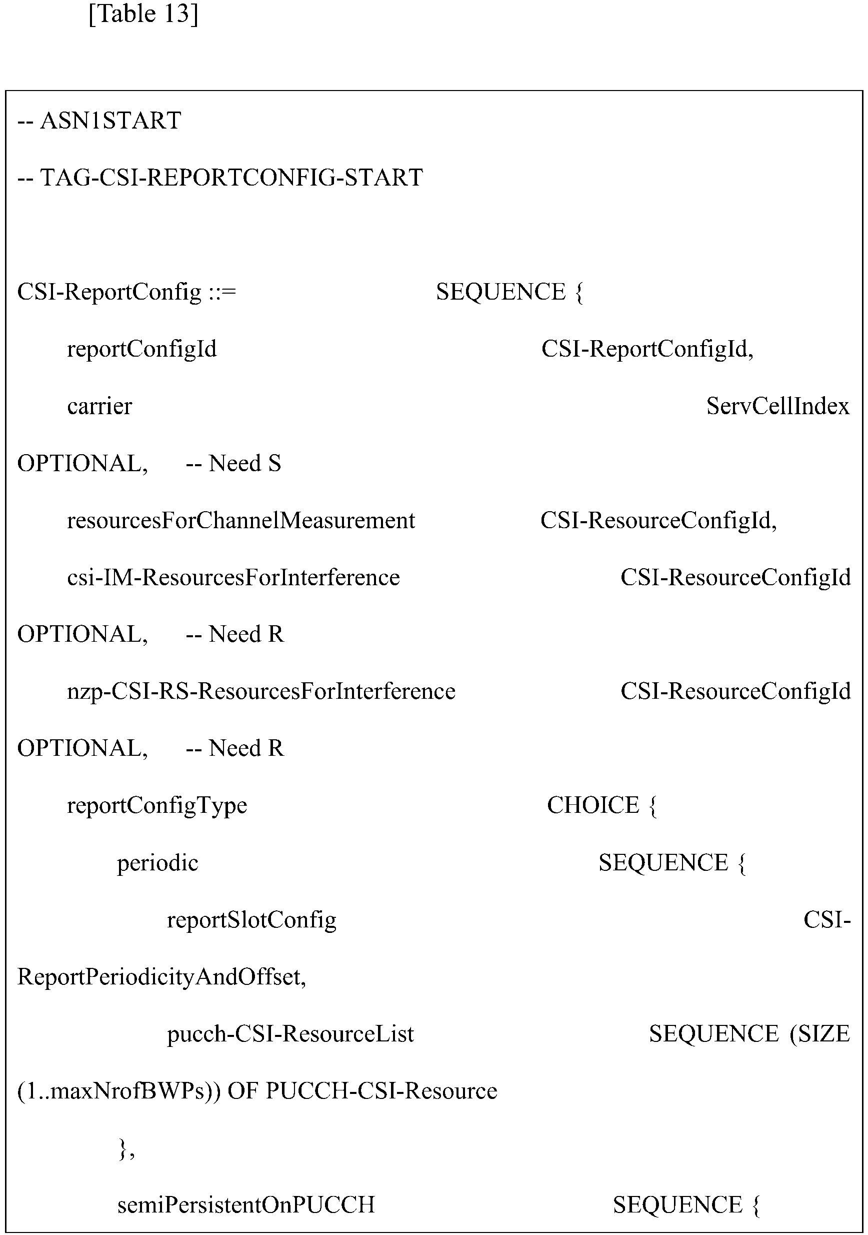

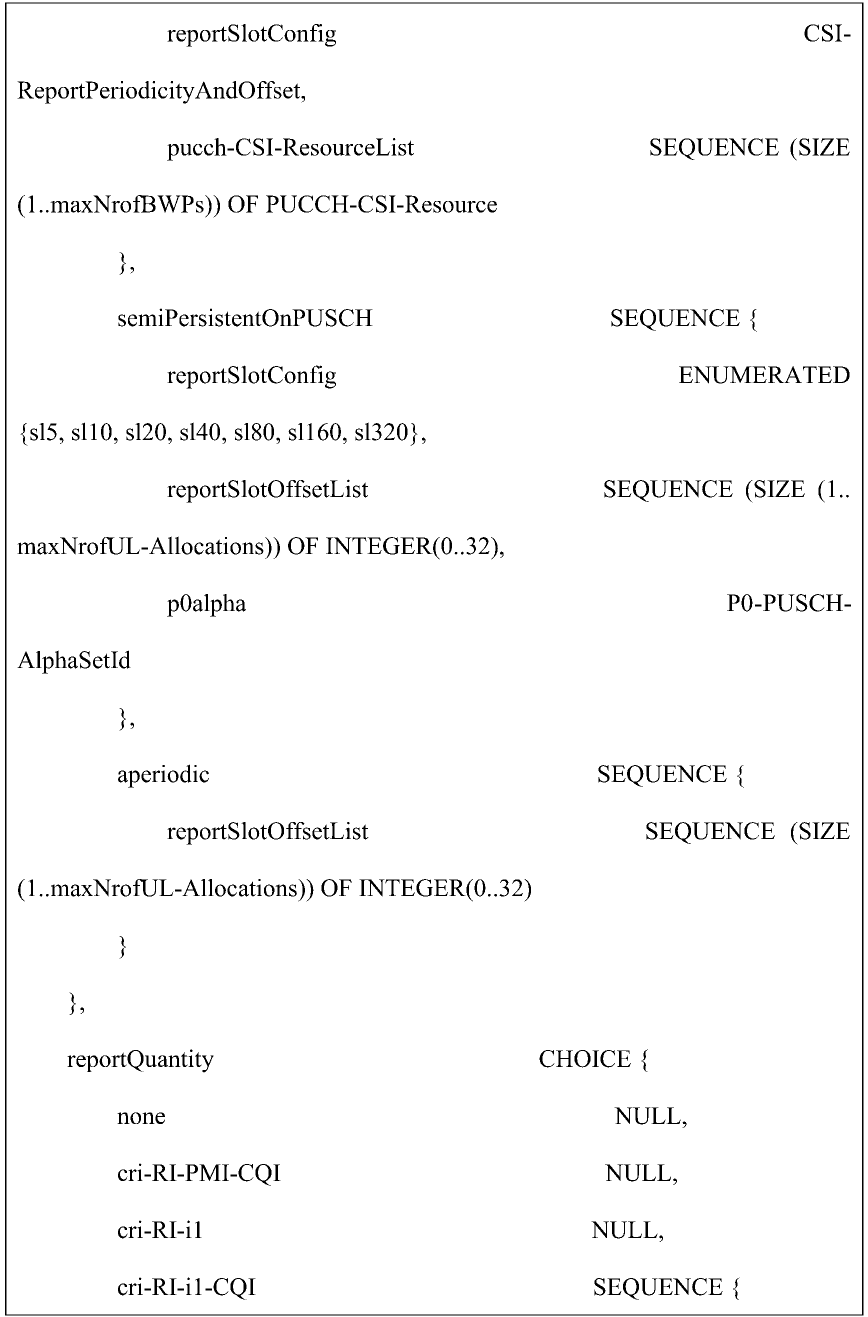

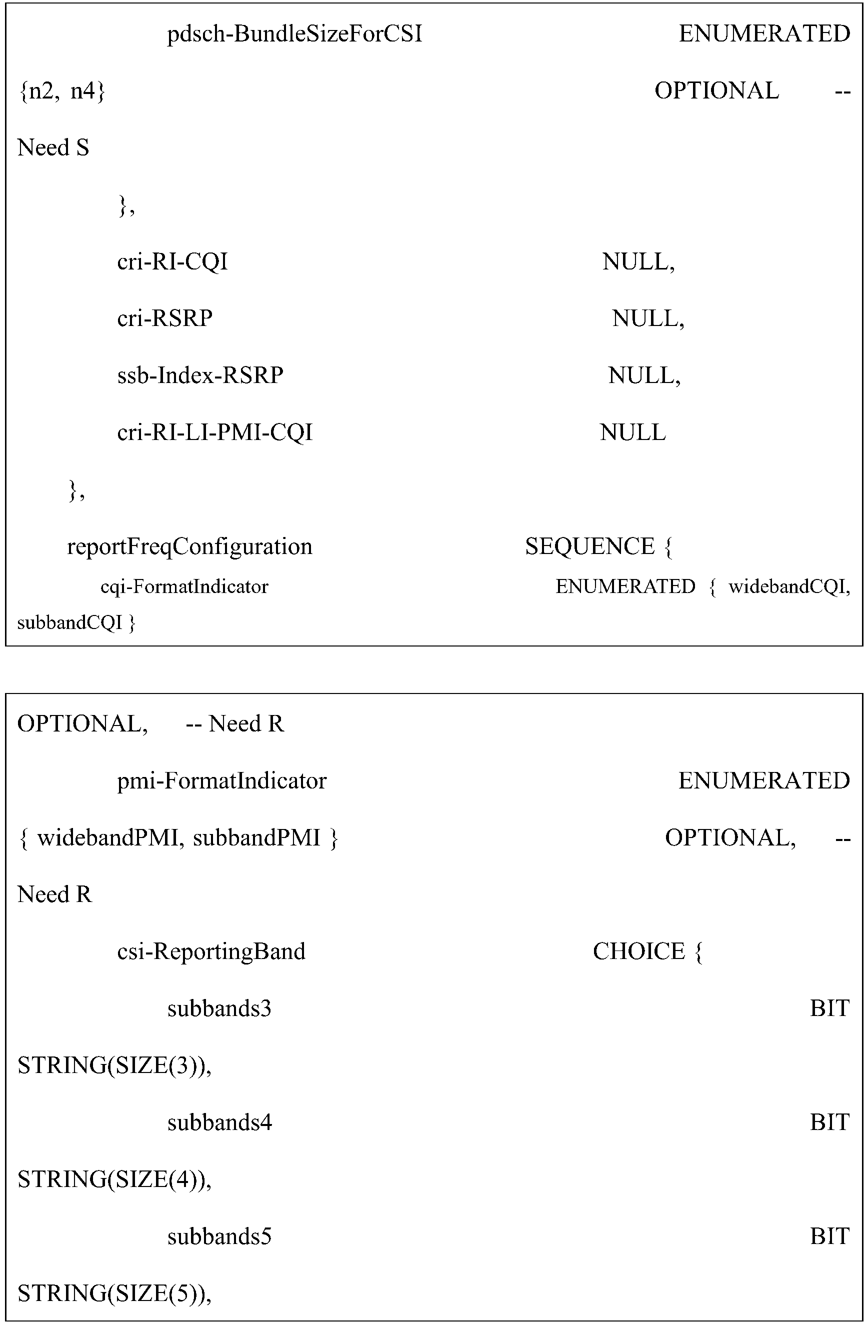

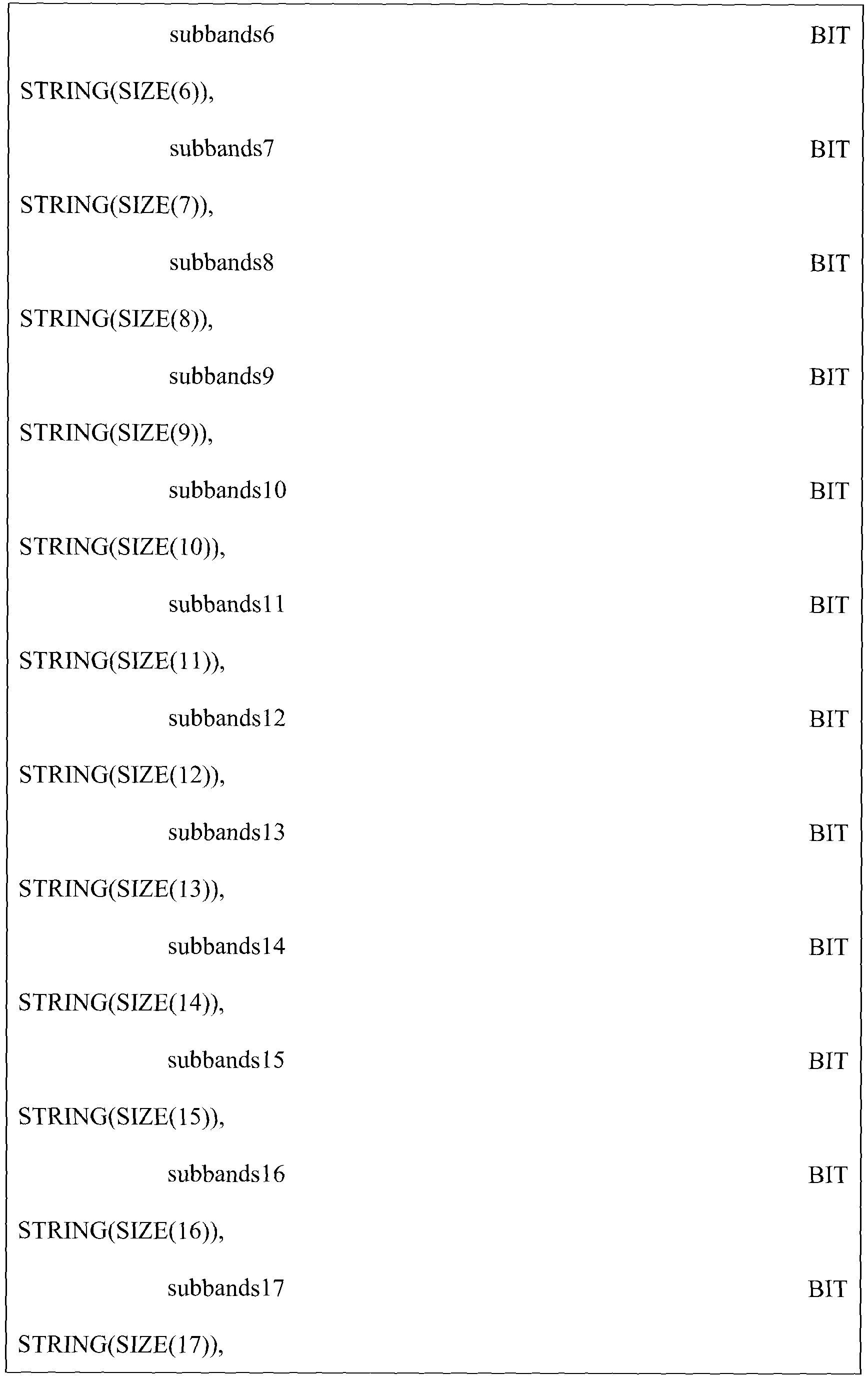

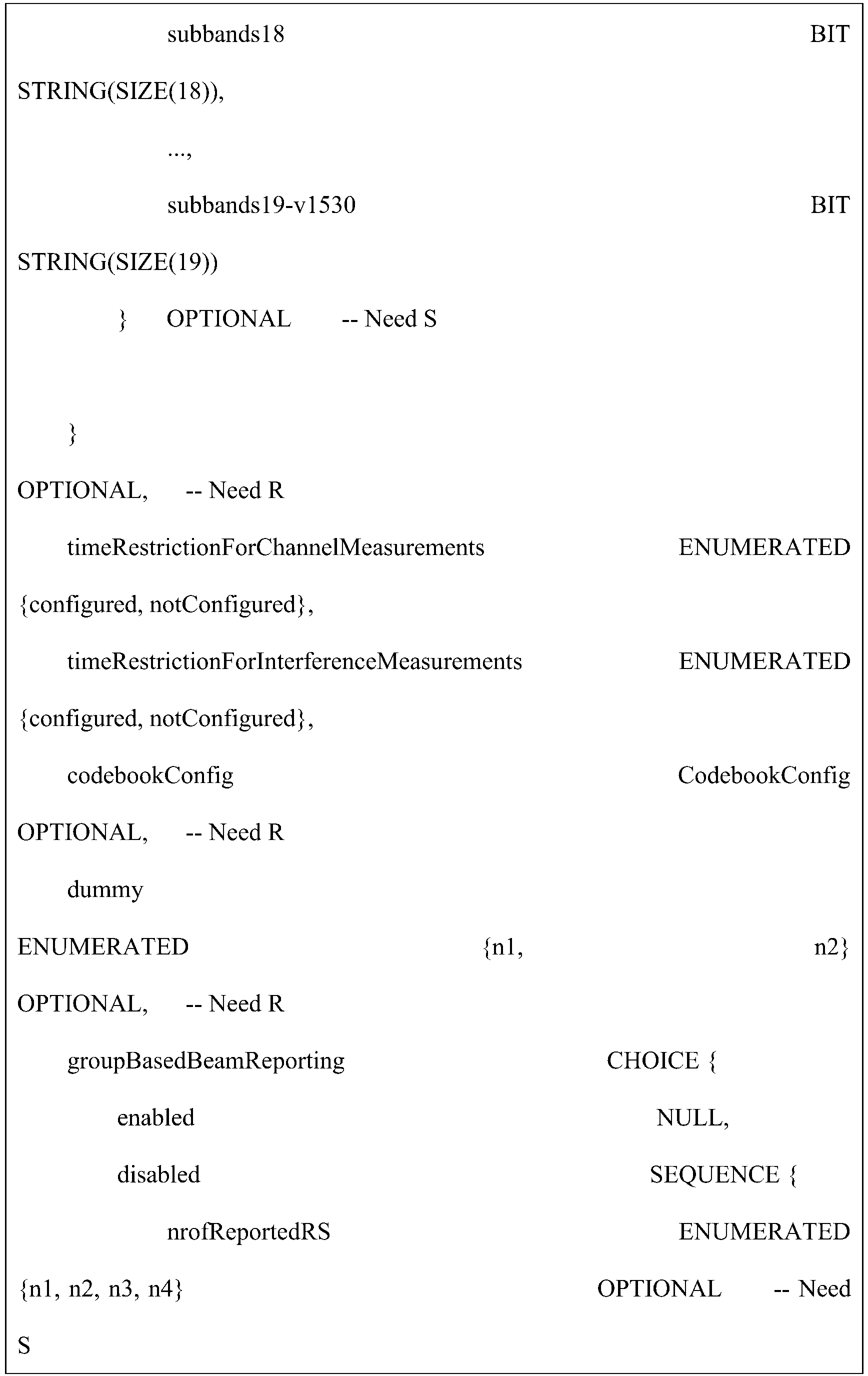

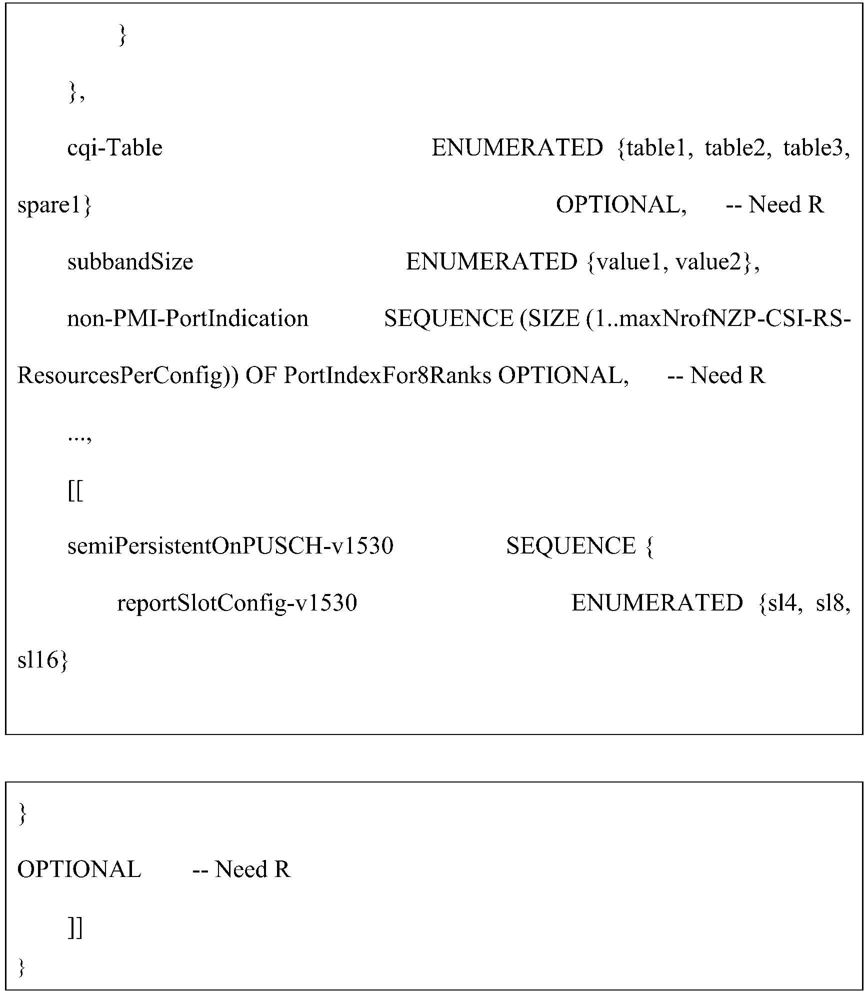

In [Table 13], the signaling information CSI-ReportConfig includes information on each report setting. The information included in the signaling information CSI-ReportConfig may have the following meanings.
- reportConfigId: Report setting index
- carrier: Serving cell index
- resourcesForChannelMeasurement: Resource setting index for channel measurement having an association relationship with the report setting
- csi-IM-ResourcesForInterference: Resource setting index having CSI-IM resource for interference measurement having an association relationship with the report setting
- nzp-CSI-RS-ResourcesForInterference: Resource setting index having a CSI-RS resource for interference measurement having an association relationship with the report setting
- reportConfigType: It indicates the time-domain transmission configuration and transmission channel of the channel reporting, and may have aperiodic transmission, semi-persistent physical uplink control channel (PUCCH) transmission, semi-persistent PUSCH transmission, or periodic transmission configurations
- reportQuantity: It indicates the type of channel information to be reported; may have a case (none) where no channel reporting is transmitted, or the type ('cri-RI-PMI-CQI', 'cri-RI-i1', 'cri-RI-i1-CQI', 'cri-RI-CQI', 'cri-RSRP', 'ssb-Index-RSRP', 'cri-RI-LI-PMI-CQI') of channel information in a case where the channel reporting is transmitted. Here, the elements included in the type of channel information refer to channel quality indicator (CQI), precoding matric indicator (PMI), CSI-RS resource indicator (CRI), SS/PBCH block resource indicator (SSBRI), layer indicator (LI), rank indicator (RI), and/or L1-reference signal received power (L1-RSRP).
- reportFreqConfiguration: It indicates whether the channel information to be reported includes only information on the entire wideband or information on each subband, and, when information on each subband is included, it may include configuration information for the subband including the channel information.
- timeRestrictionForChannelMeasurements: Whether there are time-domain constraints on the reference signal for channel measurement among the reference signals referenced by the channel information to be reported.
- timeRestrictionForInterferenceMeasurements: Whether there are time-domain constraints on the reference signal for interference measurement among the reference signals referenced by the channel information to be reported.
- codebookConfig: Codebook information referenced by the channel information to be reported.
- groupBasedBeamReporting: Whether beam grouping is used for channel reporting.
- cqi-Table: CQI table index referenced by the channel information to be reported.
- subbandSize: Index indicating the subband size of the channel information.
- non-PMI-PortIndication: Port mapping information referenced when reporting non-PMI channel information.

When the base station indicates channel information report through higher layer signaling or L1 signaling, the UE may perform the channel information report by referring to the above-described configuration information included in the indicated report setting.

The base station may instruct a UE to report channel state information (CSI) via higher layer signaling including radio resource control (RRC) signaling or medium access control (MAC) control element (CE) signaling, or L1 signaling (e.g., common DCI, group-common DCI, UE-specific DCI).

For example, a base station may instruct a UE to report aperiodic channel information (CSI report) via higher layer signaling or DCI using DCI format 0_1. The base station sets parameters for the aperiodic CSI report of the UE, or a plurality of CSI report trigger states including parameters for the CSI report via the higher layer signaling. The parameters for the CSI report or the CSI report trigger state may include a set of slot intervals or possible slot intervals between a PDCCH including DCI and a PUSCH including a CSI report, a reference signal ID for channel state measurement, and the type of channel information included, etc. When the base station indicates some of the plurality of CSI report trigger states to a UE via the DCI, the UE reports the channel information according to the CSI report configuration of the report settings configured in the indicated CSI report trigger state. The channel information report may be performed via a PUSCH scheduled in DCI format 0_1. The time domain resource assignment for the PUSCH including the CSI report of the UE may be achieved through the slot interval with the PDCCH indicated by the DCI, the indication of the starting symbol and symbol length within the slot for time domain resource assignment of the PUSCH, etc. For example, the slot position at which the PUSCH including the CSI report of the UE is transmitted may be indicated by the slot interval with the PDCCH indicated by the DCI, and a starting symbol and a symbol length within the slot may be indicated via a time domain resource assignment field of the above-described DCI.

For example, the base station may indicate to the UE a semi-persistent CSI report transmitted on the PUSCH via DCI using DCI format 0_1. The base station may activate or deactivate the semi-persistent CSI report transmitted on the PUSCH via a DCI scrambled with SP-CSI-RNTI. When the semi-persistent CSI report is activated, the UE may periodically report channel information according to the configured slot interval. When the semi-persistent CSI report is deactivated, the UE may stop the periodic channel information report that was activated. The base station sets parameters for the semi-persistent CSI report of the UE, or the plurality of CSI report trigger states including parameters for the semi-persistent CSI report via the higher layer signaling. The parameters for the CSI report or the CSI report trigger state may include a set including slot intervals or possible slot intervals between the PDCCH including the DCI indicating the CSI report and the PUSCH including the CSI report, a slot interval between a slot where the higher layer signaling indicating the CSI report is activated and the PUSCH including the CSI report, a slot interval periodicity of the CSI report, the type of channel information included, etc. When the base station activates some of the plurality of CSI report trigger states or some of the plurality of report settings to a UE via the higher layer signaling or DCI, the UE may report the channel information according to the report setting included in the indicated CSI report trigger state or the CSI report configuration configured in the activated report setting. The channel information report may be performed on the PUSCH that is semi-continuously scheduled in the DCI format 0_1 scrambled with the SP-CSI-RNTI. The time-domain resource assignment of the PUSCH including the CSI report of the UE may be achieved through the slot interval periodicity of the CSI report, the slot interval with the slot where the higher layer signaling is activated, the slot interval with the PDCCH indicated by the DCI, the indication of the starting symbol and symbol length within the slot for the time domain resource assignment of the PUSCH, etc. For example, the slot position at which the PUSCH including the CSI report of the UE is transmitted may be indicated by the slot interval with the PDCCH indicated by the DCI, and the starting symbol and symbol length within the slot may be indicated via the time domain resource assignment field of the above-described DCI format 0_1.

For example, the base station may indicate to the UE a semi-persistent CSI report transmitted on the PUCCH via higher-layer signaling such as a MAC CE. Through the MAC-CE signaling, the base station may activate or deactivate the semi-persistent CSI report transmitted on the PUCCH. When the semi-persistent CSI report is activated, the UE may periodically report channel information according to the configured slot interval. When the semi-persistent CSI report is deactivated, the UE may stop the periodic channel information report that was activated. The base station sets the parameters for the semi-persistent CSI report of the UE via the higher layer signaling. The parameters for the CSI report may include the PUCCH resource to which the CSI report is transmitted, the slot interval periodicity of the CSI report, the type of channel information included, etc. The UE may transmit the CSI report via the PUCCH. Alternatively, when the PUCCH for the CSI report overlaps with the PUSCH, the CSI report may be transmitted on the PUSCH. The position of the PUCCH transmission slot including the CSI report is indicated by the slot interval periodicity of the CSI report configured via the higher layer signaling, and the slot interval between the slot where the higher layer signaling is activated and the PUCCH including the CSI report, and the starting symbol and symbol length within the slot can be indicated by the starting symbol and symbol length allocated to the PUCCH resource configured via the higher layer signaling.

For example, the base station may indicate a periodic CSI report to the UE through higher-layer signaling. The base station may activate or deactivate the periodic CSI report via the higher layer signaling including RRC signaling. When the periodic CSI report is activated, the UE may report the channel information periodically according to the configured slot interval. When the periodic CSI report is deactivated, the UE may stop the periodic channel information report that was activated. The base station configures the report setting including the parameters for the periodic CSI report of the UE via the higher layer signaling. The parameters for the CSI report may include a PUCCH resource setting for the CSI report, a slot interval between the slot where the higher layer signaling indicating the CSI report is activated and the PUCCH including the CSI report, a slot interval periodicity of the CSI report, a reference signal ID for the channel state measurement, and the type of channel information included, etc. The UE may transmit the CSI report via the PUCCH. Alternatively, when the PUCCH for the CSI report overlaps with the PUSCH, the CSI report may be transmitted on the PUSCH. The slot position where the PUCCH including the CSI report is transmitted is indicated by the slot interval periodicity of the CSI report configured via the higher layer signaling, the slot interval between the slot where the higher layer signaling is activated and the PUCCH including the CSI report, and the starting symbol and symbol length within the slot can be indicated by the starting symbol and symbol length allocated to the PUCCH resource configured via the higher layer signaling.

Regarding the above-described CSI report setting (CSI-ReportConfig), each report setting CSI-ReportConfig may be associated with a CSI resource setting associated with the corresponding report setting, and one downlink (DL) bandwidth part identified by a higher layer parameter bandwidth part identifier (bwp-id) given by CSI-ResourceConfig. For the time domain reporting operation for each report setting CSI-ReportConfig, 'aperiodic', 'semi-persistent', and 'periodic' schemes are supported, which may be configured for the UE by the base station using the reportConfigType parameter set from the higher layer. The semi-persistent CSI report method supports 'PUCCH-based semi-persistent (semi-PersistentOnPUCCH)' and 'PUSCH-based semi-persistent (semi-PersistentOnPUSCH)'. For the periodic or semi-persistent CSI report method, the UE may be configured with the PUCCH or PUSCH resource for transmitting the CSI from the base station via the higher layer signaling. The periodicity and slot offset of the PUCCH or PUSCH resource for transmitting the CSI may be given as numerology of the uplink (UL) bandwidth part configured to transmit the CSI report. For an aperiodic CSI report method, the UE may be scheduled, by the base station, with the PUSCH resource to transmit the CSI via the L1 signaling (the above-described DCI format 0_1).

For the above-described CSI resource setting (CSI-ResourceConfig), each CSI resource setting CSI-ReportConfig may include S (≥1) sets of CSI resources (given by the higher layer parameter csi-RS-ResourceSetList). The list of CSI resource sets may be composed of a non-zero power (NZP) CSI-RS resource set and an SS/PBCH block set, or may be composed of a CSI-interference measurement (CSI-IM) resource set. Each CSI resource setting may be located in a downlink (DL) bandwidth part identified by the higher layer parameter bwp-id, and the CSI resource setting may be associated with a CSI report setting in the same downlink bandwidth part. The time domain operation of the CSI-RS resources within the CSI resource setting may be configured as one of 'aperiodic', 'periodic', or 'semi-persistent' by the higher layer parameter resource Type. For the periodic or semi-persistent CSI resource setting, the number of CSI-RS resource sets may be limited to S=1, and the configured period and slot offset may be given by the numerology of the downlink bandwidth part identified by the bwp-id. The UE may receive one or more CSI resource settings for channel or interference measurement via the higher layer signaling from the base station, and may include, for example, the following CSI resources.
- CSI-IM resource for interference measurement
- NZP CSI-RS resource for interference measurement
- NZP CSI-RS resource for channel measurement

For the CSI-RS resource sets associated with the resource settings where the higher layer parameter resourceType is configured to 'aperiodic', 'periodic', or 'semi-persistent', the trigger state for the CSI report setting where reportType is configured as 'aperiodic' and the resource setting for channel or interference measurement for one or more component cells (CCs) may be configured as the higher layer parameter CSI-AperiodicTriggerStateList.

The aperiodic CSI report of the UE may be performed using the PUSCH, the periodic CSI report may be performed using the PUCCH, and a semi-persistent CSI report may be performed using the PUSCH when triggered or activated via the DCI, and using the PUCCH after being activated by the MAC control element (MAC CE). As described above, the CSI resource setting may also be configured as aperiodic, periodic, or semi-persistent. Combinations between the CSI report settings and the CSI resource configurations may be supported based on [Table 14] below.

**[Table 14]**

| Table 5.2.1.4-1: Triggering/Activation of CSI report for the possible CSI-RS Configurations. | | | |
|---|---|---|---|
| CSI-RS Configuration | Periodic CSI reporting | Semi-Persistent CSI reporting | Aperiodic CSI reporting |
| Periodic CSI-RS | No dynamic triggering/activat ion | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The aperiodic CSI report may be triggered by a "CSI request" field of the above-described DCI format 0_1, which corresponds to the scheduling DCI for the PUSCH. The UE may monitor the PDCCH, acquire the DCI format 0_1, and acquire scheduling information and a CSI request indicator for the PUSCH. The CSI request indicator may be configured as NTS (=0, 1, 2, 3, 4, 5, or 6) bits and may be determined by the higher layer signaling (reportTriggerSize). One of one or more aperiodic CSI report trigger states, which may be configured via the higher layer signaling (CSI-AperiodicTriggerStateList), may be triggered by the CSI request indicator.
- If all bits of the CSI request field are 0, this may refer to that no CSI report is requested.
- If the number M of CSI trigger states within the configured CSI-AperiodicTriggerStateList is greater than 2NTs-1, then M CSI trigger states may be mapped to 2NTs-1 according to the predefined mapping relationship, and one of the trigger states of 2NTs-1 may be indicated as the CSI request field.
- If the number M of CSI trigger states within the configured CSI-AperiodicTriggerStateList is less than or equal to 2NTs-1, then one of the M CSI trigger states may be indicated as the CSI request field.

[Table 15] below shows an example of the relationship between the CSI request indicator and a CSI trigger state that may be indicated by the corresponding indicator.

**[Table 15]**

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

For a CSI resource within the CSI trigger state triggered by the CSI request field, the UE may perform a measurement and generate a CSI (including at least one of the above-described CQI, PMI, CRI, SSBRI, LI, RI, or L1-RSRP, etc.) from the measurement. The UE may transmit the acquired CSI using the PUSCH scheduled by the corresponding DCI format 0_1. When 1 bit corresponding to an uplink data indicator (UL-SCH indicator) in the DCI format 0_1 indicates "1", the uplink data (UL-SCH) and the acquired CSI may be multiplexed and transmitted to the PUSCH resource scheduled by the DCI format 0_1. When the 1 bit corresponding to the uplink data indicator (UL-SCH indicator) in the DCI format 0_1 indicates "0", the only CSI may be mapped and transmitted without the uplink data (UL-SCH) to the PUSCH resource scheduled by the DCI format 0_1.

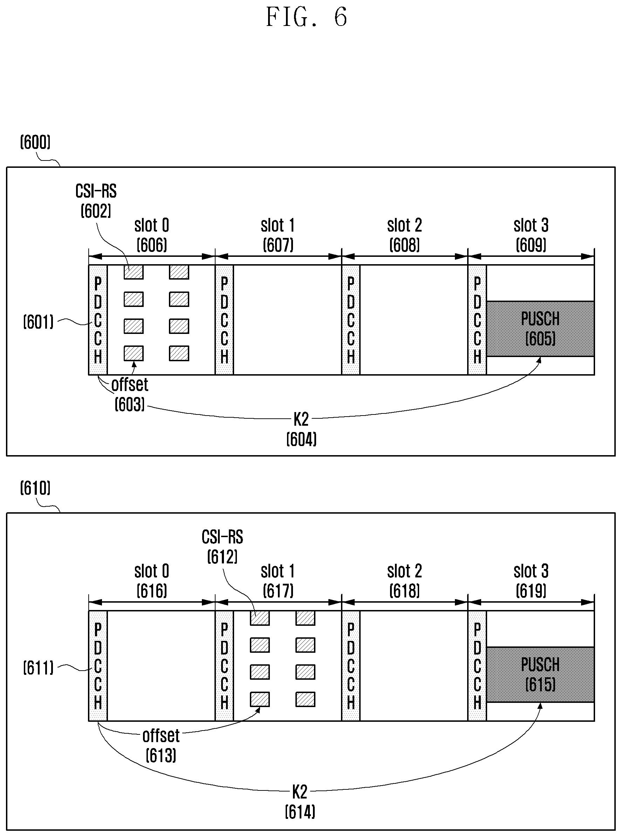

FIG. 6 is a diagram illustrating an example of the aperiodic CSI report method.

In an example 600 of FIG. 6, the UE may acquire the DCI format 0_1 by monitoring a PDCCH 601, and acquire scheduling information and CSI request information for a PUSCH 605 from the DCI format 0_1. The UE may acquire resource information for a CSI-RS 602 to be measured from the received CSI request indicator. The UE may determine a time at which to perform a measurement on a CSI-RS resource 602 to be transmitted based on a reception time point of DCI format 0_1 and a parameter (aperiodicTriggeringOffset described above) for an offset within a CSI resource set configuration (e.g., NZP-CSI-RS-ResourceSet). Describing in more detail, the UE may be configured with an offset value X of the parameter aperiodicTriggeringOffset within the NZP-CSI-RS resource set configuration as the higher layer signaling from the base station, and the configured offset value X may represent an offset between a slot in which the DCI triggering the aperiodic CSI report is received and a slot in which the CSI-RS resource is transmitted. For example, the aperiodicTriggeringOffset parameter value and the offset value X may have a mapping relationship as described in [Table 16] below

**[Table 16]**

| aperiodic TriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

In one example 600 of FIG. 6, an example is shown in which the above-described offset value is configured to X=0. In this case, the UE may receive the CSI-RS 602 in a slot (corresponding to slot 0 606 in FIG. 6) that receives the DCI format 0_1 triggering an aperiodic CSI report, and may report the CSI information measured by the received CSI-RS to the base station via the PUSCH 605. The UE may acquire the scheduling information (pieces of information corresponding to each field of the above-described DCI format 0_1) for the PUSCH 605 for CSI report from the DCI format 0_1. For example, the UE may acquire information on a slot to transmit the PUSCH 605 from the above-described time domain resource assignment information for the PUSCH 605 in the DCI format 0_1. In one example 600 of FIG. 6, the UE acquires a K2 value corresponding to the slot offset value for a PDCCH-to-PUSCH as 3, and thus, the PUSCH 605 may be transmitted from slot 3 609, which is 3 slots away from the slot 0 606, at the time point when the PDCCH 601 is received.

In an example 610 of FIG. 6, the UE may acquire the DCI format 0_1 by monitoring a PDCCH 611, and acquire the scheduling information and the CSI request information for a PUSCH 615 from the DCI format 0_1. The UE may acquire the resource information for the CSI-RS 612 to be measured from the received CSI request indicator. One example (610) of FIG. 6 shows an example in which the offset value for the above-described CSI-RS is configured to X=1. In this case, the UE may receive the CSI-RS 612 in the slot (corresponding to slot 0 616 in FIG. 6) that receives the DCI format 0_1 triggering the aperiodic CSI report, and may report the CSI information measured by the received CSI-RS to the base station via the PUSCH 615.

The aperiodic CSI report may include at least one or both of CSI part 1 or CSI part 2, and when the aperiodic CSI report is transmitted via the PUSCH, it may be multiplexed with a transport block. For multiplexing, a CRC is inserted into input bits of the aperiodic CSI and is subjected to encoding and rate matching, and then may be transmitted by being mapped to resource elements in the PUSCH in a specific pattern. The CRC insertion may be omitted depending on the coding method or the length of the input bits. The number of modulation symbols calculated for the rate matching when multiplexing the CSI part 1 or CSI part 2 included in the aperiodic CSI report may be calculated as shown in [Table 17] below.

**[Table 17]**

| |
|---|
| For CSI part 1 transmission on PUSCH not using repetition type B with UL-SCH, the number of coded modulation symbols per layer for CSI part 1 transmission, denoted as ${Q}_{CSI - part 1}^{′}$, is determined as follows: |
| ${Q}_{CSI - 1}^{′} = min \left\{\left⌈\frac{\left({O}_{CSI - 1}+{L}_{CSI - 1}\right) ⋅ {β}_{offset}^{PUSCH} ⋅ {\sum }_{i = 0}^{{N}_{symb , all}^{PUSCH} - 1} {M}_{sc}^{UCI} \left(i\right)}{{\sum }_{r = 0}^{{C}_{UL - SCH - 1}} {K}_{r}}\right⌉, \left⌈α⋅{\sum }_{i = 0}^{{N}_{symb , all}^{PUSCH} - 1} {M}_{sc}^{UCI} \left(l\right)\right⌉\right.$ |
| ... |
| For CSI part 1 transmission on an actual repetition of a PUSCH with repetition Type B with UL-SCH, the number of coded modulation symbols per layer for CSI part 1 transmission, denoted as ${Q}_{CSI - part 1}^{′}$, is determined as follows: |
| ${Q}_{CSI - 1}^{′} = min \left\{\begin{matrix}\left⌈\frac{\left({O}_{CSI - 1}+{L}_{CSI - 1}\right) ⋅ {β}_{offset}^{PUSCH} ⋅ {\sum }_{i = 0}^{{N}_{symb , nominal}^{PUSCH} - 1} {M}_{sc , nominal}^{UCI} \left(l\right)}{{\sum }_{r = 0}^{{C}_{UL - SCH} - 1} {K}_{r}}\right⌉ , α {⋅}^{{N}_{sym}^{PL}} \\ - {Q}_{ACK / CG - UCI}^{′} , {\sum }_{l = 0}^{{N}_{symb , actual}^{PUSCH} - 1} {M}_{sc , actual}^{UCI} \left(l\right) - {Q}_{ACK / CG - UCI}^{′}\end{matrix}\right\}$ |
| ... |
| For CSI part 1 transmission on PUSCH without UL-SCH, the number of coded modulation symbols per layer for CSI part 1 transmission, denoted as ${Q}_{CSI - part 1}^{′}$, is determined as follows: |
| if there is CSI part 2 to be transmitted on the PUSCH, |
| ${Q}_{CSI - 1}^{′} = min \left\{\left⌈\frac{\left({O}_{CSI - 1}+{L}_{CSI - 1}\right) ⋅ {β}_{offset}^{PUSCH}}{R ⋅ {Q}_{m}}\right⌉, {\sum }_{l = 0}^{{N}_{symb , all}^{PUSCH} - 1} {M}_{sc}^{UCI} \left(l\right) - {Q}_{ACK}^{′}\right\}$ |
| else |
| ${Q}_{CSI - 1}^{′} = {\sum }_{l = 0}^{{N}_{symb , all}^{PUSCH} - 1} {M}_{sc}^{UCI} \left(l\right) - {Q}_{ACK}^{′}$ |
| end if |
| ... |
| For CSI part 2 transmission on PUSCH not using repetition type B with UL-SCH, the number of coded modulation symbols per layer for CSI part 2 transmission, denoted as ${Q}_{CSI - part 2}^{′}$, is determined as follows: |
| ${Q}_{CSI - 2}^{′} = min \left\{\begin{matrix}\left⌈\frac{\left({O}_{CSI - 2}+{L}_{CSI - 2}\right) - {β}_{offset}^{PUSCH} ⋅ {\sum }_{i = 0}^{{N}_{symb , all}^{PUSCH} - 1} {M}_{sc}^{UCI} \left(i\right)}{{\sum }_{r = 0}^{{C}_{UL - SCH - 1}} {K}_{r}}\right⌉ , \left⌈α⋅{\sum }_{i = 0}^{{N}_{symb , all}^{PUSCH} - 1} {M}_{sc}^{UCI} \left(l\right)\right⌉ - {Q}_{ACK / CG - UCI}^{′} - \\ {Q}_{CSI - 1}^{′}\end{matrix}\right\}$ |
| For CSI part 2 transmission on an actual repetition of a PUSCH with repetition Type B with UL-SCH, the number of coded modulation symbols per layer for CSI part 2 transmission, denoted as ${Q}_{CSI - part 2}^{′}$, is determined as follows: |
| ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{i = 0}^{{N}_{symb , nominal}^{PUSCH} - 1} {M}_{sc , nominal}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , nominal}^{PUSCH} - 1} {M}_{sc , nominal}^{UCI} \left(l\right)\right⌉ \\ - {Q}_{ACK / CG - UCI}^{′} - {Q}_{CSI - 1}^{′} , {\sum }_{l = 0}^{{N}_{symb , actual}^{PUSCH} - 1} {M}_{sc , actual}^{UCI} \left(l\right) - {Q}_{ACK / CG - UCI}^{′} - {Q}_{CSI - 1}^{′}\end{matrix}\right\}$ |
| ... |
| For CSI part 2 transmission on PUSCH without UL-SCH, the number of coded modulation symbols per layer for CSI part 2 transmission, denoted as ${Q}_{CSI - part 2}^{′}$, is determined as follows: |
| ${Q}_{CSI - 2}^{′} = {\sum }_{l = 0}^{{N}_{symb , all}^{PUSCH} - 1} {M}_{sc}^{UCI} \left(l\right) - {Q}_{ACK}^{′} - {Q}_{CSI - 1}^{′}$ |

In particular, for PUSCH repeat transmission schemes A and B, the UE may transmit the aperiodic CSI report by multiplexing the aperiodic CSI report only during a first PUSCH repeat transmission among the PUSCH repeat transmissions. This is because the aperiodic CSI report information to be multiplexed is encoded using a polar coding scheme, and for the aperiodic CSI report information to be multiplexed across multiple PUSCH repetitions, each PUSCH repetition should have the same frequency and time resource allocation. In particular, for PUSCH repetition type B, since each actual repetition may have a different OFDM symbol length, the aperiodic CSI report may be multiplexed and transmitted only in the first PUSCH repetition.

In addition, for PUSCH repeat transmission scheme B, when the UE receives the DCI that schedules the aperiodic CSI report without scheduling for the transport block or activates the semi-persistent CSI report, a value of a nominal repetition may be assumed to be 1 even if the number of PUSCH repeat transmissions configured by the higher layer signaling is greater than 1. In addition, when the UE schedules or activates aperiodic or semi-persistent CSI report without scheduling for the transport block based on the PUSCH repeat transmission scheme B, the UE may expect a first nominal repetition to be the same as a first actual repetition. For the PUSCH transmitted including the semi-persistent CSI based on the PUSCH repeat transmission scheme B without scheduling via the DCI after the semi-persistent CSI report is activated via the DCI, if the first nominal repetition differs from the first actual repetition, transmission of the first nominal repetition may be ignored.

### [CSI computation time]

When the base station instructs the UE to perform the aperiodic CSI report or the semi-persistent CSI report via the DCI, the UE may determine whether the UE may perform a valid channel report through the instructed CSI report by considering a channel computation time required for the CSI report. For the aperiodic CSI report or the semi-persistent CSI report indicated by the DCI, the UE may execute the valid CSI report starting from an uplink symbol following a Z symbol after the end of the last symbol included in the PDCCH including the DCI indicating the CSI report. The above-described Z symbol may vary depending on the numerology of the downlink bandwidth part corresponding to the PDCCH including the DCI indicating the CSI report, the numerology of the uplink bandwidth part corresponding to the PUSCH transmitting the CSI report, and the type or characteristics (report quantity, frequency band granularity, number of reference signal ports, codebook type, etc.) of the channel information reported in the CSI report. In other words, for the CSI report to be determined as the valid CSI report (for the corresponding CSI report to be the valid CSI report), the uplink transmission of the corresponding CSI report, including a timing advance, should not be executed before a Zref symbol. In this case, the Zref symbol is an uplink symbol that starts a cyclic prefix (CP) after time *T*_{proc,CSI} = (*Z*) (2048 + 144) · *κ*2^{-µ} *· T_{c}* from the moment the last symbol of the triggering PDCCH ends. Here, a detailed value of Z follows the description below, and *T_{c}* = 1/(Δ*fₘₐₓ* · *N_{f}*), Δ*fₘₐₓ* = 480 · 10^{a} Hz, *N_{f}* = 4096, κ = 64, and µ are numerologies. In this case, µ may be promised to use the one that causes the largest *T*_{proc,CSI} value among (µ*_{PDCCH}, µ*_{*CSI*-*R*V}, µ_{DL}), and µ*_{PDCCH}* may refer to a subcarrier spacing used for PDCCH transmission, *µ_{CSI-RS}* may refer to a subcarrier spacing used for CSI-RS transmission, and µ*_{UL}* may refer to a subcarrier spacing of the uplink channel used for uplink control information (UCI) transmission for CSI reporting. As another example, it is also possible for µ to promise to use the one that causes the largest *T*_{proc,CSI} value among (µ*_{PDCCH}*, µ_{UL}). Refer to the description above for the definitions of µ*_{PDCCH}* and µ*_{UL}.* For convenience of future description, satisfying the above conditions is referred to as satisfying CSI reporting validity condition 1.

Furthermore, if the reference signal for channel measurement for the aperiodic CSI report instructed to the UE via the DCI is an aperiodic reference signal, the valid CSI report may be performed starting from an uplink symbol following a Z' symbol after the end of the last symbol including the reference signal. The above-described Z' symbol may vary depending on the numerology of the downlink bandwidth part corresponding to the PDCCH including the DCI indicating the CSI report, the numerology of the bandwidth corresponding to the reference signal for channel measurement for the CSI report, the numerology of the uplink bandwidth part corresponding to the PUSCH transmitting the CSI report, and the type or characteristics (report quantity, frequency band granularity, number of reference signal ports, codebook type, etc.) of the channel information reported in the CSI report. In other words, for the CSI report to be determined as the valid CSI report (for the corresponding CSI report to be the valid CSI report), the uplink transmission of the corresponding CSI report, including a timing advance, should not be executed before a Zref' symbol. In this case, the Zref' symbol is an uplink symbol that starts a cyclic prefix (CP) after time ${T}_{proc . CSI}^{′} = \left(Z′\right) \left(2048+144\right) ⋅ κ {2}^{- μ} ⋅ {T}_{c}$ from the moment the last symbol of the aperiodic CSI-RS or the aperiodic CSI-IM triggered by the triggering PDCCH ends. Here, a detailed value of Z' follows the description below, and *T_{c}* = 1/(Δ*fₘₐₓ* · *N_{f}*), Δ*fₘₐₓ* = 480 · 10^{a} Hz, *N_{f}* = 4096, κ = 64, and µ are numerologies. In this case, µ may be promised to use the one that causes the largest *T*_{proc,CSI} value among (µ*_{PDCCH}, µ_{CSI-RS}, µ_{DL}*), and *[^{T}_{PDCCH}* may refer to a subcarrier spacing used for triggering PDCCH transmission, µ*_{CSI -RS}* may refer to a subcarrier spacing used for CSI-RS transmission, and µ*_{UL}* may refer to a subcarrier spacing of the uplink channel used for uplink control information (UCI) transmission for CSI reporting. As another example, µ may be promised to use the one that causes the largest *T*_{proc,CSI} value among (µ*_{PDCCH}, µ*_{UL})*.* In this case, refer to the description above for the definitions of µ*_{PDCCH}* and µ*_{UL}.* For convenience of future description, satisfying the above conditions is referred to as satisfying CSI reporting validity condition 2.

When the base station instructs the UE to perform the aperiodic CSI report on the aperiodic reference signal via the DCI, the UE may perform the valid CSI report starting from the first uplink symbol that satisfies both the time point after the Z symbol following the end of the last symbol included in the PDCCH including the DCI indicating the CSI report, and the time point after the Z' symbol following the end of the last symbol including the reference signal. In other words, the aperiodic CSI reporting based on the aperiodic reference signal is determined as the valid CSI report only if it satisfies both CSI reporting validity conditions 1 and 2.

When the time point of the CSI report indicated by the base station does not satisfy the CSI computation time requirements, the UE may determine that the CSI report is invalid and not consider updating the channel information state for the CSI report.

The Z and Z' symbols for the above-described CSI computation time calculation follow [Table 18] and [Table 19] below. For example, when the channel information reported in the CSI report includes only wideband information, the number of reference signal ports is 4 or less, the reference signal resource is one, the codebook type is 'typeI-SinglePanel', or the type (report quantity) of channel information to be reported is 'cri-RI-CQI', the Z and Z' symbols follow Z₁, ${Z}_{1}^{′}$ values in [Table 19]. Hereinafter, this will be referred to as delay requirement 2. In addition, when the PUSCH including the CSI report does not include TB or HARQ-ACK and a CPU occupation of the UE is 0, the Z and Z' symbols follow the Z₁, ${Z}_{1}^{′}$ values in [Table 18], which will be referred to as delay requirement 1. The description regarding the above-described CPU occupation is described in detail below. Furthermore, when the report quantity is 'cri-RSRP' or 'ssb-Index-RSRP', the Z and Z' symbols follow Z₃, ${Z}_{3}^{′}$ values in [Table 19]. X1, X2, X3, and X4 in [Table 19] refer to UE capability for a beam reporting time, and KB1 and KB2 in [Table 19] refer to UE capability for a beam changing time. When it does not correspond to the type or characteristics of channel information reported in the above-described CSI report, the Z and Z' symbols follow Z₂, ${Z}_{2}^{′}$ values in [Table 19].

**[Table 18]**

| **µ** | **Z_{1 [symbols]}** | |
|---|---|---|
| | **Z₁** | ${Z}_{1}^{′}$ |
| 0 | 10 | 8 |
| 1 | 13 | 11 |
| 2 | 25 | 21 |
| 3 | 43 | 36 |

**[Table 19]**

| **µ** | **Z₁ [symbols]** | | **Z₂ [symbols]** | | **Z₃ [symbols]** | |
|---|---|---|---|---|---|---|
| | **Z₁** | ${Z}_{1}^{′}$ | **Z₂** | ${Z}_{2}^{′}$ | **Z₃** | ${Z}_{3}^{′}$ |
| 0 | 22 | 16 | 40 | 37 | 22 | X₁ |
| 1 | 33 | 30 | 72 | 69 | 33 | X₂ |
| 2 | 44 | 42 | 141 | 140 | min(44, *X*₃ + KB₁) | X₃ |
| 3 | 97 | 85 | 152 | 140 | min(97, *X*₄ + KB₂) | X₄ |

### [CSI reference resource]

When the base station instructs the UE to perform the aperiodic/semi-persistent/periodic CSI report, it may configure a CSI reference resource to determine the reference time and frequency for the channel to be reported in the CSI report. The frequency of the CSI reference resource may be carrier and subband information to be measured for the CSI, indicated in the CSI report configuration, and may correspond to the carrier and reportFreqConfiguration, respectively, within the CSI-ReportConfig that is the higher layer signaling. The time of the CSI reference resource may be defined based on the time at which the CSI report is transmitted. For example, when CSI report #X is instructed to be transmitted in uplink slot n' of the carrier and BWP to which the CSI report is to be transmitted, the time of the CSI reference resource for the CSI report #X may be defined as a downlink slot n-nCSI-ref of the carrier and BWP measuring the CSI. When the numerology of the carrier and BWP measuring the CSI is named µDL and the numerology of the carrier and BWP transmitting the CSI report #X is named µUL, the downlink slot n is calculated as $n = \left⌊n′⋅\frac{{2}^{{μ}_{UL}}}{{2}^{{μ}_{UL}}}\right⌋$. nCSI-ref, which is a slot interval between a downlink slot n and a CSI reference signal, follows n_{CSI-ref} = 4 · 2^{µ_{DL}} when a CSI report #X transmitted in an uplink slot n' is a semi-persistent or periodic CSI report and a single CSI-RS/SSB resource is associated with the CSI report according to the number of CSI-RS/SSB resources for channel measurement, and follows n_{CSI-ref} = 5 · 2^{µ_{DL}} when a plurality of CSI-RS/SSB resources are associated with the CSI report. When the CSI report #X transmitted in the uplink slot n' is the aperiodic CSI report, it is calculated as ${n}_{CSI - ref} = \left⌊Z′/{N}_{symb}^{slot}\right⌋$ in consideration of the CSI computation time Z' for channel measurement. The above-described ${N}_{symb}^{slot}$ is the number of symbols included in one slot, and in NR, ${N}_{symb}^{slot} = 14$ is assumed.

When the base station instructs the UE, via the higher layer signaling or DCI, to transmit the CSI report in the uplink slot n', the UE may report CSI by performing channel measurement or interference measurement on a CSI-RS resource, a CSI-IM resource, or an SSB resource that are transmitted no later than a CSI reference resource slot of the CSI report transmitted in the uplink slot n' among the CSI-RS resource, the CSI-IM resource, or the SSB resource associated with the corresponding CSI report. The CSI-RS resources, CSI-IM resources, or SSB resources associated with the corresponding CSI report may refer to a CSI-RS resource, a CSI-IM resource, or an SSB resource included in a resource set configured in a resource setting referenced by a report setting for the CSI report of the UE configured via the higher layer signaling, refer to a CSI-RS resource, a CSI-IM resource, or an SSB resource referenced by a CSI report trigger state including parameters for the corresponding CSI report, or refer to a CSI-RS resource, a CSI-IM resource, or an SSB resource indicated by an ID of a reference signal (RS) set.

In embodiments of the present disclosure, a CSI-RS/CSI-IM/SSB occasion refers to a transmission time point of a CSI-RS/CSI-IM/SSB resource(s) determined by the higher layer configuration or a combination of the higher layer configuration and the DCI triggering. For example, for semi-persistent or periodic CSI-RS resources, the transmitted slot is determined by the slot periodicity and slot offset configured in the higher layer signaling, and the transmitted symbol(s) within the slot are determined by the resource mapping information (resourceMapping). As another example, for aperiodic CSI-RS resources, the slot in which the aperiodic CSI-RS resource is transmitted is determined according to a slot offset relative to a PDCCH including DCI indicating channel reporting configured by the higher layer signaling, and the transmission symbol(s) within the slot are determined according to resource mapping information (resourceMapping).

The above-described CSI-RS occasion may be determined by independently considering the transmission time point of each CSI-RS resource or by comprehensively considering the transmission time point of one or more CSI-RS resource(s) included in the resource set. Accordingly, the following two interpretations are possible for the CSI-RS occasion according to each resource set configuration.
- Interpretation 1-1: From a start time point of the earliest symbol to an end time of the latest symbol in which one specific resource among one or more CSI-RS resources included in the resource set(s) configured in the resource setting referenced by the report setting configured for the CSI report is transmitted.
- Interpretation 1-2: Among all CSI-RS resources included in the resource set(s) configured in the resource setting referenced by the report setting configured for the CSI report, from the start time point of the earliest symbol in which the CSI-RS resource transmitted at the earliest time point is transmitted to the end time point of the latest symbol in which the CSI-RS resource transmitted at the latest time point is transmitted.

Hereinafter, in the embodiments of the present disclosure, it is possible to individually apply both interpretations of the CSI-RS occasion. In addition, for the CSI-IM occasion and SSB occasion, it is possible to consider both interpretations as in the case of the CSI-RS occasion. However, since the principle is similar to the above description, redundant descriptions will be omitted below.

In the embodiments of the present disclosure, 'CSI-RS/CSI-IM/SSB occasion for the CSI report #X transmitted in uplink slot n" refers to a set of CSI-RS occasions, CSI-IM occasions, and SSB occasions that are not later than the CSI reference resource of the CSI report #X transmitted in the uplink slot n' among CSI-RS occasions, CSI-IM occasions, and SSB occasions of the CSI-RS resource, CSI-IM resource, and SSB resource included in the resource set configured in the resource setting referenced by the report setting configured for the CSI report #X.

In the embodiments of the present disclosure, 'the latest CSI-RS/CSI-IM/SSB occasion among the CSI-RS/CSI-IM/SSB occasions for the CSI report #X transmitted in the uplink slot n" can be interpreted in the following two ways.
- Interpretation 2-1: A set of occasions including the latest CSI-RS occasion among the CSI-RS occasions for the CSI report #X transmitted in the uplink slot n', the latest CSI-IM occasion among the CSI-RS occasions eport #X transmitted in uplink slot n', and the latest SSB occasion among the SSB occasions for the CSI report #0 transmitted in uplink slot n'
- Interpretation 2-2: The latest occasion among all the CSI-RS occasions, CSI-IM occasions, and SSB occasions for the CSI report #X transmitted in the uplink slot n'

Hereinafter, in the embodiments of the present disclosure, it is possible to consider two interpretations of 'the latest CSI-RS/CSI-IM/SSB occasion among the CSI-RS/CSI-IM/SSB occasions for the CSI report #X transmitted in the uplink slot n" and apply two interpretations individually. In addition, when considering two interpretations (interpretation 1-1, interpretation 1-2) described above for the CSI-RS occasion, CSI-IM occasion, and SSB occasion, in the embodiments of the present disclosure, "the latest CSI-RS/CSI-IM/SSB occasion among the CSI-RS/CSI-IM/SSB occasions for the CSI report #X transmitted in the uplink slot n'" may be individually applied in consideration of all four different interpretations (applying interpretation 1-1 and interpretation 2-1, applying interpretation 1-1 and interpretation 2-2, applying interpretation 1-2 and interpretation 2-1, applying interpretation 1-2 and interpretation 2-2).

The base station may indicate the CSI report in consideration of the amount of channel information that the UE may simultaneously compute for the CSI report, that is, the number of the channel information processing units (CSI processing unit (CPU)) of the UE. When the number of channel information processing units that the UE may compute simultaneously is denoted as N_{CPU}, the UE may not expect a CSI report indication from the base station that require more channel information computations than N_{CPU}, or may not consider updating to channel information that require more channel information computations than N_{CPU}. N_{CPU} may be reported by the UE to the base station via the higher layer signaling, or configured by the base station via the higher layer signaling.

It is assumed that the CSI report indicated by the base station to the UE occupy some or all of the CPUs for channel information computation out of the total number N_{CPU} of channel information that the UE may simultaneously compute. For each CSI report, for example, when the number of channel information processing units required for the CSI report n (n = 0.1. ... . N - 1) is denoted as ${O}_{CPU}^{\left(n\right)}$, then the total number of channel information processing units required for N CSI report may be expressed as ${\sum }_{n = 0}^{N - ⊥} {O}_{CPU}^{\left(n\right)}$. The channel information processing unit required for each reportQuantity configured in the CSI report may be configured as shown in the following [Table 20].

**[Table 20]**

| |
|---|
| - ${O}_{CPU}^{\left(n\right)} = 0$ : If the reportQuantity configured in the CSI report is configured to 'none' and trs-Info is configured for the CSI-RS resource set associated with the CSI report |
| - ${O}_{CPU}^{\left(n\right)} = 1$ : If the reportQuantity configured in the CSI report is configured to 'none', 'cri-RSRP', or 'ssb-Index-RSRP', and trs-Info is not configured for the CSI-RS resource set associated with the CSI report |
| - If the reportQuantity configured in the CSI report is configured to 'cri-RI-PMI-CQI', 'cri-RI-il', 'cri-RI-il-CQI', 'cri-RI-CQI', or 'cri-RI-LI-PMI-CQI' |
| >> ${O}_{CPU}^{\left(n\right)} = {N}_{CPU}$ : If an aperiodic CSI report is triggered and the corresponding CSI report is not multiplexed with one or both of TB/HARQ-ACK. The corresponding CSI report is wideband CSI, corresponds to up to 4 CSI-RS ports, and corresponds to a single resource without a CRI report, and a codebookType corresponds to 'typeI-SinglePanel' or a reportQuantity corresponds to 'cri-RI-CQI' (the corresponding case is a case corresponding to the above-described latency requirement 1 and can be viewed as a case where the UE utilizes all available CPUs to quickly calculate and report the CSI) |
| >> ${0}_{CPU}^{\left(n\right)} = {K}_{S}$ : All cases excluding the above case. Kₛ indicates the number of CSI-RS resources within the CSI-RS resource set for channel measurement. |

When, at a specific time point, the number of channel information computations required by the UE for the plurality of CSI reports exceeds the number of channel information computation units N_{CPU} that the UE may calculate simultaneously, the UE may not consider updating channel information for some CSI reports. Among the plurality of indicated CSI reports, the CSI report for which the channel information updating is not considered are determined by considering at least the time when the channel information computation required for the CSI report occupies the CPU and the priority of the reported channel information. For example, it is possible to not consider updating channel information for a CSI report for which the channel information computation required for the CSI report starts at the latest time among the times in which the CPU is occupied, and to not preferentially consider updating channel information for a CSI report having a lower priority of channel information.

The priority of the channel information may be determined by referring to [Table 21] below.

**[Table 21]**

| |
|---|
| CSI priority value Pri*_{jCSI}*(*y, k*, *c, s*) = 2 · *N_{calls} · Mₛ · y* + *N_{calls}* · *Mₛ* · *k* + *Mₛ* · *c + s*, |
| - For an aperiodic CSI report transmitted via a PUSCH when y=0, for a semi-persistent CSI report transmitted via a PUSCH when y=1, for a semi-persistent CSI report transmitted via a PUCCH when y=2, and for a periodic CSI report transmitted on PUCCH when y=3; |
| - If the CSI report includes L1-RSRP when k=0, if the CSI report does not include L1-RSRP when k=1; |
| - c : Serving cell index, *N_{cells}* : The maximum number of serving cells configured by higher layer signaling (*maxNrofServingCells*); |
| - s : CSI report configuration index (*reportConfigID*), *Mₛ* : The maximum number of CSI report configurations configured by higher layer signaling (*maxNrofCSI-ReportConfigurations*) |

The CSI priority for the CSI report is determined by a priority value PriiCSI(y,k,c,s) in [Table 21]. Referring to [Table 21], the CSI priority value is determined by the type of channel information included in the CSI report, time domain reporting characteristics of the CSI report (aperiodic, semi-persistent, periodic), the channel through which the CSI report is transmitted (PUSCH, PUCCH), the serving cell index, and the CSI report configuration index. For the CSI priority for the CSI report, it is determined that the CSI priority for the CSI report with the smaller priority value is higher by comparing the priority values PriiCSI(y,k,c,s).

When the time the CPU is occupied by computing the channel information required for the CSI report indicated by the base station to the UE is referred to as the CPU occupation time, then the CPU occupation time is determined by considering the type of channel information included in the CSI report (report quantity), the time domain characteristics (aperiodic, semi-persistent, periodic) of the CSI report, the slots or symbols occupied by the higher layer signaling or DCI indicating the CSI report, and some or all of the slots or symbols occupied by the reference signal for channel state measurement.

### [PDCCH: DCI Related]

Next, the downlink control information (DCI) in the 5G system will be described in detail.

In the 5G system, scheduling information for uplink data (or physical uplink shared channel (PUSCH)) or downlink data (or physical downlink shared channel (PDSCH)) is transferred from the base station to the UE via the DCI. The UE may monitor fallback and non-fallback DCI formats on the PUSCH or PDSCH. The fallback DCI format may be composed of fixed fields predefined between the base station and the UE, and the non-fallback DCI format may include a configurable field.

The DCI may be transmitted via a physical downlink control channel (PDCCH) after being subjected to a channel coding and modulation process. A cyclic redundancy check (CRC) is attached to a DCI message payload, and the CRC may be scrambled with a radio network temporary identifier (RNTI) that corresponds to a UE's identity. Different RNTIs may be used depending on the purpose of the DCI message, such as UE-specific data transmission, power control commands, or random access responses. In other words, the RNTI is not explicitly transmitted, but is included in a CRC calculation process and transmitted. When receiving the DCI message transmitted via the PDCCH, the UE confirms the CRC using the assigned RNTI. When the CRC confirmation result is correct, the UE may know that the corresponding message has been transmitted to the UE.

For example, the DCI scheduling the PDSCH for system information (SI) can be scrambled with SI-RNTI. The DCI scheduling PDSCH for a random access response (RAR) message may be scrambled with RA-RNTI. The DCI scheduling PDSCH for a paging message may be scrambled with P-RNTI. The DCI notifying a slot format indicator (SFI) may be scrambled with SFI-RNTI. The DCI notifying transmit power control (TPC) may be scrambled with TPC-RNTI. The DCI scheduling the UE-specific PDSCH or PUSCH may be scrambled with cell RNTI (C-RNTI).

DCI format 0_0 may be used as fallback DCI for scheduling the PUSCH. In this case, the CRC may be scrambled with the C-RNTI. The DCI format 0_0 with the CRC scrambled with the C-RNTI may include, for example, pieces of information in [Table 22] below.

**[Table 22]**

| |
|---|
| - Identifier for DCI formats - [1] bit |
| - Frequency domain resource assignment- $\left[\left⌈{log}_{2}\left({N}_{RB}^{UL , BWP}\left({N}_{RB}^{UL , BWP}+1\right)/2\right)\right⌉\right]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - UL/ supplementary UL (SUL) indicator - 0 or 1 bit |

DCI format 0_1 may be used as the non-fallback DCI for scheduling the PUSCH. In this case, the CRC may be scrambled by the C-RNTI. The DCI format 0_1 with the CRC scrambled by the C-RNTI may include, for example, pieces of information in [Table 23] below.

**[Table 23]**

| | |
|---|---|
| - Carrier indicator - 0 or 3 bits | |
| - UL/SUL indicator - 0 or 1 bit | |
| - Identifier for DCI formats - [1] bits | |
| - Bandwidth part indicator - 0, 1 or 2 bits | |
| - Frequency domain resource assignment | |
| | • For resource allocation type 0, $\left⌈{N}_{RB}^{UL , BWP}/P\right⌉$ bits |
| | • For resource allocation type 1, $\left⌈{log}_{2}\left({N}_{RB}^{UL , BWP}\left({N}_{RB}^{UL , BWP}+1\right)/2\right)\right⌉$ bits |
| - Time domain resource assignment -1, 2, 3, or 4 bits | |
| - virtual resource block (VRB)-to-physical resource block (PRB) mapping - 0 or 1 bit, only for resource allocation type 1. | |
| | • 0 bit if only resource allocation type 0 is configured; |
| | • 1 bit otherwise. |
| - Frequency hopping flag - 0 or 1 bit, only for resource allocation type 1. | |
| | • 0 bit if only resource allocation type 0 is configured; |
| | • 1 bit otherwise. |
| - Modulation and coding scheme - 5 bits | |
| - New data indicator - 1 bit | |
| - Redundancy version - 2 bits | |
| - HARQ process number - 4 bits | |
| - 1st downlink assignment index - 1 or 2 bits | |
| | • 1 bit for semi-static HARQ-ACK codebook; |
| | • 2 bits for dynamic HARQ-ACK codebook with single HARQ- |
| | ACK codebook |
| - 2nd downlink assignment index - 0 or 2 bits | |
| | • 2 bits for dynamic HARQ-ACK codebook with two HARQ-ACK sub-codebooks; |
| | • 0 bit otherwise. |
| - TPC command for scheduled PUSCH - 2 bits | |
| - SRS resource indicator - $\left⌈{log}_{2}\left({\sum }_{k = 1}^{{L}_{max}} \left(\begin{matrix}{N}_{SRS} \\ k\end{matrix}\right)\right)\right⌉$ or $\left⌈{log}_{2}\left({N}_{SRS}\right)\right⌉$ bits | |
| | • $\left⌈{log}_{2}\left({\sum }_{k = 1}^{{L}_{max}} \left(\begin{matrix}{N}_{SRS} \\ k\end{matrix}\right)\right)\right⌉$ bits for non-codebook based PUSCH transmission; |
| | • $\left⌈{log}_{2}\left({N}_{SRS}\right)\right⌉$ bits for codebook based PUSCH transmission |
| - Precoding information and number of layers -up to 6 bits | |
| - Antenna ports - up to 5 bits | |
| - SRS request - 2 bits | |
| - CSI request (channel state information request) - 0, 1, 2, 3, 4, 5, or 6 bits | |
| - code block group (CBG) transmission information - 0, 2, 4, 6, or 8 bits | |
| - PTRS-DMRS association - 0 or 2 bits. | |
| - beta_offset indicator - 0 or 2 bits | |
| - DMRS sequence initialization - 0 or 1 bit | |

DCI format 1_0 may be used as fallback DCI for scheduling the PDSCH. In this case, the CRC may be scrambled by the C-RNTI. The DCI format 1_0 with the CRC scrambled by the C-RNTI may include, for example, pieces of information in [Table 24] below.

**[Table 24]**

| |
|---|
| - Identifier for DCI formats - [1] bit |
| - Frequency domain resource assignment - $\left[\left⌈{log}_{2}\left({N}_{RB}^{DL , BWP}\left({N}_{RB}^{DL , BWP}+1\right)/2\right)\right⌉\right]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - physical uplink control channel (PUCCH) resource indicator - 3 bits |
| - PDSCH-to-HARQ feedback timing indicator - [3] bits |

DCI format 1_1 may be used as the non-fallback DCI for scheduling the PDSCH. In this case, the CRC may be scrambled by the C-RNTI. The DCI format 1_1 with the CRC scrambled by the C-RNTI may include, for example, pieces of information in [Table 25] below.

**[Table 25]**

| | | |
|---|---|---|
| - Carrier indicator - 0 or 3 bits | | |
| - Identifier for DCI formats - [1] bits | | |
| - Bandwidth part indicator - 0, 1 or 2 bits | | |
| - Frequency domain resource assignment | | |
| | • For resource allocation type 0, $\left⌈{N}_{RB}^{DL , BWP}/P\right⌉$ bits | |
| | • For resource allocation type 1, $\left⌈{log}_{2}\left({N}_{RB}^{DL , BWP}\left({N}_{RB}^{DL , BWP}+1\right)/2\right)\right⌉$ bits | |
| - Time domain resource assignment -1, 2, 3, or 4 bits | | |
| - VRB-to-PRB mapping - 0 or 1 bit, only for resource allocation type 1. | | |
| | | • 0 bit if only resource allocation type 0 is configured; |
| | | • 1 bit otherwise. |
| - PRB bundling size indicator - 0 or 1 bit | | |
| - Rate matching indicator - 0, 1, or 2 bits | | |
| - ZP CSI-RS trigger - 0, 1, or 2 bits | | |
| For transport block 1: | | |
| - Modulation and coding scheme - 5 bits | | |
| - New data indicator - 1 bit | | |
| - Redundancy version - 2 bits | | |
| For transport block 2: | | |
| - Modulation and coding scheme - 5 bits | | |
| - New data indicator - 1 bit | | |
| - Redundancy version - 2 bits | | |
| - HARQ process number - 4 bits | | |
| - Downlink assignment index - 0 or 2 or 4 bits | | |
| - TPC command for scheduled PUCCH - 2 bits | | |
| - PUCCH resource indicator - 3 bits | | |
| - PDSCH-to-HARQ_feedback timing indicator - 3 bits | | |
| - Antenna ports - 4, 5 or 6 bits | | |
| - Transmission configuration indication - 0 or 3 bits | | |
| - SRS request - 2 bits | | |
| - CBG transmission information - 0, 2, 4, 6, or 8 bits | | |
| - CBG flushing out information - 0 or 1 bit | | |
| - DMRS sequence initialization - 1 bit | | |

### [PUSCH: Transmission Scheme Related]

Next, the scheduling scheme for the PUSCH transmissions will be described. The PUSCH transmission may be dynamically scheduled based on UL grant within the DCI or may be operated based on configured grant Type 1 or Type 2. The dynamic scheduling for the PUSCH transmission may be indicated by the DCI format 0_0 or 0_1.

Configured grant Type 1 PUSCH transmission may be semi-statically configured by receiving a configuredGrantConfig including the rrc-ConfiguredUplinkGrant in [Table 26] via the higher signaling, without receiving the UL grant within the DCI. Configured grant Type 2 PUSCH transmission may be semi-persistently scheduled based on the UL grant in the DCI after receiving the configuredGrantConfig not including the rrc-ConfiguredUplinkGrant in [Table 26] through the higher signaling. When the PUSCH transmission operates by the configured grant, parameters applied to the PUSCH transmission are applied via configuredGrantConfig in [Table 26] as the higher signaling, excluding dataScramblingIdentityPUSCH, txConfig, codebookSubset, maxRank, and scaling of UCI-OnPUSCH provided by pusch-Config in [Table 27] as the higher signaling. When the UE receives transformPrecoder within configuredGrantConfig in [Table 26] as the higher signaling, the UE applies tp-pi2BPSK within the pusch-Config in [Table 27] for the PUSCH transmission operated by the configured grant.

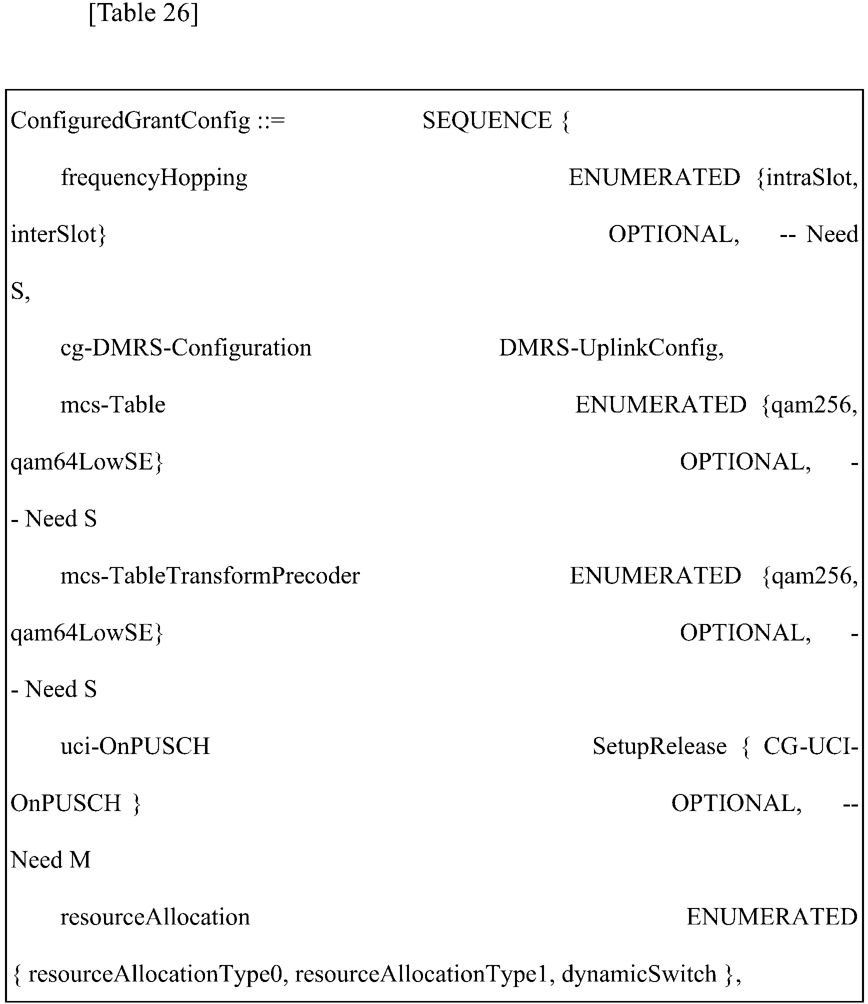

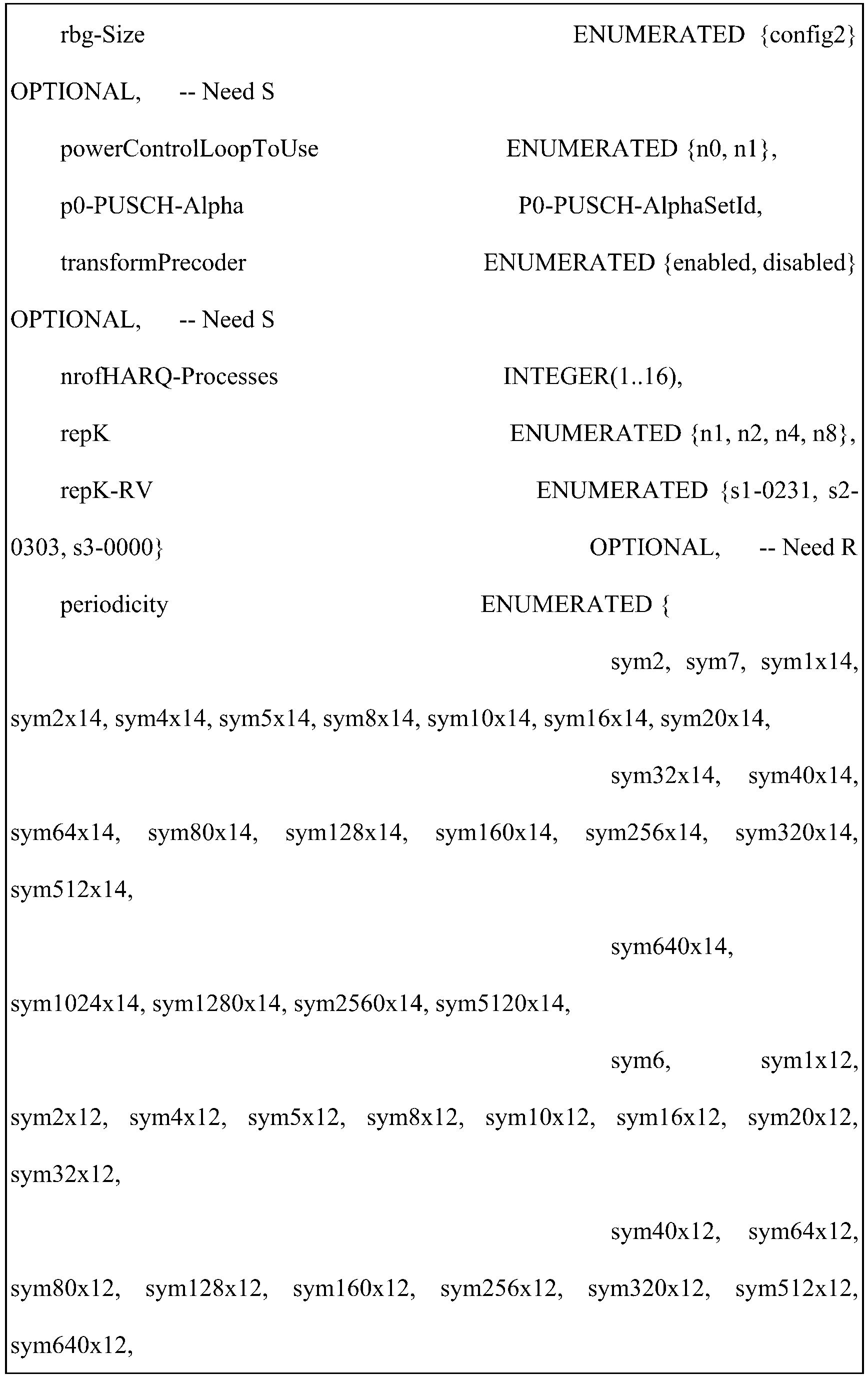

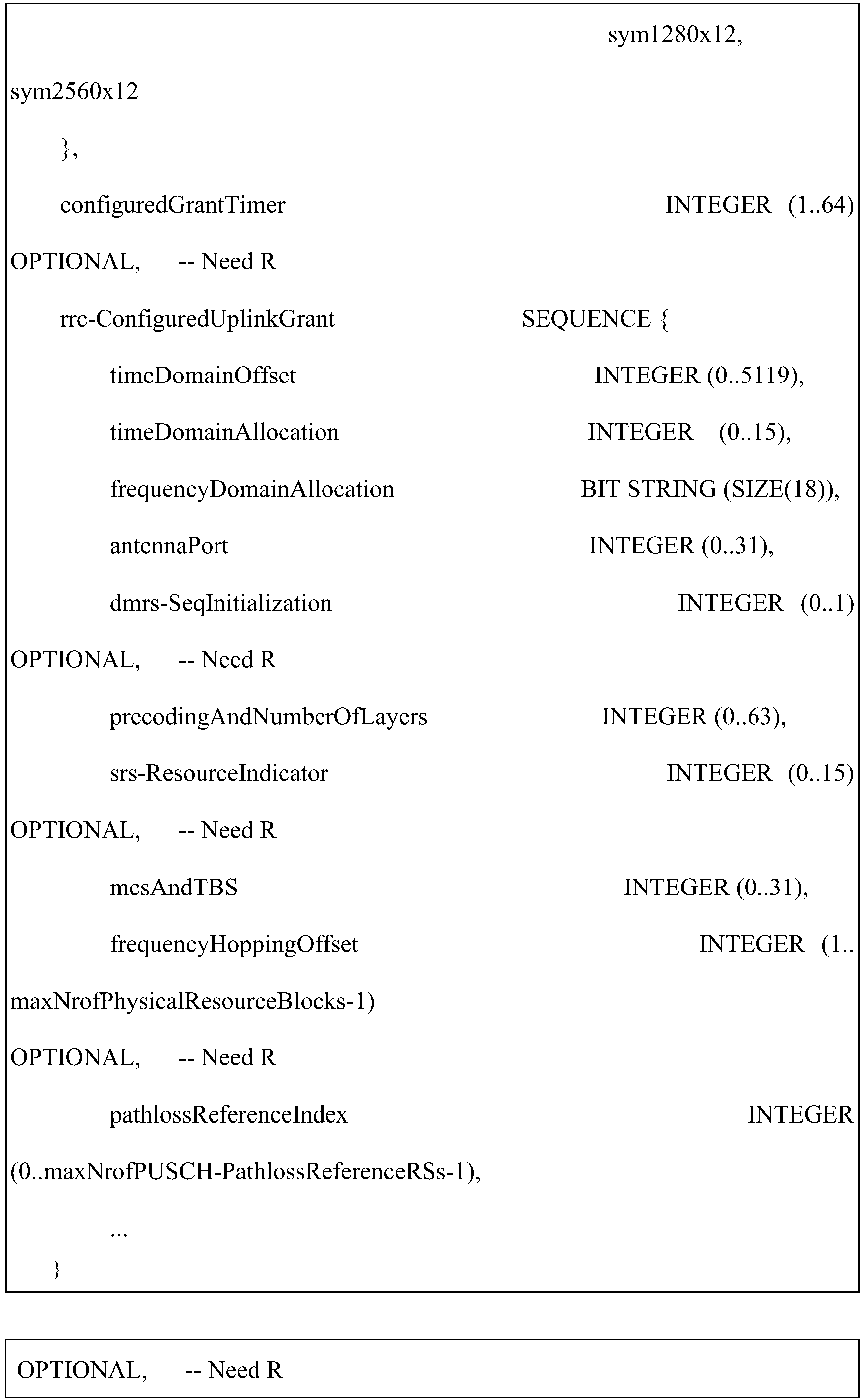

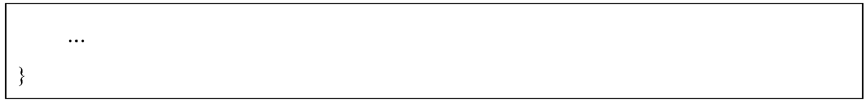

Next, the PUSCH transmission method will be described. A DMRS antenna port for the PUSCH transmission is the same as an antenna port for SRS transmission. The PUSCH transmission may follow a codebook-based transmission method and a non-codebook-based transmission method, respectively, depending on whether a txConfig value within the pusch-Config in [Table 27], which is the higher signaling, is 'codebook' or 'nonCodebook'.

As described above, the PUSCH transmission may be dynamically scheduled by the DCI format 0_0 or 0_1, or semi-statically configured by the configured grant. When the UE is indicated to schedule the PUSCH transmission by the DCI format 0_0, the UE performs beam configuration for the PUSCH transmission by using pucch-spatialRelationInfoID corresponding to the UE-specific PUCCH resource corresponding to a minimum ID within the activated uplink BWP of the serving cell. In this case, the PUSCH transmission is based on the single antenna port. The UE does not expect scheduling for the PUSCH transmission by the DCI format 0_0 within a BWP where no PUCCH resource including pucch-spatialRelationInfo is configured. When the UE is not configured with the txConfig within the pusch-Config in [Table 27], the UE does not expect to be scheduled by the DCI format 0_1.

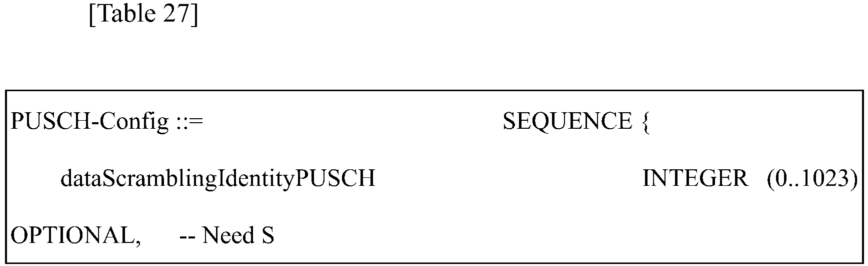

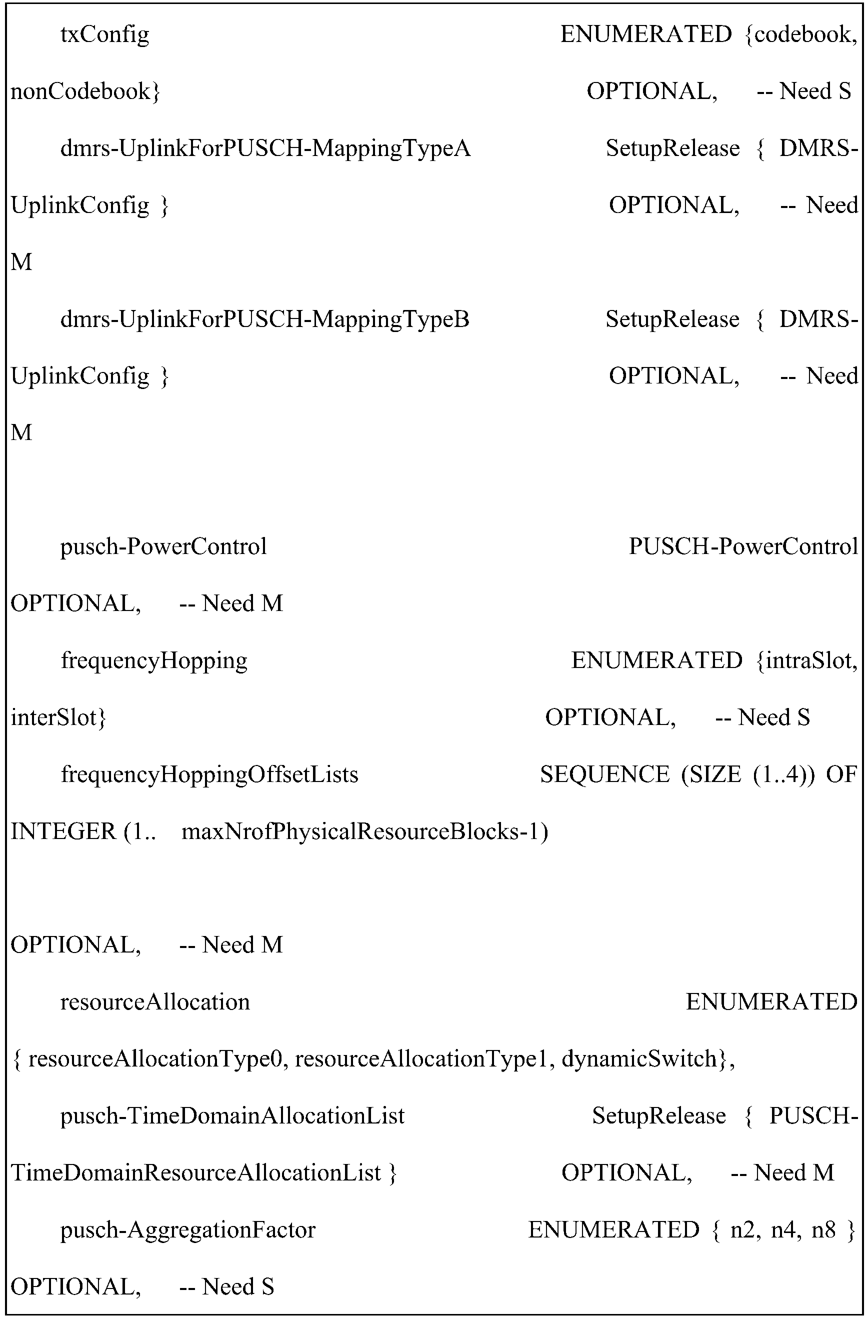

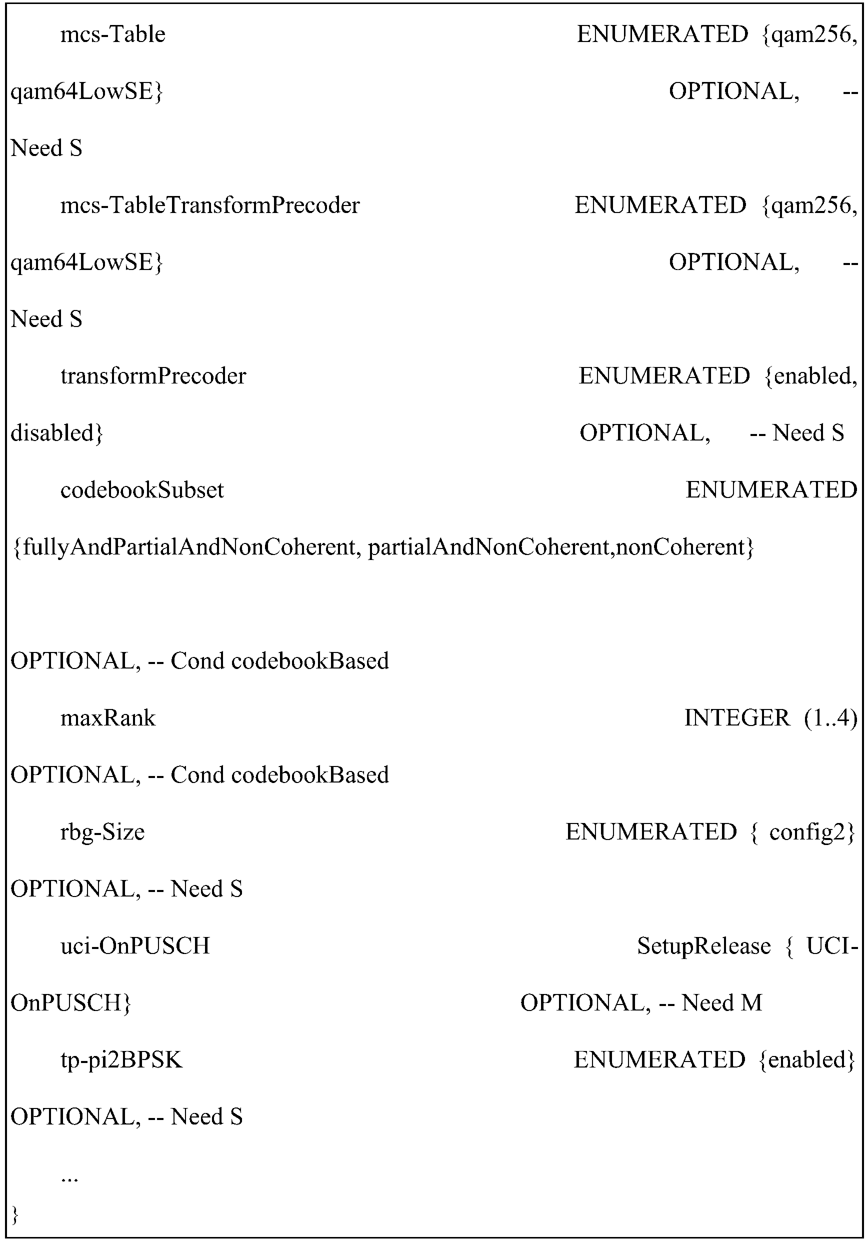

Next, the codebook-based PUSCH transmission will be described. The codebook-based PUSCH transmission may be dynamically scheduled by the DCI format 0_0 or 0_1, or semi-statically operated by the configured grant. When the codebook-based PUSCH is dynamically scheduled by the DCI format 0_1 or semi-statically configured by the configured grant, the UE determines a precoder for the PUSCH transmission based on an SRS resource indicator (SRI), a transmission precoding matrix indicator (TPMI), and a transmission rank (the number of PUSCH transmission layers).

In this case, the SRI may be provided via the field SRS resource indicator within the DCI or configured via srs-ResourceIndicator as the higher signaling. The UE is configured with at least one SRS resource for the codebook-based PUSCH transmission, but may be configured with up to two SRS resources. When the UE receives the SRI via the DCI, the SRS resource indicated by the corresponding SRI refers to the SRS resource corresponding to the SRI among the SRS resources transmitted prior to the PDCCH including the corresponding SRI. In addition, the TPMI and the transmission rank may be provided via field precoding information and number of layers within the DCI, or configured via precodingAndNumberOfLayers as the higher signaling. The TPMI is used to indicate the precoder applied to the PUSCH transmission. When the UE is configured with one SRS resource, the TPMI is used to indicate a precoder to be applied to one configured SRS resource. When the UE is configured with multiple SRS resources, the TPMI is used to indicate the precoder to be applied to the SRS resource indicated via the SRI.

The precoder to be used for the PUSCH transmission is selected from an uplink codebook with the number of antenna ports equal to a nrofSRS-Ports value within the SRS-Config as the higher signaling. In the codebook-based PUSCH transmission, the UE determines the codebook subset based on the TPMI and a codebookSubset within the pusch-Config as the higher signaling. The codebookSubset within the higher signaling pusch-Config may be configured with one of 'fullyAndPartialAndNonCoherent', 'partialAndNonCoherent', or 'nonCoherent' based on the UE capability reported by the UE to the base station. When the UE reports 'partialAndNonCoherent' in the UE capability, the UE does not expect the codebookSubset value in the higher signaling to be configured to 'fullyAndPartialAndNonCoherent'. In addition, when the UE reports 'nonCoherent' in the UE capability, the UE does not expect the codebookSubset value in the higher signaling to be configured to 'fullyAndPartialAndNonCoherent' or partialAndNonCoherent'. When nrofSRS-Ports within the SRS-ResourceSet as the higher signaling indicates two SRS antenna ports, the UE does not expect the codebookSubset value as the higher signaling to be configured to 'partialAndNonCoherent'.

The UE may receive one SRS resource set where a usage value within the SRS-ResourceSet as the higher signaling is configured to 'codebook', and may be indicated one SRS resource within the corresponding SRS resource set via the SRI. When multiple SRS resources are configured within the SRS resource set where the usage value within the SRS-ResourceSet as the higher signaling is configured to the 'codebook', the UE expects the nrofSRS-Ports value within the SRS-Resource as the higher signaling to be configured to the same value for all the SRS resources.

The UE transmits, to the base station, one or multiple SRS resources included in the SRS resource set where the usage value is configured to the 'codebook' according to the higher signaling, and the base station selects one of the SRS resources transmitted by the UE and instructs the UE to perform the PUSCH transmission using the transmission beam information of the selected SRS resource. In this case, in the codebook-based PUSCH transmission, the SRI is used as information to select an index of one SRS resource and is included in the DCI. Additionally, the base station includes, in the DCI, information indicating the TPMI and rank to be used by the UE for the PUSCH transmission. The UE performs the PUSCH transmission using the SRS resource indicated by the SRI by applying the indicated rank based on the transmission beam of the corresponding SRS resource and the precoder indicated by the TPMI.

Next, the non-codebook-based PUSCH transmission will be described. The non-codebook-based PUSCH transmission may be dynamically scheduled by the DCI format 0_0 or 0_1, or semi-statically operated by the configured grant. When at least one SRS resource is configured in the SRS resource set where the usage value within the SRS-ResourceSet as the higher signaling is configured to 'nonCodebook', the UE may be scheduled the non-codebook-based PUSCH transmission via the DCI format 0_1.

For the SRS resource set where the usage value within the SRS-ResourceSet as the higher signaling is configured to 'nonCodebook', the UE may be configured with one associated NZP CSI-RS resource (non-zero power CSI-RS). The UE may perform calculations on a precoder for SRS transmission by measuring the NZP CSI-RS resource associated with the SRS resource set. When a difference between a last received symbol of an aperiodic NZP CSI-RS resource associated with the SRS resource set and a first symbol of aperiodic SRS transmission at the UE is less than 42 symbols, the UE does not expect information about the precoder for the SRS transmission to be updated.

When a resourceType value within the SRS-ResourceSet as the higher signaling is configured to 'aperiodic', the associated NZP CSI-RS is indicated by an SRS request as a field within DCI format 0_1 or 1_1. In this case, when the associated NZP CSI-RS resource is an aperiodic NZP CSI-RS resource, the presence of the associated NZP CSI-RS is indicated in the case where the value of the SRS request as the field within the DCI format 0_1 or 1_1 is not '00'. In this case, the corresponding DCI should not indicate cross carrier or cross BWP scheduling. In addition, when the value of the SRS request indicates the presence of the NZP CSI-RS, the corresponding NZP CSI-RS is located in the slot where the PDCCH including the SRS request field is transmitted. In this case, TCI states configured on the scheduled subcarrier are not configured to QCL-TypeD.

When a periodic or semi-persistent SRS resource set is configured, the associated NZP CSI-RS may be indicated via the associatedCSI-RS in the SRS-ResourceSet as the higher signaling. For the non-codebook-based transmission, the UE does not expect spatialRelationInfo as the higher signaling for the SRS resource and the associatedCSI-RS within the SRS-ResourceSet as the higher signaling to be configured together.

When the UE is configured with multiple SRS resources, the UE may determine the precoder and transmission rank to be applied to the PUSCH transmission based on the SRI indicated by the base station. In this case, the SRI may be indicated via the field SRS resource indicator within the DCI or configured via srs-ResourceIndicator as the higher signaling. Similar to the codebook-based PUSCH transmission described above, when the UE receives the SRI via the DCI, the SRS resource indicated by the corresponding SRI refers to the SRS resource corresponding to the SRI among the SRS resources transmitted prior to the PDCCH including the corresponding SRI. The UE may use one or more SRS resources for the SRS transmission. The maximum number of SRS resources that can be simultaneously transmitted within the same symbol within one SRS resource set and the maximum number of SRS resources are determined by the UE capability reported by the UE to the base station. In this case, the SRS resources transmitted simultaneously by the UE occupy the same RB. The UE configures one SRS port for each SRS resource. The number of SRS resource sets where the usage value within the SRS-ResourceSet as the higher signaling is configured to the 'nonCodebook' may be configured to only one, and the number of SRS resources for non-codebook-based PUSCH transmission may be configured to up to four.

The base station transmits one NZP-CSI-RS associated with the SRS resource set to the UE, and the UE calculates a precoder to be used when transmitting one or more SRS resources within the corresponding SRS resource set based on the results measured when receiving the corresponding NZP-CSI-RS. When the UE transmits one or more SRS resources within the SRS resource set where the usage is configured to the 'nonCodebook' to the base station, the UE applies the calculated precoder, and the base station selects one or more SRS resources from among the received one or more SRS resources. In this case, in the non-codebook-based PUSCH transmission, the SRI represents an index that may represent a combination of one or more SRS resources, and the SRI is included in the DCI. In this case, the number of SRS resources indicated by the SRI transmitted by the base station may be the number of PUSCH transmission layers, and the UE transmits the PUSCH by applying the precoder applied to the SRS resource transmission to each layer.

### [PUSCH: Transmit Power Related]

A method for determining a transmit power of an uplink data channel in a 5G system will be described in detail below.

In the 5G system, the transmit power of the uplink data channel may be determined through the following [Equation 1]. $\begin{matrix}{P}_{PUSCH , b , f , c} \left(i, j, {q}_{d}, l\right) = min \left\{\begin{matrix}{P}_{CMAX . f . c} \left(i\right) , \\ {P}_{O _ PUSCH . b . f , c} \left(j\right) + 10 {log}_{10} \left({2}^{μ}⋅{M}_{RB . b . f . c}^{PUSCH}\left(i\right)\right) + {α}_{b . f . c} \left(j\right) ⋅ {PL}_{b . f . c} \left({q}_{d}\right) + {Δ}_{TF . b . f . c} \left(i\right) + {f}_{b . f . c} \left(i, l\right)\end{matrix}\right\} \\ \left[dBm\right]\end{matrix}$

In [Equation 1], j refers to a grant type of PUSCH; specifically, j=0 refers to a PUSCH grant for a random access response, j=1 refers to a configured grant, and j ∈ {2,3,... J-1} referst to a dynamic grant. *P*_{CMAX,*f*,*c*}(*i*) refers to maximum output power configured for a UE for a carrier f of a support cell c for a PUSCH transmission occasion i. *P*_{O_PUSCH,*b*,*f*,*c*}(*j*) is a parameter composed of the sum of *P*_{O_NOMINAL_PUSCH,*f*,*c*}(*j*) configured as a higher layer parameter, and *P*_{O_UE_PUSCH,*b*,*f*,*c*}(*j*) which may be determined via the higher layer configuration and SRI (in the case of a dynamic grant PUSCH). ${M}_{RB , b , f , c}^{PUSCH} \left(i\right)$ refers to a bandwidth for resource allocation expressed as the number of resource blocks for the PUSCH transmission occasion i, and Δ_{TF,*b*,*f*,*c*}(*i*) refers to a value determined by a modulation coding scheme (MCS), the type (e.g., whether UL-SCH or CSI is included, etc.) of information transmitted on PUSCH, etc. *a_{b,f,c}*(*j*) is a value for compensating for pathloss, and refers to a value that may be determined through the higher layer configuration and the SRS resource indicator (SRI) (in the case of the dynamic grant PUSCH). *PL_{b,f,c}*(*q_{d}*) refers to a downlink path loss estimate estimated by the UE using a reference signal with a reference signal index q_{d}, the reference signal index qd may be determined by the UE via the higher layer configuration and the SRI (in the case of dynamic grant PUSCH or configured grant PUSCH (type 2 configured grant PUSCH) based on ConfiguredGrantConfig that does not include the higher layer configuration rrc-ConfiguredUplinkGrant) or via the higher layer configuration. *f_{b,f,c}*(*i,l*) is a closed-loop power adjustment value and may be supported by an accumulation scheme and an absolute scheme. When the higher layer parameter tpc-Accumulation is not configured on the UE, a closed-loop power adjustment value may be determined using the accumulation scheme. In this case, *f_{b,f,c}*(*i,l*) is determined as the sum ${f}_{b , f , c} \left(i-{i}_{0},l\right) + {\sum }_{m - 0}^{C \left({D}_{i}\right)} {δ}_{PUSCH , b , f , c} \left(m, l\right)$ of TPC command values for closed-loop index 1 received via the DCI between an K_{PUSCH}(i-i0)-1 symbol for transmitting PUSCH transmission occasion i-i0 and an K_{PUSCH}(i) symbol for transmitting the PUSCH transmission occasion i, for the closed-loop power adjustment value for the previous PUSCH transmission occasion i-i0. When the higher-layer parameter tpc-Accumulation is configured for the UE, *f_{b,f,c}*(*i,l*) is determined as the TPC command value *δ*_{PUSCH,*b,f,c*}(*i*,*l*) for the closed-loop index 1 received via the DCI. The closed-loop index 1 may be configured to 0 or 1 when the higher layer parameter twoPUSCH-PC-AdjustmentStates is configured on the UE, and its value may be determined via the higher layer configuration and the SRI (in the case of the dynamic grant PUSCH). The mapping relationship between the TPC command field in the DCI and the TPC value *δ*_{PUSCH,*b,f*,*c*} according to the accumulation scheme and the absolute scheme may be defined as shown in [Table 28] below.

**[Table 28]**

| TPC command field | Accumulated *δ*_{PUSCH,*b,f,c*} [dB] | Absolute *δ*_{PUSCH,*b,f,c*} [dB] |
|---|---|---|
| 0 | -1 | -4 |
| 1 | 0 | -1 |
| 2 | 1 | 1 |
| 3 | 3 | 4 |

### [PUSCH: TPMI Related]

Next, a transmit precoding matrix indicator (TPMI) indicated by the base station via the DCI during codebook-based PUSCH transmission will be described.

When the UE is configured, by DCI or higher-layer signaling from the base station, to use a single PUSCH antenna port and is scheduled for a 1-layer transmission using a single PUSCH antenna port, the TPMI may be defined as W=1; otherwise, that is, when the UE is configured, by DCI or higher-layer signaling from the base station, to use a plurality of PUSCH antenna ports and is scheduled with a PUSCH of 1-layer or more, W, which is the TPMI, may be defined through [Table 29] to [Table 35] below.

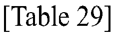

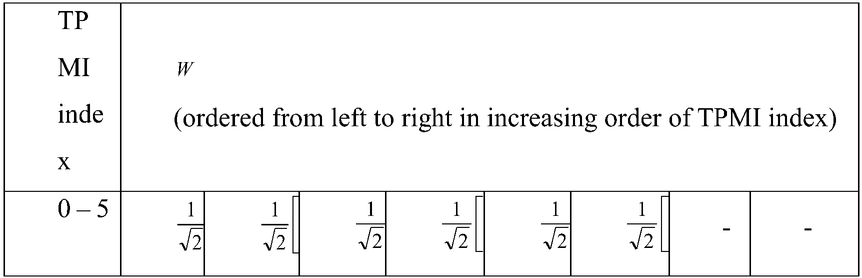

[Table 29] above describes TPMI for 1-layer when the UE has 2 PUSCH antenna ports. In [Table 29] above, when the UE has a non-coherent antenna structure and reports the corresponding UE capability to the base station, the base station may indicate to the UE the selection of one of the TPMI indices 0 and 1, and when the UE has a full-coherent antenna structure and reports the corresponding UE capability to the base station, the base station may indicate to the UE the selection of one of the TPMI indices 0 to 5.

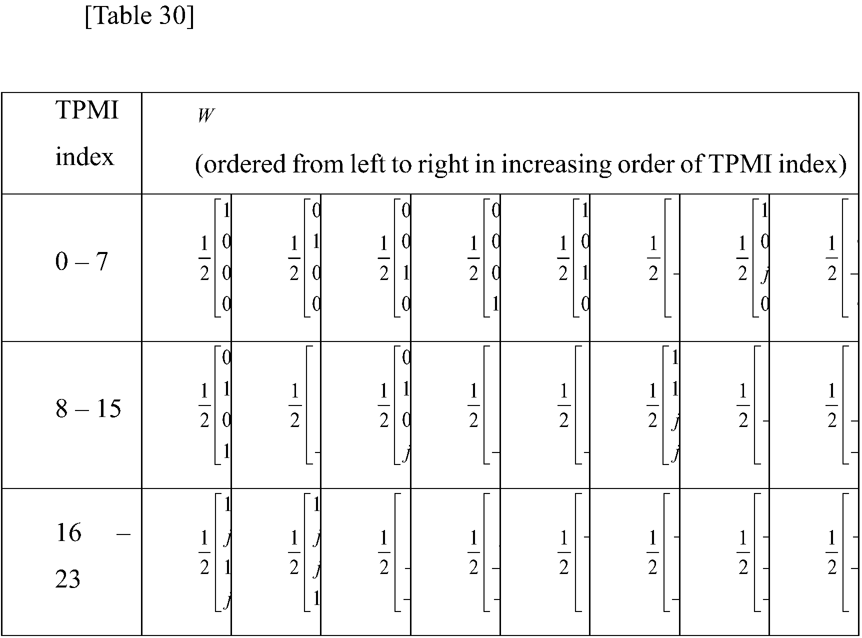

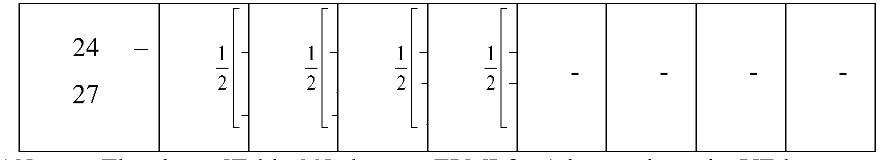

The above [Table 30] shows a TPMI for 1-layer where the UE has 4 PUSCH antenna ports and transform precoding is used (i.e., when using DFTS-OFDM waveforms). In the above [Table 30], when the UE has a non-coherent antenna structure and reports the corresponding UE capability to the base station, the base station may indicate to the UE the selection of one of the TPMI indices 0 to 3, when the UE has a partial-coherent antenna structure and reports the corresponding UE capability to the base station, the base station may indicate to the UE the selection of one of TPMI indices 0 to 11, and when the UE has a full-coherent antenna structure and reports the corresponding UE capability to the base station, the base station may indicate to the UE the selection of one of TPMI indices 0 to 27.

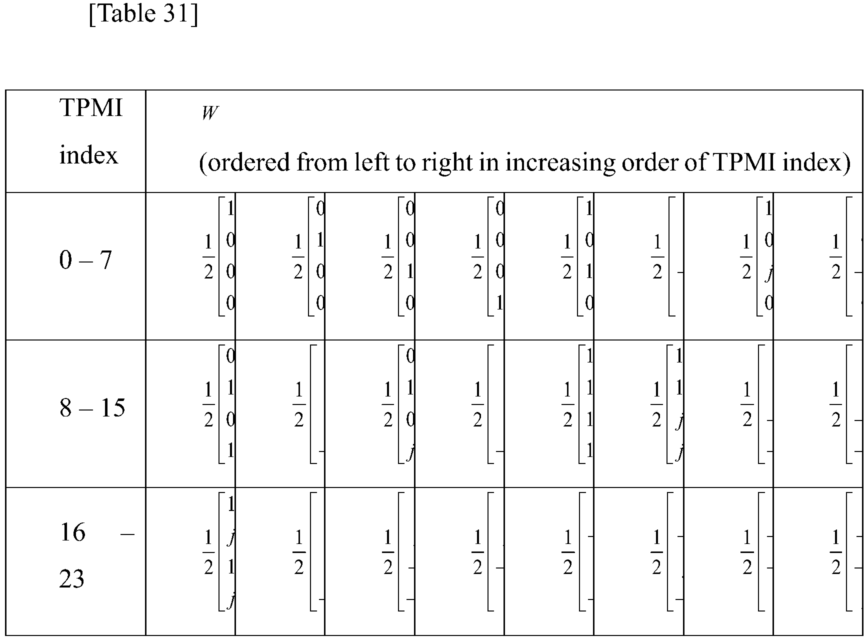

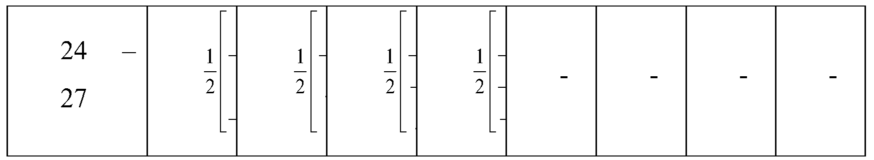

The above [Table 31] shows a TPMI for 1-layer where the UE has 4 PUSCH antenna ports and transform precoding is not used (i.e., when using CP-OFDM waveforms). In the above [Table 31], when the UE has a non-coherent antenna structure and reports the corresponding UE capability to the base station, the base station may indicate to the UE the selection of one of TPMI indices 0 to 3, when the UE has a partial-coherent antenna structure and reports the corresponding UE capability to the base station, the base station may indicate to the UE the selection of one of TPMI indices 0 to 11, and when the UE has a full-coherent antenna structure and reports the corresponding UE capability to the base station, the base station may indicate to the UE the selection of one of TPMI indices 0 to 27.

**[Table 32]**

| TPMI index | *W* (ordered from left to right in increasing order of TPMI index) | | | |
|---|---|---|---|---|
| 0 - 2 | $\frac{1}{\sqrt{2}} \left[\begin{matrix}1 & 0 \\ 0 & 1\end{matrix}\right]$ | $\frac{1}{2} \left[\begin{matrix}1 & 1 \\ 1 & - 1\end{matrix}\right]$ | $\frac{1}{2} \left[\begin{matrix}1 & 1 \\ j & - j\end{matrix}\right]$ | |

The above [Table 32] shows a TPMI for 2-layer where the UE has 2 PUSCH antenna ports and transform precoding is not used (i.e., when using CP-OFDM waveforms). In [Table 32] above, when the UE has a non-coherent antenna structure and reports the corresponding UE capability to the base station, the base station may indicate to the UE the selection of the TPMI index 0, and when the UE has a full-coherent antenna structure and reports the corresponding UE capability to the base station, the base station may indicate to the UE the selection of one of the TPMI indices 0 to 2.

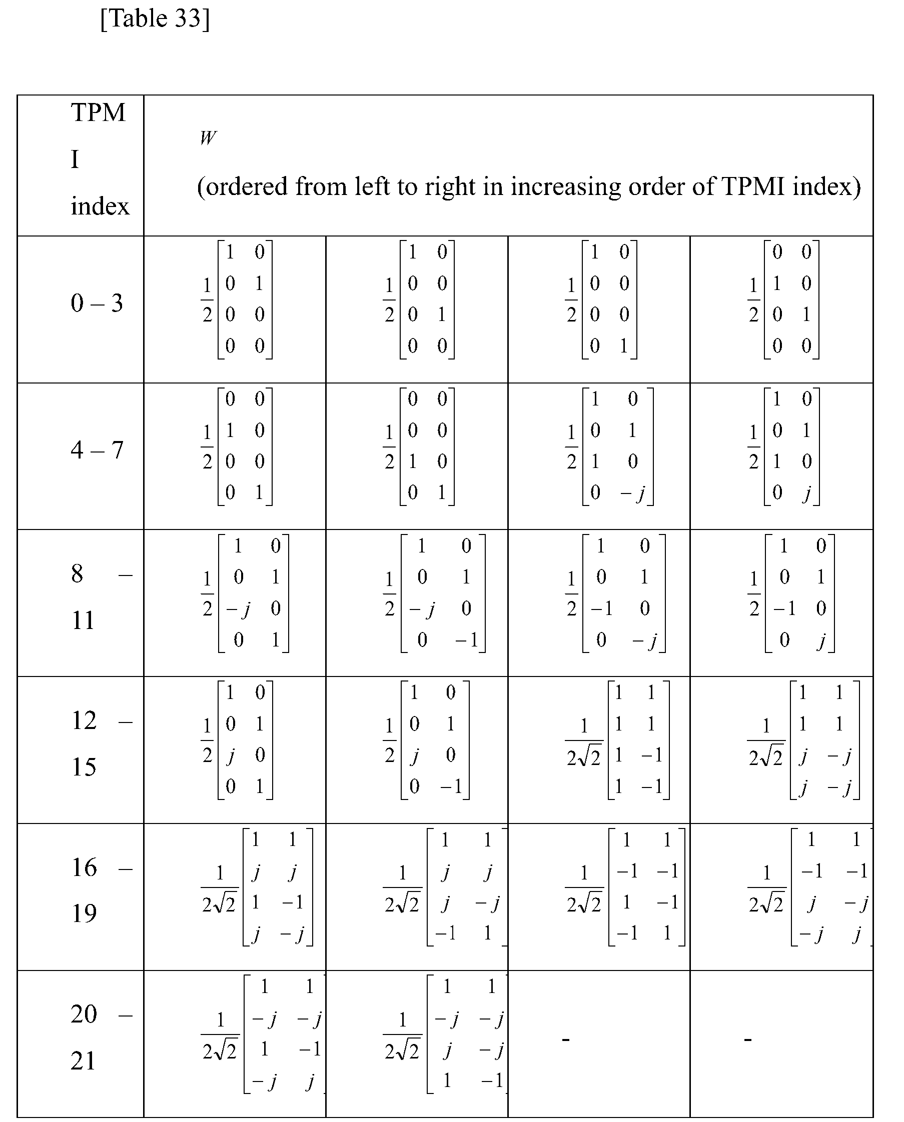

The above [Table 33] shows a TPMI for 2-layer where the UE has 4 PUSCH antenna ports and transform precoding is not used (i.e., when using CP-OFDM waveforms). In the above [Table 33], when the UE has a non-coherent antenna structure and reports the corresponding UE capability to the base station, the base station may indicate to the UE the selection of one of the TPMI indices 0 to 5, when the UE has a partial-coherent antenna structure and reports the corresponding UE capability to the base station, the base station may indicate to the UE the selection of one of TPMI indices 0 to 13, and when the UE has a full-coherent antenna structure and reports the corresponding UE capability to the base station, the base station may indicate to the UE the selection of one of TPMI indices 0 to 21.

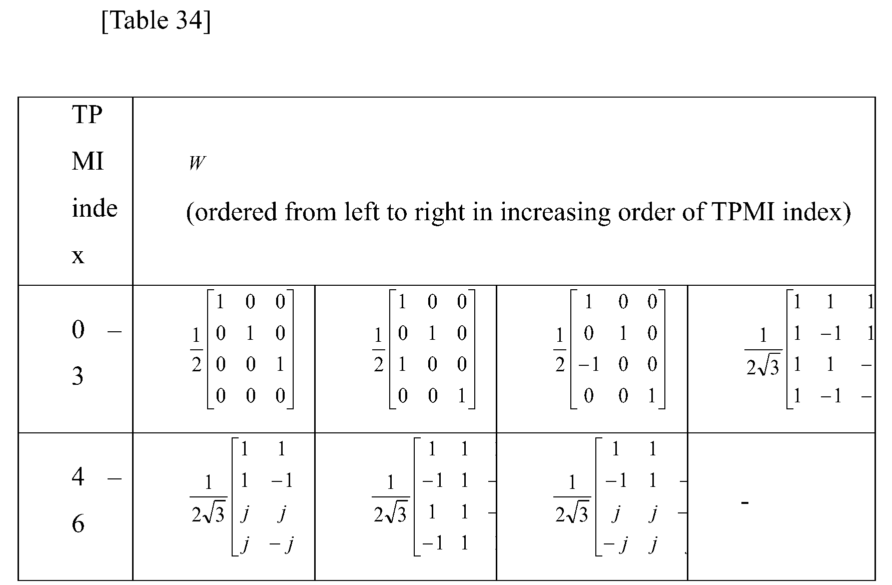

The above [Table 34] shows a TPMI for 3-layer where the UE has 4 PUSCH antenna ports and transform precoding is not used (i.e., when using CP-OFDM waveforms). In the above [Table 34], when the UE has a non-coherent antenna structure and reports the corresponding UE capability to the base station, the base station may indicate to the UE the selection of the TPMI index 0, when the UE has a partial-coherent antenna structure and reports the corresponding UE capability to the base station, the base station may indicate to the UE the selection of one of TPMI indices 0 to 2, and when the UE has a full-coherent antenna structure and reports the corresponding UE capability to the base station, the base station may indicate to the UE the selection of one of TPMI indices 0 to 6.

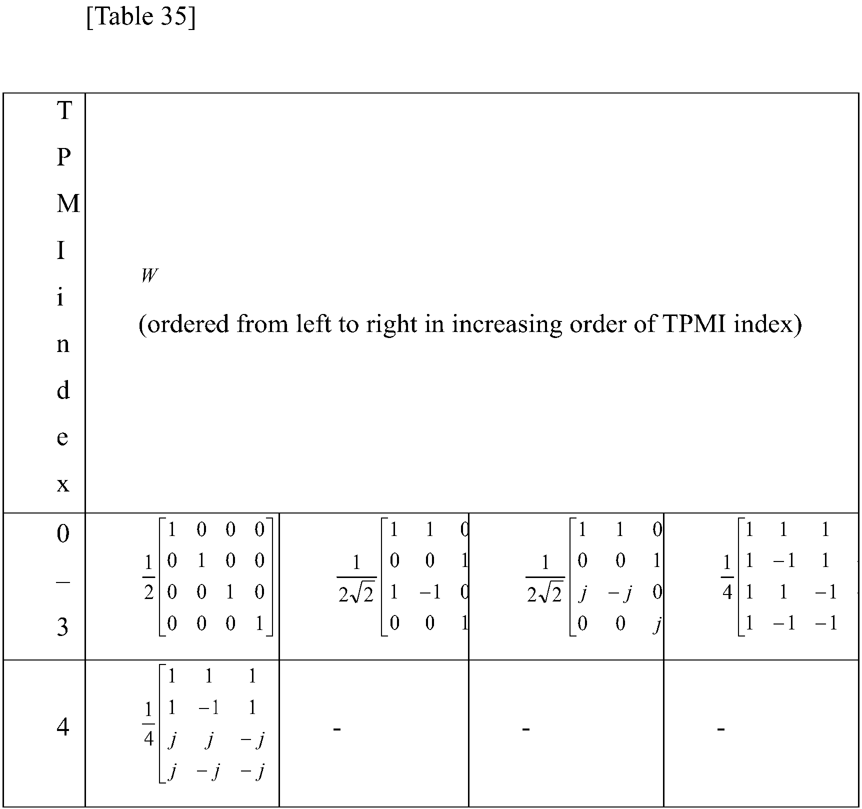

The above [Table 35] shows a TPMI for 4-layer where the UE has 4 PUSCH antenna ports and transform precoding is not used (i.e., when using CP-OFDM waveforms). In the above [Table 35], when the UE has a non-coherent antenna structure and reports the corresponding UE capability to the base station, the base station may indicate to the UE the selection of the TPMI index 0, when the UE has a partial-coherent antenna structure and reports the corresponding UE capability to the base station, the base station may indicate to the UE the selection of one of TPMI indices 0 to 2, and when the UE has a full-coherent antenna structure and reports the corresponding UE capability to the base station, the base station may indicate to the UE the selection of one of TPMI indices 0 to 4.

### [SRS Related]

Next, a method for estimating an uplink channel using transmission of a sounding reference signal (SRS) of a UE will be described. To deliver configuration information for SRS transmission to the UE, the base station may configure at least one SRS configuration for each uplink BWP, and may also configure at least one SRS resource set for each SRS configuration. For example, the base station and the UE may exchange the following higher signaling information to deliver the information on the SRS resource set:
- srs-ResourceSetId: SRS resource set index
- srs-ResourceIdList: A set of SRS resource indices referenced by the SRS resource set
- resource Type: A time domain transmission configuration for the SRS resource referenced by the SRS resource set, which may be configured as one of 'periodic', 'semi-persistent', or 'aperiodic'. When configured as the 'periodic' or 'semi-persistent', associated CSI-RS information may be provided depending on the usage of the SRS resource set. When configured as the 'aperiodic', an aperiodic SRS resource trigger list and slot offset information may be provided, and the associated CSI-RS information may be provided depending on the usage of the SRS resource set.
- usage: It is a configuration for the usage of the SRS resource referenced in the SRS resource set, which may be configured as one of 'beamManagement', 'codebook', 'nonCodebook', or 'antennaSwitching'.
- alpha, p0, pathlossReferenceRS, srs-PowerControlAdjustmentStates: It provides parameter settings for controlling the transmit power of the SRS resource referenced in the SRS resource set.

The UE may understand that the SRS resource included in the set of SRS resource indices referenced in the SRS resource set follow the information configured in the SRS resource set.

In addition, the base station and the UE may transmit and receive the higher layer signaling information to deliver individual configuration information for the SRS resource. For example, individual configuration information for the SRS resource may include time-frequency domain mapping information within the slot of the SRS resource, which may include information on frequency hopping within or between the slots of the SRS resource. In addition, individual configuration information for an SRS resource may include the time domain transmission configuration of the SRS resource, which may be configured as one of 'periodic', 'semi-persistent', or 'aperiodic'. This may be restricted to have the same time domain transmission configuration as the SRS resource set including the SRS resource. When the time domain transmission configuration of the SRS resource is configured as 'periodic' or 'semi-persistent', the SRS resource transmission periodicity and slot offset (e.g., periodicityAndOffset) may additionally be included in the time domain transmission configuration.

The base station may activate, deactivate, or trigger SRS transmission to the UE via the higher layer signaling including RRC signaling or MAC CE signaling, or the L1 signaling (e.g., DCI). For example, the base station may activate or deactivate periodic SRS transmission to a UE via the higher layer signaling. The base station may instruct the UE, via the higher layer signaling, to activate the SRS resource set with resource Type configured to periodic, and the UE may transmit the SRS resource referenced in the activated SRS resource set. The time-frequency domain resource mapping within the slot of the transmitted SRS resource follows the resource mapping information configured in the SRS resource, and the slot mapping, including the transmission period and slot offset, follows the periodicityAndOffset configured in the SRS resource. In addition, the spatial domain transmission filter applied to the transmitted SRS resource may refer to spatial relation information configured in the SRS resource, or the associated CSI-RS information configured in the SRS resource set including the SRS resource. The UE may transmit the SRS resource within an uplink BWP activated for the periodic SRS resource activated via the higher layer signaling.

For example, the base station may activate or deactivate semi-persistent SRS transmission to a UE via the higher layer signaling. The base station may instruct the UE to activate the SRS resource set via MAC CE signaling, and the UE may transmit the SRS resource referenced in the activated SRS resource set. The SRS resource set activated via the MAC CE signaling may be limited to the SRS resource set where resourceType is configured as semi-persistent. The time-frequency domain resource mapping within the slot of the transmitted SRS resource follows the resource mapping information configured in the SRS resource, and the slot mapping, including the transmission period and slot offset, follows the periodicityAndOffset configured in the SRS resource. In addition, the spatial domain transmission filter applied to the transmitted SRS resource may refer to spatial relation info configured in the SRS resource, or the associated CSI-RS information configured in the SRS resource set including the SRS resource. When the spatial relation info is configured for the SRS resource, the spatial domain transmission filter may be determined by referring to the configuration information on the spatial relation info delivered via the MAC CE signaling that activates the semi-persistent SRS transmission, without following the spatial relation information configured for the SRS resource. The UE may transmit the SRS resource within the uplink BWP activated for the semi-persistent SRS resource activated via the higher layer signaling.

For example, the base station may trigger the aperiodic SRS transmission to the UE via the DCI. The base station may indicate one of the aperiodic SRS resource triggers (aperiodicSRS-ResourceTrigger) via the SRS request field of the DCI. The UE may understand that among the configuration information of the SRS resource set, the SRS resource set including the aperiodic SRS resource trigger indicated via the DCI from the list of aperiodic SRS resource triggers has been triggered. The UE may transmit the SRS resource referenced in the triggered SRS resource set. The time-frequency domain resource mapping within the slot of the transmitted SRS resource follows the resource mapping information configured in the SRS resource. In addition, the slot mapping of the transmitted SRS resource may be determined via the slot offset between the PDCCH including the DCI and the SRS resource, which may refer to the value(s) included in the slot offset set configured in the SRS resource set. Specifically, the slot offset between the PDCCH including the DCI and the SRS resource may apply the value indicated in the time domain resource assignment field of the DCI among the offset value(s) included in the slot offset set configured in the SRS resource set. In addition, the spatial domain transmission filter applied to the transmitted SRS resource may refer to spatial relation info configured in the SRS resource, or the associated CSI-RS information configured in the SRS resource set including the SRS resource. The UE may transmit the SRS resource within the uplink BWP activated for the aperiodic SRS resources triggered via the DCI.

When the base station triggers aperiodic SRS transmission for the UE via DCI, a minimum time interval between the PDCCH carrying the DCI triggering the aperiodic SRS transmission and the SRS to be transmitted may be required so that the UE may apply configuration information for the SRS resource and transmit the SRS. The time interval for the SRS transmission of the UE may be defined as the number of symbols between the last symbol of the PDCCH including the DCI triggering the aperiodic SRS transmission and the first symbol mapped to the first transmitted SRS resource(s). The minimum time interval may be determined by referring to a PUSCH preparation procedure time required for the UE to prepare for the PUSCH transmission. In addition, the minimum time interval may have different values depending on the usage of the SRS resource set including the transmitted SRS resource. For example, the minimum time interval may be determined as N2 symbols defined by considering the UE processing capability according to the UE capability by referring to the PUSCH preparation procedure time of the UE. Additionally, when the usage of the SRS resource set is configured to 'codebook' or 'antennaSwitching' by considering the usage of the SRS resource set including the transmitted SRS resource, the minimum time interval may be configured to N2 symbols, and when the usage of the SRS resource set is configured to 'nonCodebook' or 'beamManagement', the minimum time interval may be configured to N2+14 symbols. The UE transmits the aperiodic SRS when the time interval for the aperiodic SRS transmission is greater than or equal to the minimum time interval, and ignores the DCI triggering the aperiodic SRS when the time interval for the aperiodic SRS transmission is less than the minimum time interval.

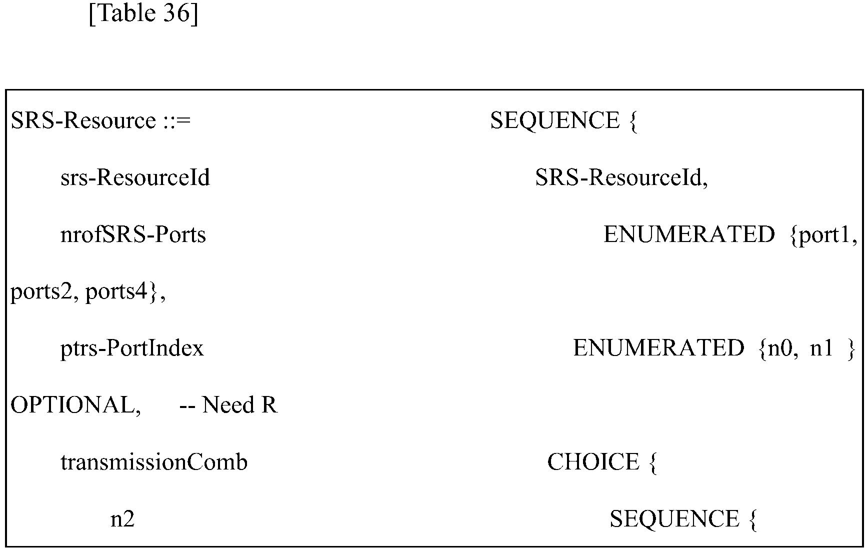

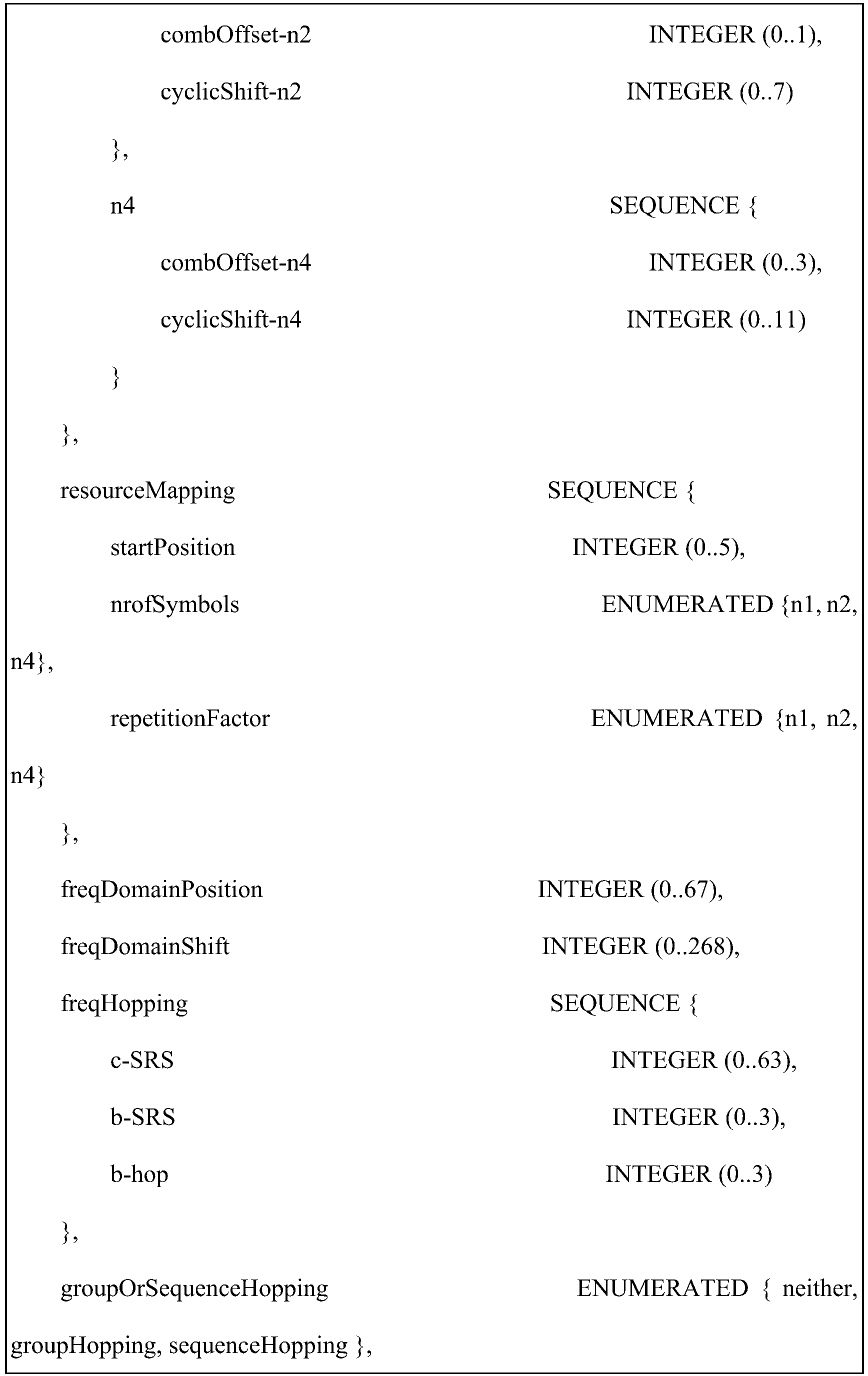

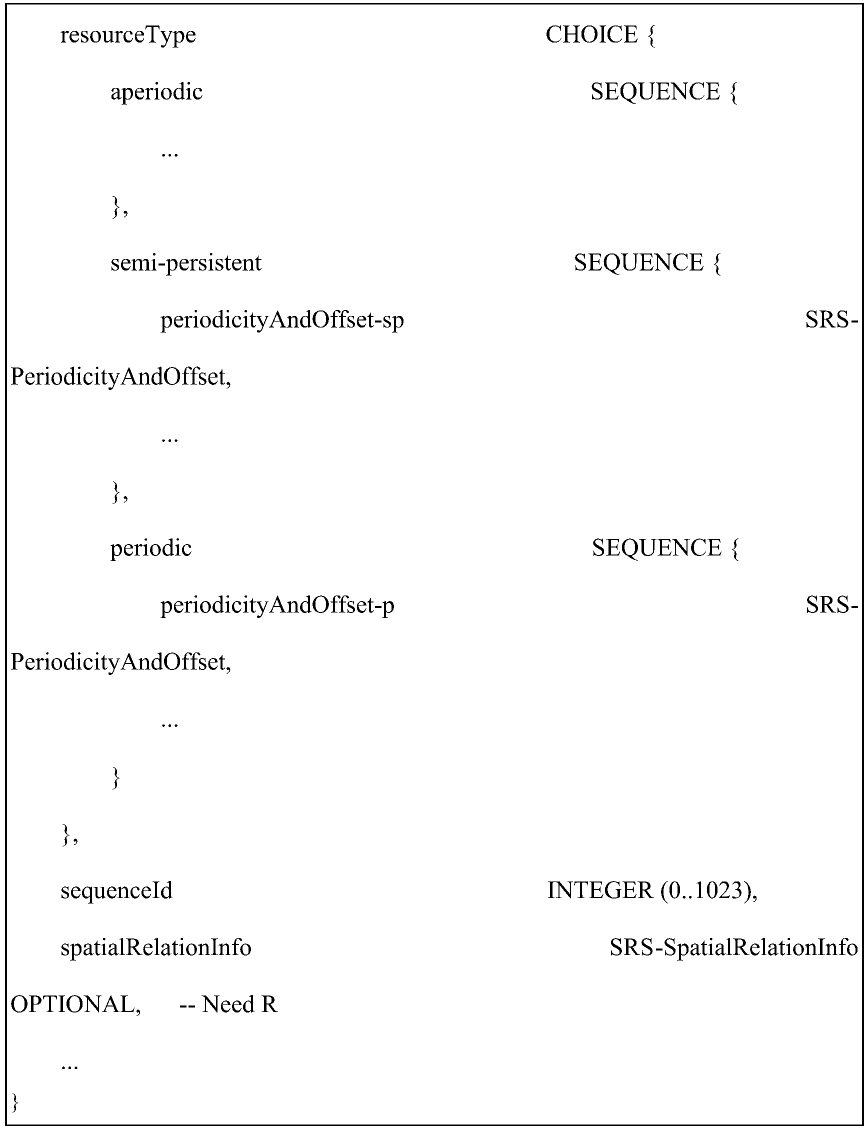

The spatialRelationInfo configuration information in [Table 36] above is intended to apply the beam information of the reference signal to the beam used for the corresponding SRS transmission by referencing a single reference signal. For example, the spatialRelationInfo configuration may include information as shown in [Table 37] below.

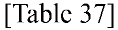

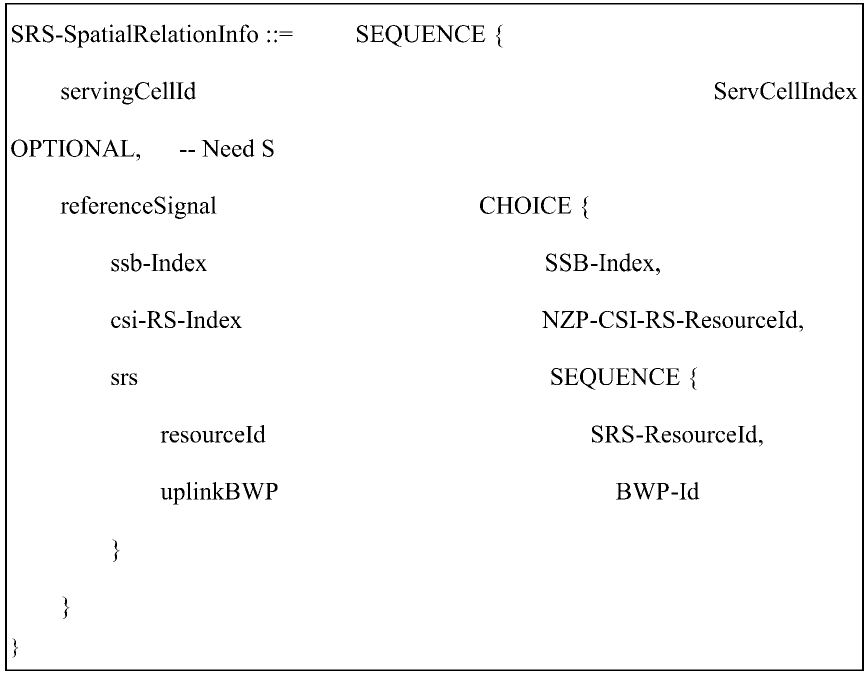

By referring to the spatialRelationInfo configuration above, the index of the reference signal to be referenced to use beam information of a specific reference signal, i.e., the SS/PBCH block index, CSI-RS index, or SRS index may be configured. The higher signaling referenceSignal is configuration information indicating which reference signal beam information is to be used as a reference for the corresponding SRS transmission, and ssb-Index denotes the index of an SS/PBCH block, csi-RS-Index denotes the index of a CSI-RS, and srs denotes the index of an SRS, respectively. When the value of the higher signaling referenceSignal is configured to 'ssb-Index', the UE may apply the receiving beam used during the reception of the SS/PBCH block corresponding to ssb-Index as the transmitting beam for the corresponding SRS transmission. When the value of the higher signaling referenceSignal is configured to 'csi-RS-Index', the UE may apply the receiving beam used during the reception of the CSI-RS corresponding to csi-RS-Index as the transmitting beam for the corresponding SRS transmission. When the value of the higher signaling referenceSignal is configured to 'srs', the UE may apply the transmitting beam used during the transmission of the SRS corresponding to the srs as the transmitting beam for the corresponding SRS transmission.

### [SRS: Antenna switching]

Hereinafter, the SRS for antenna switching will be described.

The SRS transmitted from the UE may be used by the base station to acquire DL channel state information (CSI) information (e.g., to acquire DL CSI). As a specific example, in a single-cell or multi-cell (e.g., carrier aggregation (CA)) situation based on time division duplex (TDD), a base station (BS) may measure the SRS transmitted from the UE after scheduling the transmission of the SRS to a user equipment (UE). In this case, The base station may assume reciprocity between downlink (DL) and uplink (UL) channels, and may consider uplink channel information estimated based on an SRS transmitted by the UE as downlink channel information, and may perform scheduling of A downlink signal/channel for the UE based on the uplink channel information. In this case, the UE may be configured, by the base station, with the usage of the SRS for acquiring the downlink channel information as the antenna switching.

For example, according to the standard (e.g., 3gpp TS38.214), the usage of the SRS may be configured to the base station and/or the UE using the higher layer parameter (e.g., usage of the RRC parameter SRS-ResourceSet). Here, the usage of the SRS may be configured to beam management, codebook transmission, non-codebook transmission, antenna switching, etc.

As described above, when the UE is configured, by the base station, with the usage parameter within the SRS-ResourceSet of higher layer signaling set to 'antennaSwitching', the UE may receive at least one higher layer signaling configuration from the base station according to the reported UE capability. In this case, the UE may report 'supportedSRS-TxPortSwitch' as UE capability, and the value of the supportedSRS-TxPortSwitch parameter may be as follows. In the following description, 'mTnR' may refer to the UE capability to support transmission through m antennas and reception through n antennas.
- 't1r2': UE capability report value indicating that the UE is capable of 1T2R operation
- 't1r1-t1r2': UE capability report value indicating that the UE is capable of 1T1R or 1T2R operation
- 't2r4': UE capability report value indicating that the UE is capable of 2T4R operation
- 't1r4': UE capability report value indicating that the UE is capable of 1T4R operation
- 't1r6': UE capability report value indicating that the UE is capable of 1T6R operation
- 't1r8': UE capability report value indicating that the UE is capable of 1T8R operation
- 't2r6': UE capability report value indicating that the UE is capable of 2T6R operation
- 't2r8': UE capability report value indicating that the UE is capable of 2T8R operation
- 't4r8': UE capability report value indicating that the UE is capable of 4T8R operation
- 't1r1-t1r2-t1r4': UE capability report value indicating that the UE is capable of 1T1R, 1T2R, or 1T4R operation
- 't1r4-t2r4': UE capability report value indicating that the UE is capable of 1T4R or 2T4R operation
- 't1r1-t1r2-t2r2-t2r4': UE capability report value indicating that the UE is capable of 1T1R, 1T2R, 2T2R, or 2T4R operation
- 't1r1-t1r2-t2r2-t1r4-t2r4': UE capability report value indicating that the UE is capable of 1T1R, 1T2R, 2T2R, 1T4R, or 2T4R operation
- 't1r1': UE capability report value indicating that the UE is capable of 1T1R operation
- 't2r2': UE capability report value indicating that the UE is capable of 2T2R operation
- 't1r1-t2r2': UE capability report value indicating that the UE is capable of 1T1R or 2T2R operation
- 't4r4': UE capability report value indicating that the UE is capable of 4T4R operation
- 't1r1-t2r2-t4r4': UE capability report value indicating that the UE is capable of 1T1R, 2T2R, or 4T4R operation

### [1T2R]

For a 1T2R operation of a UE, the UE may be configured, by a base station, with higher layer signaling for at least one combination of the following items, and an operation according to the higher layer signaling may be possible.

- When the UE has reported some or all of the UE capability reports srs-AntennaSwitching2SP-1Periodic-r17 and srs-ExtensionAperiodicSRS-r17
■ If the UE reports only srs-AntennaSwitching2SP-1Periodic-r17,
   ∘ The UE may be configured, by the base station, with up to two SRS resource sets within the SRS-ResourceSet, which is the higher layer signaling, for which the resourceType value is 'semi-persistent' and may be configured, by the base station, with up to one SRS resource set within the SRS-ResourceSet, which is the higher layer signaling, for which the resource Type value is 'periodic', or
   ∘ The UE may be configured, by the base station, with up to two SRS resource sets within the SRS-ResourceSet, which is the higher layer signaling, for which the resourceType values are different.
   ∘ Regarding the above, two SRS resource sets within the SRS-ResourceSet, which is the higher layer signaling, for which the resourceType value is 'semi-persistent', may not be activated simultaneously.
   ∘ Regarding the above, each SRS resource set may include two SRS resources transmitted in different OFDM symbols.
   ∘ Regarding the above, each SRS resource within each SRS resource set may be composed of one SRS port, and the SRS port of each SRS resource within each SRS resource set may be associated with different UE antenna ports.
      - For example, the corresponding SRS resource set may include the first and second SRS resources composed of one SRS port, each SRS port of the first and second SRS resources may be associated with different UE antenna ports, the SRS port of the first SRS resource may be transmitted at a first OFDM symbol position, and the SRS port of the second SRS resource may be transmitted at a second OFDM symbol position. In this case, the first and second OFDM symbol positions are different from each other, but the slot positions may be the same as or different from each other.
■ If the UE reports only srs-ExtensionAperiodicSRS-r17,
   ∘ The UE may be configured, by the base station, with up to two SRS resource sets within SRS-ResourceSet, which is the higher layer signaling, for which the resourceType value is 'aperiodic', and may be configured, by the base station, with up to one SRS resource set within the SRS-ResourceSet, which is the higher layer signaling, for which the resource Type value is 'periodic' or 'semi-persistent', or
   ∘The UE may be configured, by the base station, with up to two SRS resource sets within the SRS-ResourceSet, which is the higher layer signaling, for which the resourceType values are different.
   ∘Regarding the above, if the UE is configured, by the base station, with two SRS resource sets within the SRS-ResourceSet, which is the higher layer signaling, for which the resourceType value is 'aperiodic', each SRS resource within two SRS resource sets may be transmitted at the same or different OFDM symbol positions within two different slots, each SRS resource set may include one SRS resource, each SRS resource within two SRS resource sets may be composed of one SRS port, and the SRS ports of each SRS resource within two SRS resource sets may be associated with different UE antenna ports.

- For example, the first SRS resource set may include the first SRS resource composed of one SRS port, the second SRS resource set may include the second SRS resource composed of one SRS port, each SRS port of the first and second SRS resources may be associated with different UE antenna ports, the SRS port of the first SRS resource may be transmitted at the first OFDM symbol position of the first slot, and the SRS port of the second SRS resource may be transmitted at the second OFDM symbol position of the second slot. In this case, the first and second OFDM symbol positions may be the same as or different from each other within each slot, but the slot positions may be different from each other.

o Regarding the above, if a UE is configured, by a base station, with one SRS resource set within the SRS-ResourceSet, which is the higher layer signaling, for which the resource Type value is 'aperiodic', two SRS resources within the corresponding SRS resource set may be transmitted at different OFDM symbol positions within the same slot, each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position within the first slot, and the SRS port of the second SRS resource may be transmitted at the second OFDM symbol position within the same slot.

o Regarding the above, if a UE is configured, by the base station, with one SRS resource set within the SRS-ResourceSet, which is the higher layer signaling, for which the resourceType value is 'periodic' or 'semi-persistent', two SRS resources within the corresponding SRS resource set may be transmitted at different OFDM symbol positions, each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position within the first slot, and the SRS port of the second SRS resource may be transmitted at the second OFDM symbol position within the same slot.

■ If the UE does not report srs-AntennaSwitching2SP-1Periodicr17, the UE may be configured, by the base station, with up to two (e.g., zero, one, or two) different SRS resource sets within the SRS-ResourceSet, which is the higher layer signaling, for which the resourceType value is 'periodic' or 'semi-persistent'. For example, the UE may be configured, by the base station, with one of the following matters.
   ∘ The SRS resource set within the SRS-ResourceSet, which is the higher layer signaling, for which the resource Type value is 'periodic' or 'semi-persistent', is not configured
   ∘ One SRS resource set within SRS-ResourceSet, which is the higher layer signaling, for which the resourceType value is 'periodic'
   ∘One SRS resource set within SRS-ResourceSet, which is the higher layer signaling, for which the resourceType value is 'semi-persistent'
   ∘One SRS resource set within SRS-ResourceSet, which is the higher layer signaling, for which the resourceType value is 'periodic' and one SRS resource set, for which the resource Type value is 'semi-persistent'
   ∘Regarding the above, two SRS resource sets within the SRS-ResourceSet, which is the higher layer signaling, for which the resourceType value is 'semi-persistent', may not be activated simultaneously.
   ∘Regarding the above, each SRS resource set may include two SRS resources, the corresponding two SRS resources may be transmitted at different OFDM symbol positions, and each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position within the first slot, and the SRS port of the second SRS resource may be transmitted at the second OFDM symbol position within the same slot.

■ If the UE reports srs-AntennaSwitching2SP-1Periodic-r17, the UE may be configured, by the base station, with up to two SRS resource sets within the SRS-ResourceSet, which is the higher layer signaling, for which the resourceType value is 'semi-persistent' and may be configured, by the base station, with up to one SRS resource set within the SRS-ResourceSet, which is the higher layer signaling, for which the resource Type value is 'periodic'.
   ∘ Regarding the above, two SRS resource sets within the SRS-ResourceSet, which is the higher layer signaling, for which the resourceType value is 'semi-persistent', may not be activated simultaneously.
   ∘ Regarding the above, each SRS resource set may include two SRS resources, and the corresponding two SRS resources may be transmitted at different OFDM symbol positions, and each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position, and the SRS port of the second SRS resource may be transmitted at the second OFDM symbol position. In this case, the first and second OFDM symbol positions are different from each other, but the slot positions may be the same as or different from each other.

■ If the UE does not report only srs-ExtensionAperiodicSRS-r17, the UE may be configured, by the base station, with up to one (e.g., zero or one) SRS resource set within the SRS-ResourceSet, which is the higher layer signaling, for which the resourceType value is 'aperiodic'. For example, the UE may be configured, by the base station, with one of the following matters.
o The SRS resource set within the SRS-ResourceSet, which is the higher layer signaling, for which the resource Type value is 'aperiodic', is not configured
o One SRS resource set within SRS-ResourceSet, which is the higher layer signaling, for which the resourceType value is 'aperiodic'
o Regarding the above, if one SRS resource set is configured, each SRS resource set may include two SRS resources, and the corresponding two SRS resources may be transmitted at different OFDM symbol positions within the same slot, each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position within the first slot, and the SRS port of the second SRS resource may be transmitted at the second OFDM symbol position within the same slot.

■ If the UE reports only srs-ExtensionAperiodicSRS-r17, the UE may be configured, by the base station, with up to two (e.g., zero, one, or two) SRS resource sets within the SRS-ResourceSet, which is the higher layer signaling, for which the resource Type value is 'aperiodic'. For example, the UE may be configured, by the base station, with one of the following matters.
   ∘ The SRS resource set within the SRS-ResourceSet, which is the higher layer signaling, for which the resource Type value is 'aperiodic', is not configured
   ∘One SRS resource set within SRS-ResourceSet, which is the higher layer signaling, for which the resource Type value is 'aperiodic'
   ∘Two SRS resource sets within SRS-ResourceSet, which is the higher layer signaling, for which the resource Type value is 'aperiodic'
   ∘Regarding the above, if one SRS resource set is configured, each SRS resource set may include two SRS resources, the corresponding two SRS resources may be transmitted at different OFDM symbol positions within the same slot, each SRS resource within the corresponding SRS resource set may be composed of one SRS port, and the SRS port of each SRS resource may be associated with different UE antenna ports.

- For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position within the first slot, and the SRS port of the second SRS resource may be transmitted at the second OFDM symbol position within the same slot.

∘ Regarding the above, if the UE is composed of two SRS resource sets, each SRS resource within two SRS resource sets may be transmitted at the same or different OFDM symbol positions within two different slots, each SRS resource set may include one SRS resource, each SRS resource within two SRS resource sets may be composed of one SRS port, and the SRS ports of each SRS resource within two SRS resource sets may be associated with different UE antenna ports.

- For example, the first SRS resource set may include the first SRS resource composed of one SRS port, the second SRS resource set may include the second SRS resource composed of one SRS port, each SRS port of the first and second SRS resources may be associated with different UE antenna ports, the SRS port of the first SRS resource may be transmitted at the first OFDM symbol position of the first slot, and the SRS port of the second SRS resource may be transmitted at the second OFDM symbol position of the second slot. In this case, the first and second OFDM symbol positions may be the same as or different from each other within each slot, but the slot positions may be different from each other.

- If the UE does not report all of the UE capability reports srs-AntennaSwitching2SP-1Periodic-r17 and srs-ExtensionAperiodicSRS-r17

■ The UE may be configured, by the base station, with up to two SRS resource sets within the SRS-ResourceSet, which is the higher layer signaling, for which the resourceType values are different.
■ Regarding the above, each SRS resource set may include two SRS resources, and the corresponding two SRS resources may be transmitted at different OFDM symbol positions, and each SRS resource within the corresponding SRS resource set may be composed of one SRS port, and the SRS port of each SRS resource may be associated with different UE antenna ports.
o For example, the corresponding SRS resource set may include the first and second SRS resources composed of one SRS port, each SRS port of the first and second SRS resources may be associated with different UE antenna ports, the SRS port of the first SRS resource may be transmitted at the first OFDM symbol position, and the SRS port of the second SRS resource may be transmitted at the second OFDM symbol position. In this case, the first and second OFDM symbol positions are different from each other, but the slot positions may be the same as or different from each other.

### [2T4R]

For a 2T4R operation of a UE, the UE may be configured, by a base station, with higher layer signaling for at least one combination of the following items, and an operation according to the higher layer signaling may be possible.
- If the UE reports some or all of the UE capability reports srs-AntennaSwitching2SP-1Periodic-r17 and srs-ExtensionAperiodicSRS-r17

■ If the UE reports only srs-AntennaSwitching2SP-1Periodic-r17,
o The UE may be configured, by the base station, with up to two SRS resource sets within the SRS-ResourceSet, which is the higher layer signaling, for which the resourceType value is 'semi-persistent' and may be configured, by the base station, with up to one SRS resource set within the SRS-ResourceSet, which is the higher layer signaling, for which the resource Type value is 'periodic', or
o The UE may be configured, by the base station, with up to two SRS resource sets within the SRS-ResourceSet, which is the higher layer signaling, for which the resourceType values are different.
o Regarding the above, two SRS resource sets within the SRS-ResourceSet, which is the higher layer signaling, for which the resourceType value is 'semi-persistent', may not be activated simultaneously.
o Regarding the above, each SRS resource set may include two SRS resources transmitted in different OFDM symbols.
o Regarding the above, each SRS resource within each SRS resource set may be composed of two SRS ports, and two SRS ports of each SRS resource within each SRS resource set may be associated with different UE antenna ports.

- For example, the corresponding SRS resource set may include the first and second SRS resources composed of one SRS port, two SRS ports of the first and second SRS resources may be associated with different UE antenna ports, two SRS ports of the first SRS resource may be transmitted at the first OFDM symbol position, two SRS ports of the second SRS resource may be transmitted at the second OFDM symbol position, and the first and second OFDM symbol positions may be different from each other within each slot, but may have the same or different slot positions.

■ If the UE reports only srs-ExtensionAperiodicSRS-r17,
o The UE may be configured, by the base station, with up to two SRS resource sets within SRS-ResourceSet, which is the higher layer signaling, for which the resourceType value is 'aperiodic', and may be configured, by the base station, with up to one SRS resource set within the SRS-ResourceSet, which is the higher layer signaling, for which the resourceType value is 'periodic' or 'semi-persistent', or
o The UE may be configured, by the base station, with up to two SRS resource sets within the SRS-ResourceSet, which is the higher layer signaling, for which the resourceType values are different.
o Regarding the above, if the UE is configured, by the base station, with two SRS resource sets within the SRS-ResourceSet which is the higher layer signaling, for which the resourceType value is 'aperiodic', each SRS resource within two SRS resource sets may be transmitted at the same or different OFDM symbol positions within two different slots, each SRS resource set may include one SRS resource, each SRS resource within two SRS resource sets may be composed of two SRS ports, and two SRS ports of each SRS resource within two SRS resource sets may be associated with different UE antenna ports.

- For example, the first SRS resource set may include the first SRS resource composed of two SRS ports, the second SRS resource set may include the second SRS resource composed of two SRS ports, two SRS ports of the first and second SRS resources may be associated with different UE antenna ports, two SRS ports of the first SRS resource may be transmitted at the first OFDM symbol position of the first slot, and two SRS ports of the second SRS resource may be transmitted at the second OFDM symbol position of the second slot. In this case, the first and second OFDM symbol positions may be the same as or different from each other within each slot, but the slot positions may be different from each other.

∘ Regarding the above, if a UE is configured, by a base station, with one SRS resource set within the SRS-ResourceSet, which is the higher layer signaling, for which the resourceType value is 'aperiodic', two SRS resources within the corresponding SRS resource set may be transmitted at different OFDM symbol positions within the same slot, each SRS resource within the corresponding SRS resource set may be composed of two SRS ports, and the SRS port of each SRS resource may be associated with different UE antenna ports.
∘ Regarding the above, if a UE is configured, by the base station, with one SRS resource set within the SRS-ResourceSet, which is the higher layer signaling, for which the resourceType value is 'periodic' or 'semi-persistent', two SRS resources within the corresponding SRS resource set may be transmitted at different OFDM symbol positions, each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position, and two SRS ports of the second SRS resource may be transmitted at the second OFDM symbol position. In this case, the first and second OFDM symbol positions are different from each other, but the slot positions may be the same as or different from each other

■ If the UE does not report srs-AntennaSwitching2SP-1Periodic-r17, the UE may be configured, by the base station, with up to two (e.g., zero, one, or two) different SRS resource sets within the SRS-ResourceSet, which is the higher layer signaling, for which the resourceType value is 'periodic' or 'semi-persistent'. For example, the UE may be configured, by the base station, with one of the following matters.
o The SRS resource set within the SRS-ResourceSet, which is the higher layer signaling, for which the resource Type value is 'periodic' or 'semi-persistent', is not configured
o One SRS resource set within SRS-ResourceSet, which is the higher layer signaling, for which the resource Type value is 'periodic'
o One SRS resource set within SRS-ResourceSet, which is the higher layer signaling, for which the resourceType value is 'semi-persistent'
o One SRS resource set within SRS-ResourceSet, which is the higher layer signaling, for which the resourceType value is 'periodic' and one SRS resource set, for which the resource Type value is 'semi-persistent'
o Regarding the above, two SRS resource sets within the SRS-ResourceSet, which is the higher layer signaling, for which the resourceType value is 'semi-persistent', may not be activated simultaneously.
o Regarding the above, each SRS resource set may include two SRS resources, and the corresponding two SRS resources may be transmitted at different OFDM symbol positions, and each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position, and two SRS ports of the second SRS resource may be transmitted at the second OFDM symbol position. In this case, the first and second OFDM symbol positions are different from each other, but the slot positions may be the same as or different from each other

■ If the UE reports srs-AntennaSwitching2SP-1Periodic-r17, the UE may be configured, by the base station, with up to two SRS resource sets within the SRS-ResourceSet, which is the higher layer signaling, for which the resourceType value is 'semi-persistent' and may be configured, by the base station, with up to one SRS resource set within the SRS-ResourceSet, which is the higher layer signaling, for which the resource Type value is 'periodic'.
o Regarding the above, two SRS resource sets within the SRS-ResourceSet, which is the higher layer signaling, for which the resourceType value is 'semi-persistent', may not be activated simultaneously.
o Regarding the above, each SRS resource set may include two SRS resources, and the corresponding two SRS resources may be transmitted at different OFDM symbol positions, and each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position, and two SRS ports of the second SRS resource may be transmitted at the second OFDM symbol position. In this case, the first and second OFDM symbol positions are different from each other, but the slot positions may be the same as or different from each other

■ If the UE does not report srs-ExtensionAperiodicSRS-r17, the UE may be configured, by the base station, with up to one (e.g., zero or one) SRS resource set within the SRS-ResourceSet, which is the higher layer signaling, for which the resource Type value is 'aperiodic'. For example, the UE may be configured, by the base station, with one of the following matters.
o The SRS resource set within the SRS-ResourceSet, which is the higher layer signaling, for which the resource Type value is 'aperiodic', is not configured
o One SRS resource set within SRS-ResourceSet, which is the higher layer signaling, for which the resource Type value is 'aperiodic'
o Regarding the above, if one SRS resource set is configured, each SRS resource set may include two SRS resources, the corresponding two SRS resources may be transmitted at different OFDM symbol positions within the same slot, each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position within the first slot, and two SRS ports of the second SRS resource may be transmitted at the second OFDM symbol position within the same slot.

■ If the UE reports srs-ExtensionAperiodicSRS-r17, the UE may be configured, by the base station, with up to two (e.g., zero, one, or two) SRS resource sets within the SRS-ResourceSet, which is the higher layer signaling, for which the resourceType value is 'aperiodic'. For example, the UE may be configured, by the base station, with one of the following matters.
o The SRS resource set within the SRS-ResourceSet, which is the higher layer signaling, for which the resource Type value is 'aperiodic', is not configured
o One SRS resource set within SRS-ResourceSet, which is the higher layer signaling, for which the resource Type value is 'aperiodic'
o Two SRS resource sets within SRS-ResourceSet, which is the higher layer signaling, for which the resource Type value is 'aperiodic'
o Regarding the above, if one SRS resource set is configured, each SRS resource set may include two SRS resources, the corresponding two SRS resources may be transmitted at different OFDM symbol positions within the same slot, each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position within the first slot, and two SRS ports of the second SRS resource may be transmitted at the second OFDM symbol position within the same slot.

o Regarding the above, if two SRS resource sets are configured, each SRS resource within two SRS resource sets may be transmitted at the same or different OFDM symbol positions within two different slots, each SRS resource set may include one SRS resource, each SRS resource within two SRS resource sets may be composed of two SRS ports, and two SRS ports of each SRS resource within two SRS resource sets may be associated with different UE antenna ports.

- For example, the first SRS resource set may include the first SRS resource composed of two SRS ports, the second SRS resource set may include the second SRS resource composed of two SRS ports, two SRS ports of the first and second SRS resources may be associated with different UE antenna ports, two SRS ports of the first SRS resource may be transmitted at the first OFDM symbol position of the first slot, and two SRS ports of the second SRS resource may be transmitted at the second OFDM symbol position of the second slot. In this case, the first and second OFDM symbol positions may be the same as or different from each other within each slot, but the slot positions may be different from each other.

- If the UE does not report all of the UE capability reports srs-AntennaSwitching2SP-1Periodic-r17 and srs-ExtensionAperiodicSRS-r17

■ The UE may be configured, by the base station, with up to two SRS resource sets within the SRS-ResourceSet, which is the higher layer signaling, for which the resourceType values are different.
o Regarding the above, each SRS resource set may include two SRS resources, and the corresponding two SRS resources may be transmitted at different OFDM symbol positions, and each SRS resource within the corresponding SRS resource set may be composed of two SRS ports, and two SRS ports of each SRS resource may be associated with different UE antenna ports.

- For example, the corresponding SRS resource set may include the first and second SRS resources composed of two SRS ports, two SRS ports of the first and second SRS resources may be associated with different UE antenna ports, two SRS ports of the first SRS resource may be transmitted at the first OFDM symbol position, and two SRS ports of the second SRS resource may be transmitted at the second OFDM symbol position. In this case, the first and second OFDM symbol positions are different from each other, but the slot positions may be the same as or different from each other

### [1T4R]

For a 1T4R operation of a UE, the UE may be configured, by a base station, with higher layer signaling for at least one combination of the following items, and an operation according to the higher layer signaling may be possible.
- If the UE reports some or all of the UE capability reports srs-AntennaSwitching2SP-1Periodic-r17, srs-ExtensionAperiodicSRS-r17, and srs-OneAP-SRS-r17

■ If the UE does not report srs-AntennaSwitching2SP-1Periodic-r17, the UE may be configured, by the base station, with up to one (e.g., zero or one) SRS resource set within the SRS-ResourceSet, which is the higher layer signaling, for which the resource Type value is 'periodic' or 'semi-persistent'. For example, the UE may be configured, by the base station, with one of the following matters.
o The SRS resource set within the SRS-ResourceSet, which is the higher layer signaling, for which the resource Type value is 'periodic' or 'semi-persistent', is not configured
o One SRS resource set within SRS-ResourceSet, which is the higher layer signaling, for which the resourceType value is 'periodic'
o One SRS resource set within SRS-ResourceSet, which is the higher layer signaling, for which the resourceType value is 'semi-persistent'
o Regarding the above, each SRS resource set may include four SRS resources, and the corresponding four SRS resources may be transmitted at different OFDM symbol positions, and each SRS resource within the corresponding SRS resource set may be composed of one SRS port, and one SRS port of each SRS resource may be associated with different UE antenna ports.

- For example, the corresponding SRS resource set may include the first to fourth SRS resources composed of one SRS port, one SRS port of the first to fourth SRS resources may be associated with different UE antenna ports, one SRS port of the first to fourth SRS resources may be transmitted at the first to fourth OFDM symbol positions, and the first to fourth OFDM symbol positions may be different from each other, but the slot position may be the same as or different from each other.

■ If the UE reports srs-AntennaSwitching2SP-1Periodic-r17, the UE may be configured, by the base station, with up to two SRS resource sets within the SRS-ResourceSet, which is the higher layer signaling, for which the resourceType value is 'semi-persistent' and may be configured, by the base station, with up to one SRS resource set within the SRS-ResourceSet, which is the higher layer signaling, for which the resourceType value is 'periodic'.
o Regarding the above, two SRS resource sets within the SRS-ResourceSet, which is the higher layer signaling, for which the resourceType value is 'semi-persistent', may not be activated simultaneously.
o Regarding the above, each SRS resource set may include four SRS resources, and the corresponding four SRS resources may be transmitted at different OFDM symbol positions, and each SRS resource within the corresponding SRS resource set may be composed of one SRS port, and one SRS port of each SRS resource may be associated with different UE antenna ports.

- For example, the corresponding SRS resource set may include the first to fourth SRS resources composed of one SRS port, one SRS port of the first to fourth SRS resources may be associated with different UE antenna ports, one SRS port of the first to fourth SRS resources may be transmitted at the first to fourth OFDM symbol positions, and the first to fourth OFDM symbol positions may be different from each other, but the slot position may be the same as or different from each other.

■ Depending on whether the UE reports any one of srs-ExtensionAperiodicSRS-r17 and srs-OneAP-SRS-r17, which are the UE capability report, the following higher layer signaling configuration from the base station and UE operation may be expected.
o If the UE does not report both srs-ExtensionAperiodicSRS-r17 and srs-OneAP-SRS-r17, the UE may be configured, by the base station, with zero or two SRS resource sets within the SRS-ResourceSet, which is the higher layer signaling, for which the resourceType value is 'aperiodic'.
o If the UE reports both srs-ExtensionAperiodicSRS-r17 and srs-OneAP-SRS-r17, the UE may be configured, by the base station, with zero, one, two, or four SRS resource sets within the SRS-ResourceSet, which is the higher layer signaling, for which the resourceType value is 'aperiodic'.
o If the UE reports only srs-ExtensionAperiodicSRS-r17 of srs-ExtensionAperiodicSRS-r17 and srs-OneAP-SRS-r17, the UE may be configured, by the base station, with zero, two, or four SRS resource sets within the SRS-ResourceSet, which is the higher layer signaling, for which the resource Type value is 'aperiodic'.
o If the UE reports only srs-OneAP-SRS-r17 of srs-ExtensionAperiodicSRS-r17 and srs-OneAP-SRS-r17, the UE may be configured, by the base station, with zero, one, or two SRS resource sets within the SRS-ResourceSet, which is the higher layer signaling, for which the resourceType value is 'aperiodic'.
o Regarding the above, if one SRS resource set is configured, each SRS resource set may include four SRS resources, and the corresponding four SRS resources may be transmitted at different OFDM symbol positions within the same slot, each SRS resource within the corresponding SRS resource set may be composed of one SRS port, and one SRS port of each SRS resource may be associated with different UE antenna ports.

- For example, the corresponding SRS resource set may include the first to fourth SRS resources composed of one SRS port, one SRS port of the first to fourth SRS resources may be associated with different UE antenna ports, one SRS port of the first to fourth SRS resources may be transmitted at the first to fourth OFDM symbol positions within the same slot, and the first to fourth OFDM symbol positions may be different from each other.

∘ Regarding the above, if two SRS resources sets are configured,

- Each SRS resource set may include two SRS resources, or the first SRS resource set may have one SRS resource and the second SRS resource set may have three SRS resources.
- Each SRS resource within each SRS resource set may be transmitted at different OFDM symbol positions within the same slot, and the SRS transmission for each SRS resource set may be performed within different slots. When transmitting SRS between different SRS resources of different SRS resource sets, transmission may be performed at the same or different OFDM symbol positions, but the slot positions may be different.
- Each SRS resource may be composed of one SRS port, and one SRS port of each SRS resource may be associated with different UE antenna ports.
- For example, the first SRS resource set may include the first and second SRS resource each composed of one SRS port, and the second SRS resource set may include the third and fourth SRS resources each composed of one SRS port. One SRS port of the first to fourth SRS resources may be associated with different UE antenna ports. One SRS port of each of the first and second SRS resources may be transmitted at the first and second OFDM symbol positions within any same slot, and the first and second OFDM symbol positions may be different from each other. One SRS port of each of the third and fourth SRS resources may be transmitted at the third and fourth OFDM symbol position within a different slot from where the first and second SRS resources are transmitted, and the third and fourth OFDM symbol positions may be different from each other. In this case, the first OFDM symbol position and the third and fourth OFDM symbol positions may be the same as or different from each other, and similarly, the second OFDM symbol position may also be the same as or different from the third and fourth OFDM symbol positions.
- As another example, the first SRS resource set may include the first SRS resource composed of one SRS port, and the second SRS resource set may include the second and fourth SRS resources each composed of one SRS port. One SRS port of the first to fourth SRS resources may be associated with different UE antenna ports. One SRS port of the first SRS resource may be transmitted at the first OFDM symbol position within any slot. One SRS port of each of the second and fourth SRS resources may be transmitted at the second to fourth OFDM symbol positions within a different slot from where the first SRS resource is transmitted, and the second and fourth OFDM symbol positions may be different from each other. In this case, the first OFDM symbol position and the second to fourth OFDM symbol positions may be the same as or different from each other.

∘ Regarding the above, if four SRS resource sets are configured, each SRS resource set may include one SRS resource, and the corresponding four SRS resources may be transmitted at the same or different OFDM symbol positions within each slot, and the SRS transmission for each SRS resource set may be performed within different slots. Each SRS resource within the corresponding SRS resource set may be composed of one SRS port, and one SRS port of each SRS resource may be associated with different UE antenna ports.

- For example, each of the first to fourth SRS resource sets may include the first to fourth SRS resources (i.e., one SRS resource is included within one SRS resource set), one SRS port of the first to fourth SRS resources may be associated with different UE antenna ports, and one SRS port of the first to fourth SRS resources may be transmitted at the first to fourth OFDM symbol positions within different slots, and the first to fourth OFDM symbol positions within each slot may be the same as or different from each other, but the slot positions may be different from each other.

- If the UE does not report all of srs-AntennaSwitching2SP-1Periodic-r17, srs-ExtensionAperiodicSRS-r17, and srs-OneAP-SRS-r17, which are UE capability reports, that is, if the UE does not report all three UE capabilities.

■ The UE may be configured, by the base station, with up to one (i.e., zero or one) SRS resource set within the SRS-ResourceSet, which is the higher layer signaling, for which the resourceType value is 'periodic' or 'semi-persistent'.
o Regarding the above, each SRS resource set may include four SRS resources, and the corresponding four SRS resources may be transmitted at different OFDM symbol positions, and each SRS resource within the corresponding SRS resource set may be composed of one SRS port, and one SRS port of each SRS resource may be associated with different UE antenna ports.

- For example, the corresponding SRS resource set may include the first to fourth SRS resources composed of one SRS port, one SRS port of the first to fourth SRS resources may be associated with different UE antenna ports, one SRS port of the first to fourth SRS resources may be transmitted at the first to fourth OFDM symbol positions, and the first to fourth OFDM symbol positions may be different from each other, but the slot position may be the same as or different from each other.

■ The UE may be configured, by the base station, with zero or two SRS resource sets within the SRS-ResourceSet, which is the higher layer signaling, for which the resourceType value is 'aperiodic'. If two SRS resource sets are configured, some or all of the following matters may be considered:
∘ Each SRS resource set may include two SRS resources, or the first SRS resource set may have one SRS resource and the second SRS resource set may have three SRS resources.
• Each SRS resource within each SRS resource set may be transmitted at different OFDM symbol positions within the same slot, and the SRS transmission for each SRS resource set may be performed within different slots. When transmitting SRS between different SRS resources of different SRS resource sets, transmission may be performed at the same or different OFDM symbol positions, but the slot positions may be different.
• Each SRS resource may be composed of one SRS port, and one SRS port of each SRS resource may be associated with different UE antenna ports.
• For example, the first SRS resource set may include the first and second SRS resource each composed of one SRS port, and the second SRS resource set may include the third and fourth SRS resources each composed of one SRS port. One SRS port of the first to fourth SRS resources may be associated with different UE antenna ports. One SRS port of each of the first and second SRS resources may be transmitted at the first and second OFDM symbol positions within any same slot, and the first and second OFDM symbol positions may be different from each other. One SRS port of each of the third and fourth SRS resources may be transmitted at the third and fourth OFDM symbol positions within a different slot from where the first and second SRS resources are transmitted, and the third and fourth OFDM symbol positions may be different from each other. In this case, the first OFDM symbol position and the third and fourth OFDM symbol positions may be the same as or different from each other, and similarly, the second OFDM symbol position may also be the same as or different from the third and fourth OFDM symbol positions.
• As another example, the first SRS resource set may include the first SRS resource composed of one SRS port, and the second SRS resource set may include the second to fourth SRS resources each composed of one SRS port. One SRS port of the first to fourth SRS resources may be associated with different UE antenna ports. One SRS port of the first SRS resource may be transmitted at the first OFDM symbol position within any slot. One SRS port of each of the second to fourth SRS resources may be transmitted at the second to fourth OFDM symbol positions within a different slot from where the first SRS resource is transmitted, and the second and fourth OFDM symbol positions may be different from each other. In this case, the first OFDM symbol position and the second to fourth OFDM symbol positions may be the same as or different from each other.

- Regarding the above, if the plurality of SRS resource sets are configured (e.g., if two or four SRS resource sets are configured)

■ The UE may expect that values of each of the p0, alpha, pathlossReferenceRS, and srs-PowerControlAdjustmentStates, which are power control parameters that may be configured by the base station via higher layer signaling within each SRS resource set, are configured to the same value for all SRS resource sets. In other words, it may be expected that all of the plurality of SRS resource sets have the same power control parameters. Such constraints may be described later as [power control parameter constraints].
o The [power control parameter constraints] may be applied only to the SRS resource sets for which the UE is configured, by the base station, within the SRS-ResourceSet, which is the higher layer signaling, for which the resource Type value is configured as 'aperiodic'.
o The [power control parameter constraints] may be applied to SRS resource sets in which the UE is configured, by base station, within the SRS-ResourceSet, which is the higher layer signaling, for which the resource Type value is configured as 'periodic', 'semi-persistent', or 'aperiodic'.
■ The UE may expect that a value of the aperiodicSRS-ResourceTrigger, which is the higher layer signaling from the base station, or a value of one entry within the AperiodicSRS-ResourceTriggerList, which is the higher layer signaling, is configured to the same value for all SRS resource sets. Such constraints may be described later as [aperiodic SRS trigger constraints].
o In this case, aperiodicSRS-ResourceTrigger, which is the higher layer signaling configured within the SRS resource set by the base station, refers to aperiodic SRS trigger state information, if the UE receives an aperiodic SRS trigger for a specific aperiodic SRS trigger state from the base station via the DCI, and the value configured for the aperiodicSRS-ResourceTrigger, which is the higher layer signaling, is the aperiodic SRS trigger state indicated by the corresponding DCI, the UE may perform an aperiodic SRS transmission for the corresponding SRS resource set.
o Similarly, AperiodicSRS-ResourceTriggerList, which is the higher layer signaling configured within the SRS resource set by the base station, includes a plurality of pieces of aperiodic SRS trigger state information, if the UE receives an aperiodic SRS trigger for a specific aperiodic SRS trigger state from the base station via the DCI and includes the aperiodic SRS trigger state indicated by the corresponding DCI among the plurality of values configured for the AperiodicSRS-ResourceTriggerList, which is the higher layer signaling, the UE may perform the aperiodic SRS transmission for the corresponding SRS resource set.
o While aperiodicSRS-ResourceTrigger, which is higher layer signaling, enables the corresponding SRS resource set to be included in one aperiodic SRS trigger state, AperiodicSRS-ResourceTriggerList, which is higher layer signaling, enables the corresponding SRS resource set to be included in multiple aperiodic SRS trigger states, thereby increasing the likelihood that the corresponding SRS resource set is triggered by the base station.
o The [aperiodic SRS trigger constraints] may be applied only to the SRS resource sets for which the UE is configured, by the base station, within the SRS-ResourceSet, which is the higher layer signaling, for which the resourceType value is configured as 'aperiodic'.
■ The UE may expect that a value of slotOffset, which is the higher layer signaling within each SRS resource set configured by the base station, is different. Such constraints may be described later as [slot offset matters].
o The [slot offset matters] may be applied only to the SRS resource sets for which the UE is configured, by the base station, within the SRS-ResourceSet, which is the higher layer signaling, for which the resource Type value is configured as 'aperiodic'.

### [1T1R, 2T2R, 4T4R]

For 1T1R, 2T2R, and 4T4R operations of a UE, the UE may be configured, by a base station, with higher layer signaling for at least one combination of the following items, and an operation according to the higher layer signaling may be possible.
- If the UE does not report srs-AntennaSwitching2SP-1Periodic-r17, which is the UE capability report, the UE may be configured, by the base station, with up to two SRS resource sets.
- If the UE reports srs-AntennaSwitching2SP-1Periodic-r17 which is the UE capability report, the UE may receive, from the base station, the higher layer signaling configuration as follows.

■ Two SRS resource sets within the SRS-ResourceSet, which is the higher layer signaling, for which the resource Type value is 'semi-persistent', and one SRS resource set within the SRS-ResourceSet, which is the higher layer signaling, for which the resource Type value is 'periodic'.
∘ Regarding the above, two SRS resource sets within the SRS-ResourceSet, which is the higher layer signaling, for which the resourceType value is 'semi-persistent', may not be activated simultaneously.
■ Up to two SRS resource sets

- Each SRS resource set includes one SRS resource, and for 1T1R, 2T2R, and 4T4R, the number of SRS ports configured for each SRS resource may be one, two, and four, respectively.
- For the cases of 1T1R, 2T2R, and 4T4R, the UE may not expect that the SRS transmissions for two or more SRS resource sets, for which the usage in the higher layer signaling is configured to 'antennaSwitching', are configured or triggered at the same OFDM symbol position.

### [1T6R]

For a 1T6R operation of a UE, the UE may be configured, by a base station, with higher layer signaling for at least one combination of the following items, and an operation according to the higher layer signaling may be possible.
- The UE may be configured, by the base station, with up to one (i.e., zero or one) SRS resource set within the SRS-ResourceSet, which is the higher layer signaling, for which the resourceType value is 'periodic', one SRS resource set may include six SRS resources, each SRS resource may be composed of one SRS port, each SRS resource may be transmitted at different OFDM symbol positions within the same or different slots, and one SRS port of each SRS resource may be associated with different UE antenna ports.
- The UE may receive, from the base station, a configuration for the SRS resource set within the SRS-ResourceSet, which is the higher layer signaling, for which the resourceType value is 'semi-persistent' as follows.

■ If the UE does not report srs-AntennaSwitching2SP-1Periodic-r17 which is the UE capability report, the UE may be configured, by the base station, with up to one (i.e., zero or one) SRS resource set within the SRS-ResourceSet, which is the higher layer signaling, for which the resource Type value is 'semi-persistent'.
■ If the UE reports srs-AntennaSwitching2SP-1Periodic-r17 which is the UE capability report, the UE may be configured, by the base station, with up to two (i.e., zero, one, or two) SRS resource sets within the SRS-ResourceSet, which is the higher layer signaling, for which the resource Type value is 'semi-persistent' and two SRS resource sets within the SRS-ResourceSet, which is the higher layer signaling, for which the resourceType value is 'semi-persistent', may not be activated simultaneously.
■ One SRS resource set may include six SRS resources, each SRS resource may be composed of one SRS port, each SRS resource may be transmitted at different OFDM symbol positions within the same or different slots, and one SRS port of each SRS resource may be associated with different UE antenna ports.

- The UE may be configured, by the base station, with up to three (i.e., zero, one, two, or three) SRS resource sets within the SRS-ResourceSet, which is the higher layer signaling, for which the resource Type value is 'aperiodic'.

■ If one SRS resource set is configured, six SRS resources may be included, each SRS resource may be composed of one SRS port, each SRS resource may be transmitted at different OFDM symbol positions within the same slot, and one SRS port of each SRS resource may be associated with different UE antenna ports.
■ If two SRS resource sets are configured, a total of six SRS resources may be divided and included in two SRS resource sets, each SRS resource may be composed of one SRS port, all SRS resources within each SRS resource set may be transmitted at different OFDM symbol positions within the same slot, the SRS transmission for different SRS resource sets may be performed at the same or different OFDM symbol positions within different slots, and one SRS port of each SRS resource may be associated with different UE antenna ports.
∘ For example, the UE may include the first to third SRS resources within the first SRS resource set and the fourth to sixth SRS resources within the second SRS resource set. The transmission for the first to third SRS resources within the first SRS resource set may be performed at the first to third OFDM symbol positions in the first slot, and the first to third OFDM symbol positions may be different from each other. The transmission for the fourth to sixth SRS resources within the second SRS resource set may be performed at the fourth to sixth OFDM symbol positions in the second slot, and the fourth to sixth OFDM symbol positions may be different from each other. In this case, the first and second slot positions may differ from each other, and the first to third OFDM symbol positions and the fourth to sixth OFDM symbol positions may be the same as or different from each other.
∘ As another example, the case where the first and second SRS resource sets each include one SRS resource (e.g., the first SRS resource) and five SRS resources (e.g., the second to sixth SRS resources) are included may be possible, and other combinations may not be excluded.
■ If three SRS resource sets are configured, a total of six SRS resources may be divided and included in three SRS resource sets, each SRS resource may be composed of one SRS port, all SRS resources within each SRS resource set may be transmitted at different OFDM symbol positions within the same slot, the SRS transmission for different SRS resource sets may be performed at the same or different OFDM symbol positions within different slots, and one SRS port of each SRS resource may be associated with different UE antenna ports.
∘ For example, the UE may include the first and second SRS resources within the first SRS resource set, the third and fourth SRS resources within the second SRS resource set, and the fifth and sixth SRS resources within the third SRS resource set. The transmission for the first and second SRS resources within the first SRS resource set may be performed at the first and second OFDM symbol positions in the first slot, and the first and second OFDM symbol positions may be different from each other. The transmission for the third and fourth SRS resources within the second SRS resource set may be performed at the third and fourth OFDM symbol positions in the second slot, and the third and fourth OFDM symbol positions may be different from each other. The transmission for the fifth and sixth SRS resources within the third SRS resource set may be performed at the fifth and sixth OFDM symbol positions in the third slot, and the fifth and sixth OFDM symbol positions may be different from each other. In this case, the first, second, and third slot positions may be different from each other, and the first and second OFDM symbol positions, the third and fourth OFDM symbol positions, and the fifth and sixth OFDM symbol positions may be the same as or different from each other.
∘ As another example, the case where the first, second, and third SRS resource sets each include three SRS resources (e.g., the first to third SRS resources), two SRS resources (e.g., the fourth and fifth SRS resources), and one SRS resource (e.g., the sixth SRS resource) are included may be possible, and other combinations may not be excluded.

### [1T8R]

For a 1T8R operation of a UE, the UE may be configured, by a base station, with higher layer signaling for at least one combination of the following items, and an operation according to the higher layer signaling may be possible.
- The UE may be configured, by the base station, with up to one (i.e., zero or one) SRS resource set within the SRS-ResourceSet, which is the higher layer signaling, for which the resourceType value is 'periodic', one SRS resource set may include eight SRS resources, each SRS resource may be composed of one SRS port, each SRS resource may be transmitted at different OFDM symbol positions within the same or different slots, and one SRS port of each SRS resource may be associated with different UE antenna ports.
- The UE may receive, from the base station, a configuration for the SRS resource set within the SRS-ResourceSet, which is the higher layer signaling, for which the resourceType value is 'semi-persistent' as follows.

■ If the UE does not report srs-AntennaSwitching2SP-1Periodic-r17 that is the UE capability report, the UE may be configured, by the base station, with up to one (i.e., zero or one) SRS resource set within the SRS-ResourceSet, which is the higher layer signaling, for which the resource Type value is 'semi-persistent'.
■ If the UE reports srs-AntennaSwitching2SP-1Periodic-r17 which is the UE capability report, the UE may be configured, by the base station, with up to two (i.e., zero, one, or two) SRS resource sets within the SRS-ResourceSet, which is the higher layer signaling, for which the resourceType value is 'semi-persistent' and two SRS resource sets within the SRS-ResourceSet, which is the higher layer signaling, for which the resourceType value is 'semi-persistent', may not be activated simultaneously.
■ One SRS resource set may include eight SRS resources, each SRS resource may be composed of one SRS port, each SRS resource may be transmitted at different OFDM symbol positions within the same or different slots, and one SRS port of each SRS resource may be associated with different UE antenna ports.

- The UE may be configured, by the base station, with zero, two, three, or four SRS resource sets within the SRS-ResourceSet, which is the higher layer signaling, for which the resourceType value is 'aperiodic'.

■ If two SRS resource sets are configured, a total of eight SRS resources may be divided and included in two SRS resource sets, each SRS resource may be composed of one SRS port, all SRS resources within each SRS resource set may be transmitted at different OFDM symbol positions within the same slot, the SRS transmission for different SRS resource sets may be performed at the same or different OFDM symbol positions within different slots, and one SRS port of each SRS resource may be associated with different UE antenna ports.
∘ For example, the UE may include the first to fourth SRS resources within the first SRS resource set and the fifth to eighth SRS resources within the second SRS resource set. The transmission for the first to fourth SRS resources within the first SRS resource set may be performed at the first to fourth OFDM symbol positions in the first slot, and the first to fourth OFDM symbol positions may be different from each other. The transmission for the fifth to eighth SRS resources within the second SRS resource set may be performed at the fifth to eighth OFDM symbol positions in the second slot, and the fifth to eighth OFDM symbol positions may be different from each other. In this case, the first and second slot positions may differ from each other, and the first to fourth OFDM symbol positions and the fifth to eighth OFDM symbol positions may be the same as or different from each other.
∘ As another example, the case where the first and second SRS resource sets each include one SRS resource (e.g., the first SRS resource) and seven SRS resources (e.g., the second to eighth SRS resources) are included may be possible, and other combinations may not be excluded.
■ If three SRS resource sets are configured, a total of eight SRS resources may be divided and included in three SRS resource sets, each SRS resource may be composed of one SRS port, all SRS resources within each SRS resource set may be transmitted at different OFDM symbol positions within the same slot, the SRS transmission for different SRS resource sets may be performed at the same or different OFDM symbol positions within different slots, and one SRS port of each SRS resource may be associated with different UE antenna ports.
∘ For example, the UE may include the first to third SRS resources within the first SRS resource set, the fourth to sixth SRS resources within the second SRS resource set, and the seventh and eighth SRS resources within the third SRS resource set. The transmission for the first to third SRS resources within the first SRS resource set may be performed at the first to third OFDM symbol positions in the first slot, and the first to third OFDM symbol positions may be different from each other. The transmission for the fourth to sixth SRS resources within the second SRS resource set may be performed at the fourth to sixth OFDM symbol positions in the second slot, and the fourth to sixth OFDM symbol positions may be different from each other. The transmission for the seventh and eighth SRS resources within the third SRS resource set may be performed at the seventh and eighth OFDM symbol positions in the third slot, and the seventh and eighth OFDM symbol positions may be different from each other. In this case, the first, second, and third slot positions may be different from each other, and the first to third OFDM symbol positions, the fourth to sixth OFDM symbol positions, and the seventh and eighth OFDM symbol positions may be the same as or different from each other.
∘ As another example, the case where the first, second, and third SRS resource sets each include four SRS resources (e.g., the first to fourth SRS resources), two SRS resources (e.g., the fifth and sixth SRS resources), and two SRS resources (e.g., the seventh and eighth SRS resources) are included may be possible, and other combinations may not be excluded.
■ If four SRS resource sets are configured, a total of eight SRS resources may be divided and included in four SRS resource sets, each SRS resource may be composed of one SRS port, all SRS resources within each SRS resource set may be transmitted at different OFDM symbol positions within the same slot, the SRS transmission for different SRS resource sets may be performed at the same or different OFDM symbol positions within different slots, and one SRS port of each SRS resource may be associated with different UE antenna ports.
∘ For example, the UE may include the first and second SRS resources within the first SRS resource set, the third and fourth SRS resources within the second SRS resource set, the fifth and sixth SRS resources within the third SRS resource set, and the seventh and eighth SRS resources within the fourth SRS resource set. The transmission for the first and second SRS resources within the first SRS resource set may be performed at the first and second OFDM symbol positions in the first slot, and the first and second OFDM symbol positions may be different from each other. The transmission for the third and fourth SRS resources within the second SRS resource set may be performed at the third and fourth OFDM symbol positions in the second slot, and the third and fourth OFDM symbol positions may be different from each other. The transmission for the fifth and sixth SRS resources within the third SRS resource set may be performed at the fifth and sixth OFDM symbol positions in the third slot, and the fifth and sixth OFDM symbol positions may be different from each other. The transmission for the seventh and eighth SRS resources within the fourth SRS resource set may be performed at the seventh and eighth OFDM symbol positions in the fourth slot, and the seventh and eighth OFDM symbol positions may be different from each other. In this case, the first to fourth slot positions may be different from each other, and the first and second OFDM symbol positions, the third and fourth OFDM symbol positions, the fifth and sixth OFDM symbol positions, and the seventh and eighth OFDM symbol positions may be the same as or different from each other.
∘ As another example, the case where the first, second, third, and fourth SRS resource sets each include three SRS resources (e.g., the first to third SRS resources), two SRS resources (e.g., the fourth and fifth SRS resources), two SRS resources (e.g., the sixth and seventh SRS resources) and one SRS resource (e.g., the eighth SRS resource) are included may be possible, and other combinations may not be excluded.

### [2T6R]

For a 2T6R operation of a UE, the UE may be configured, by a base station, with higher layer signaling for at least one combination of the following items, and an operation according to the higher layer signaling may be possible.
- The UE may be configured, by the base station, with up to one (i.e., zero or one) SRS resource set within the SRS-ResourceSet, which is the higher layer signaling, for which the resourceType value is 'periodic', one SRS resource set may include three SRS resources, each SRS resource may be composed of two SRS ports, each SRS resource may be transmitted at different OFDM symbol positions within the same or different slots, and two SRS ports of each SRS resource may be associated with different UE antenna ports.
- The UE may receive, from the base station, a configuration for the SRS resource set within the SRS-ResourceSet, which is the higher layer signaling, for which the resource Type value is 'semi-persistent' as follows.

■ If the UE does not report srs-AntennaSwitching2SP-1Periodic-r17 that is the UE capability report, the UE may be configured, by the base station, with up to one (i.e., zero or one) SRS resource set within the SRS-ResourceSet, which is the higher layer signaling, for which the resource Type value is 'semi-persistent'.
■ If the UE reports srs-AntennaSwitching2SP-1Periodic-r17 which is the UE capability report, the UE may be configured, by the base station, with up to two (i.e., zero, one, or two) SRS resource sets within the SRS-ResourceSet, which is the higher layer signaling, for which the resource Type value is 'semi-persistent' and two SRS resource sets within the SRS-ResourceSet, which is the higher layer signaling, for which the resourceType value is 'semi-persistent', may not be activated simultaneously.
■ One SRS resource set may include three SRS resources, each SRS resource may be composed of two SRS ports, each SRS resource may be transmitted at different OFDM symbol positions within the same or different slots, and two SRS ports of each SRS resource may be associated with different UE antenna ports.

- The UE may be configured, by the base station, with up to three (i.e., zero, one, two, or three) SRS resource sets within the SRS-ResourceSet, which is the higher layer signaling, for which the resourceType value is 'aperiodic'.

■ If one SRS resource set is configured, three SRS resources may be included, each SRS resource may be composed of two SRS ports, each SRS resource may be transmitted at different OFDM symbol positions within the same slot, and two SRS ports of each SRS resource may be associated with different UE antenna ports.
■ If two SRS resource sets are configured, a total of three SRS resources may be divided and included in two SRS resource sets, each SRS resource may be composed of two SRS ports, all SRS resources within each SRS resource set may be transmitted at different OFDM symbol positions within the same slot, the SRS transmission for different SRS resource sets may be performed at the same or different OFDM symbol positions within different slots, and two SRS ports of each SRS resource may be associated with different UE antenna ports.
∘ For example, the UE may include the first and second SRS resources within the first SRS resource set and the third SRS resource within the second SRS resource set. The transmission for the first and second SRS resources within the first SRS resource set may be performed at the first and second OFDM symbol positions in the first slot, and the first and second OFDM symbol positions may be different from each other. The transmission for the third SRS resource within the second SRS resource set may be performed at the third OFDM symbol position in the second slot. In this case, the first and second slot positions may differ from each other, and the first and second OFDM symbol positions and the third OFDM symbol position may be the same as or different from each other.
∘ As another example, the case where the first and second SRS resource sets each include one SRS resource (e.g., the first SRS resource) and two SRS resources (e.g., the second and third SRS resources) are included may be possible, and other combinations may not be excluded.
■ If three SRS resource sets are configured, a total of three SRS resources may be divided and included in three SRS resource sets, each SRS resource may be composed of two SRS ports, all SRS resources within each SRS resource set may be transmitted at different OFDM symbol positions within the same slot, the SRS transmission for different SRS resource sets may be performed at the same or different OFDM symbol positions within different slots, and two SRS ports of each SRS resource may be associated with different UE antenna ports.
∘ For example, the UE may include the first SRS resource within the first SRS resource set, the second SRS resource within the second SRS resource set, and the third SRS resource within the third SRS resource set. The transmission for the first SRS resource within the first SRS resource set may be performed at the first OFDM symbol position in the first slot. The transmission for the second SRS resource within the second SRS resource set may be performed at the second OFDM symbol position in the second slot. The transmission for the third SRS resource within the third SRS resource set may be performed at the third OFDM symbol position in the third slot. In this case, the first, second, and third slot positions may differ from each other, and the first to third OFDM symbol positions may be the same as or different from each other.

### [2T8R]

For a 2T8R operation of a UE, the UE may be configured, by a base station, with higher layer signaling for at least one combination of the following items, and an operation according to the higher layer signaling may be possible.
- The UE may be configured, by the base station, with up to one (i.e., zero or one) SRS resource set within the SRS-ResourceSet, which is the higher layer signaling, for which the resourceType value is 'periodic', one SRS resource set may include four SRS resources, each SRS resource may be composed of two SRS ports, each SRS resource may be transmitted at different OFDM symbol positions within the same or different slots, and two SRS ports of each SRS resource may be associated with different UE antenna ports.
- The UE may receive, from the base station, a configuration for the SRS resource set within the SRS-ResourceSet, which is the higher layer signaling, for which the resource Type value is 'semi-persistent' as follows.

■ If the UE does not report srs-AntennaSwitching2SP-1Periodic-r17 that is the UE capability report, the UE may be configured, by the base station, with up to one (i.e., zero or one) SRS resource set within the SRS-ResourceSet, which is the higher layer signaling, for which the resourceType value is 'semi-persistent'.
■ If the UE reports srs-AntennaSwitching2SP-1Periodic-r17 which is the UE capability report, the UE may be configured, by the base station, with up to two (i.e., zero, one, or two) SRS resource sets within the SRS-ResourceSet, which is the higher layer signaling, for which the resource Type value is 'semi-persistent' and two SRS resource sets within the SRS-ResourceSet, which is the higher layer signaling, for which the resourceType value is 'semi-persistent', may not be activated simultaneously.
■ One SRS resource set may include four SRS resources, each SRS resource may be composed of two SRS ports, each SRS resource may be transmitted at different OFDM symbol positions within the same or different slots, and two SRS ports of each SRS resource may be associated with different UE antenna ports.

- The UE may be configured, by the base station, with zero, two, three, or four SRS resource sets within the SRS-ResourceSet, which is the higher layer signaling, for which the resource Type value is 'aperiodic'.

■ If one SRS resource set is configured, four SRS resources may be included, each SRS resource may be composed of two SRS ports, each SRS resource may be transmitted at different OFDM symbol positions within the same slot, and two SRS ports of each SRS resource may be associated with different UE antenna ports.
■ If two SRS resource sets are configured, a total of four SRS resources may be divided and included in two SRS resource sets, each SRS resource may be composed of two SRS ports, all SRS resources within each SRS resource set may be transmitted at different OFDM symbol positions within the same slot, the SRS transmission for different SRS resource sets may be performed at the same or different OFDM symbol positions within different slots, and two SRS ports of each SRS resource may be associated with different UE antenna ports.
∘ For example, the UE may include the first and second SRS resources within the first SRS resource set and the third and fourth SRS resources within the second SRS resource set. The transmission for the first and second SRS resources within the first SRS resource set may be performed at the first and second OFDM symbol positions in the first slot, and the first and second OFDM symbol positions may be different from each other. The transmission for the third and fourth SRS resources within the second SRS resource set may be performed at the third and fourth OFDM symbol positions in the second slot, and the third and fourth OFDM symbol positions may be different from each other. In this case, the first and second slot positions may differ from each other, and the first and second OFDM symbol positions and the third and fourth OFDM symbol positions may be the same as or different from each other.
∘ As another example, the case where the first and second SRS resource sets each include one SRS resource (e.g., the first SRS resource) and three SRS resources (e.g., the second to fourth SRS resources) are included may be possible, and other combinations may not be excluded.
■ If three SRS resource sets are configured, a total of four SRS resources may be divided and included in three SRS resource sets, each SRS resource may be composed of two SRS ports, all SRS resources within each SRS resource set may be transmitted at different OFDM symbol positions within the same slot, the SRS transmission for different SRS resource sets may be performed at the same or different OFDM symbol positions within different slots, and two SRS ports of each SRS resource may be associated with different UE antenna ports.
∘ For example, the UE may include the first and second SRS resources within the first SRS resource set, the third SRS resource within the second SRS resource set, and the fourth SRS resource within the third SRS resource set. The transmission for the first and second SRS resources within the first SRS resource set may be performed at the first and second OFDM symbol positions in the first slot, and the first and second OFDM symbol positions may be different from each other. The transmission for the third SRS resource within the second SRS resource set may be performed at the third OFDM symbol position in the second slot. The transmission for the fourth SRS resource within the third SRS resource set may be performed at the fourth OFDM symbol position in the third slot. In this case, the first, second, and third slot positions may differ from each other, and the first to fourth OFDM symbol positions may be the same as or different from each other.
∘ As another example, the case where the first, second, and third SRS resource sets each include one SRS resource (e.g., the first SRS resource), two SRS resources (e.g., the second and third SRS resources), and one SRS resource (e.g., the fourth SRS resource) are included may be possible, and other combinations may not be excluded.
■ If four SRS resource sets are configured, a total of four SRS resources may be divided and included in four SRS resource sets, each SRS resource may be composed of two SRS ports, all SRS resources within each SRS resource set may be transmitted at different OFDM symbol positions within the same slot, the SRS transmission for different SRS resource sets may be performed at the same or different OFDM symbol positions within different slots, and two SRS ports of each SRS resource may be associated with different UE antenna ports.
∘ For example, the UE may include the first, second, third, and fourth SRS resources within the first, second, third, and fourth SRS resource sets, respectively, the transmission for the first, second, third, and fourth SRS resources within the first, second, third, and fourth SRS resource sets may be performed at the first, second, third, and fourth OFDM symbol positions in the first, second, third, and fourth slots, respectively, the first to fourth slot positions may be different from each other, and the first to fourth OFDM symbol positions may be the same as or different from each other.

### [4T8R]

For a 4T8R operation of a UE, the UE may be configured, by a base station, with higher layer signaling for at least one combination of the following items, and an operation according to the higher layer signaling may be possible.
- If the UE does not report srs-AntennaSwitching2SP-1Periodic-r17 which is the UE capability report,

■ The UE may be configured, by the base station, with up to two (e.g., zero, one, or two) different SRS resource sets within the SRS-ResourceSet, which is the higher layer signaling, for which the resource Type value is 'periodic' or 'semi-persistent'. For example, the UE may be configured, by the base station, with one of the following matters.
∘ The SRS resource set within the SRS-ResourceSet, which is the higher layer signaling, for which the resourceType value is 'periodic' or 'semi-persistent', is not configured
∘ One SRS resource set within SRS-ResourceSet, which is the higher layer signaling, for which the resource Type value is 'periodic'
∘ One SRS resource set within SRS-ResourceSet, which is the higher layer signaling, for which the resourceType value is 'semi-persistent'
∘ One SRS resource set within SRS-ResourceSet, which is the higher layer signaling, for which the resource Type value is 'periodic' and one SRS resource set, for which the resource Type value is 'semi-persistent'
∘ Regarding the above, each SRS resource set may include two SRS resources, each SRS resource may be composed of four SRS ports, each SRS resource may be transmitted at different OFDM symbol positions within the same or different slots, and four SRS ports of each SRS resource may be associated with different UE antenna ports.

- If the UE reports srs-AntennaSwitching2SP-1Periodic-r17 which is the UE capability report, the UE may be configured, by the base station, with up to two (i.e., zero, one, or two) SRS resource sets within the SRS-ResourceSet, which is the higher layer signaling, for which the resourceType value is 'semi-persistent' and may be configured, by the base station, with up to one (i.e., zero or one) SRS resource set within the SRS-ResourceSet, which is the higher layer signaling, for which the resourceType value is 'periodic', and two SRS resource sets within the SRS-ResourceSet, which is the higher layer signaling, for which the resource Type value is 'semi-persistent', may not be activated simultaneously.

■ Each SRS resource set may include two SRS resources, each SRS resource may be composed of four SRS ports, each SRS resource may be transmitted at different OFDM symbol positions within the same or different slots, and four SRS ports of each SRS resource may be associated with different UE antenna ports.

- The UE may be configured, by the base station, with up to zero, one, or two SRS resource sets within the SRS-ResourceSet, which is the higher layer signaling, for which the resourceType value is 'aperiodic'.

■ If one SRS resource set is configured, two SRS resources may be included, each SRS resource may be composed of four SRS ports, each SRS resource may be transmitted at different OFDM symbol positions within the same slot, and four SRS ports of each SRS resource may be associated with different UE antenna ports.
■ If two SRS resource sets are configured, a total of two SRS resources may be divided and included in two SRS resource sets, each SRS resource may be composed of four SRS ports, all SRS resources within each SRS resource set may be transmitted at different OFDM symbol positions within the same slot, the SRS transmission for different SRS resource sets may be performed at the same or different OFDM symbol positions within different slots, and four SRS ports of each SRS resource may be associated with different UE antenna ports.
o For example, the UE may include the first and second SRS resources within the first and second SRS resource sets, respectively, and the transmission for the first and second SRS resources within the first and second SRS resource sets may be performed at the first and second OFDM symbol positions, respectively, in the first and second slots. In this case, the first and second slot positions may differ from each other, and the first and second OFDM symbol positions may be the same as or different from each other.
When the UE performs the antenna switching operation, that is, when the UE transmits different SRS resources associated with different antenna port(s), the time interval between two adjacent SRS resources among all transmitted SRS resources may generally require about 15 µs. Taking this into consideration, a (minimum) guard period as shown in [Table 38] below may be defined.

**[Table 38]**

| *µ* | Δ*f* = 2*^{µ}* **·** 15 [kH] | Y [symbol] |
|---|---|---|
| 0 | 15 | 1 |
| 1 | 30 | 1 |
| 2 | 60 | 1 |
| 3 | 120 | 2 |

In [Table 38], µ represents numerology, Δf represents subcarrier spacing, and Y represents the number of OFDM symbols representing the guard period, i.e., the time length of the guard period. Referring to [Table 38], the guard period may be set based on the parameter µ, which determines the numerology. During the guard period, the UE is configured not to transmit any other signals, and the guard period may be configured to be used entirely for antenna switching.

For example, the guard period may be configured between the transmission time point of two adjacent SRS resources in consideration of the SRS resources transmitted at different OFDM symbol positions within the same slot.

As another example, when a UE is configured with two SRS resource sets for antenna switching, and the corresponding two SRS resource sets are configured or triggered to be transmitted within two consecutive slots, and the UE reports the UE capability to transmit SRS at all OFDM symbol positions within the slots, the UE may expect that a guard period for antenna switching, which corresponds to at least Y OFDM symbols based on [Table 38], exists between the last OFDM symbol of the SRS transmission within the first slot in which the SRS transmission for the first SRS resource set is performed, and the first OFDM symbol of the SRS transmission within the second slot in which the SRS transmission for the second SRS resource set is performed. That is, the actual time difference between the two SRS transmissions may be greater than or equal to Y OFDM symbols.

- Regarding such inter-slot guard periods, similar to the guard period between two SRS resources within a slot described above, when the actual time difference between the last SRS transmission of the first slot and the first SRS transmission of the next slot within two consecutive slots is the Y OFDM symbols, the UE may not transmit any signal in the corresponding Y OFDM symbol interval.

- Regarding such inter-slot guard period, when the actual time difference between the last SRS transmission of the first slot and the first SRS transmission of the next slot within two consecutive slots is Y OFDM symbols, if both the SRS transmissions before and after the inter-slot guard period are dropped (all canceled) due to overlapping with other signals, the UE may determine that the inter-slot guard period defined by the Y OFDM symbols has been dropped (canceled) by applying the same priority as the SRS transmissions before and after the guard period, and if it is determined that the guard period have been dropped, the UE may perform uplink transmission in the inter-slot guard period.

For all the antenna switching schemes described above, the UE may expect that all SRS resources within all SRS resource sets, for which the usage, which is the higher layer signaling within the SRS resource set, is configured to 'antennaSwitching', is configured, by the base station, with the same number of SRS ports.

For the antenna switching schemes based on the 1T24, 1T4R, 2T4R, 1T6R, 1T8R, 2T6R, 2T8R, and 4T8R operations described above, the UE may not expect that two or more of the SRS resource sets, for which the usage, which is the higher layer signaling, is configured to 'antennaSwitching' by the base station, will be configured or triggered within the same slot.

For the antenna switching schemes based on the 1T1R, 2T2R, and 4T4R operations described above, the UE may not expect that two or more of the SRS resource sets, for which the usage, which is the higher layer signaling, is configured to 'antennaSwitching' by the base station, are set or triggered in the same OFDM symbol.

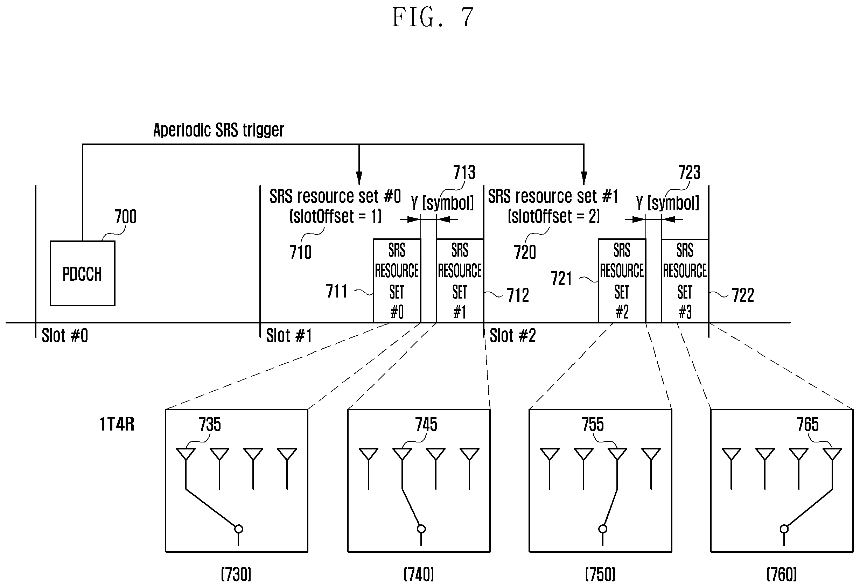

FIG. 7 is a diagram illustrating an SRS antenna switching operation according to an embodiment of the present disclosure.

The UE may represent a situation where it operates in 1T4R and may be in a situation where it is configured with two aperiodic SRS resource sets (e.g., SRS resource set #0 and #1). The UE receives a PDCCH from a base station 700 and may be instructed, via the PDCCH, to trigger aperiodic SRS for SRS resource set #0 710 and SRS resource set #1 720. In this case, a slot offset value for the SRS resource set #0 710 may be configured to slotOffset, which is the higher layer signaling, and the value is 1. An aperiodic SRS transmission for the SRS resource set #0 may be performed at a position (i.e., at slot #1) after 1 slot from the slot that has received the PDCCH. In addition, a slot offset value for the SRS resource set #1 720 may be configured to slotOffset, which is the higher layer signaling, and the value is 2. An aperiodic SRS transmission for the SRS resource set #1 may be performed at a position (i.e., at slot #2) after 2 slot from the slot that has received the PDCCH.

SRS resource #0 711 and SRS resource #1 712 included in the SRS resource set #0 710 are transmitted at different OFDM symbol positions within slot #1. In this case, Y OFDM symbols 713 may exist as a guard period between SRS resource #0 and SRS resource #1. Additionally, when transmitting SRS resource #0 730, the UE may perform SRS transmission by associating one SRS port with a first receive antenna port 735 of the UE, and when transmitting SRS resource #1 740, the UE may perform SRS transmission by associating one SRS port with a second receive antenna port 745 of the UE.

SRS resource #2 721 and SRS resource #3 722 included in the SRS resource set #1 720 are transmitted at different OFDM symbol positions within slot #1. In this case, Y OFDM symbols 723 may exist as a guard period between SRS resources #2 and #3. In addition, when transmitting the SRS resource #2 (750), the UE may perform SRS transmission by associating one SRS port with a third receive antenna port 755 of the UE, and when transmitting SRS resource #3 (760), the UE may perform SRS transmission by associating one SRS port with a fourth receive antenna port 765 of the UE.

By associating the four SRS resources #0 to #3 described above with different receive antenna ports of the UE and transmitting the SRS, the UE may transmit SRS from all different receive antenna ports to obtain channel information associated with all receive antennas of the UE. By doing so, the base station may acquire channel information between the base station and the UE and utilize the acquired channel information for uplink or downlink scheduling.

### [UE Capability Report Related]

In LTE and NR, a UE may perform a procedure to report the capability supported by the UE to the corresponding base station while associated with a serving base station. In the description below, this is referred to as a UE capability report.

The base station may deliver a UE capability enquiry message requesting a capability report to the UE in the associated state. The message may include a UE capability request for each a radio access technology (RAT) type of the base station. The request for each RAT type may include information such as supported frequency band combinations. In addition, for the UE capability enquiry message, multiple UE capabilities for each RAT type may be requested through one RRC message container transmitted by the base station, or the base station may deliver UE capability enquiry messages to the UE by including the UE capability enquiry messages including a request for the UE capability for each RAT type multiple times. That is, the UE capability enquiry is repeated multiple times within one message, and the UE may configure and report the UE capability information message multiple times in response to the UE capability enquiry. In next-generation mobile communication systems, the UE capability request may be made for NR, LTE, E-UTRA - NR dual connectivity (EN-DC), and Multi-RAT dual connectivity (MR-DC). Furthermore, while the UE capability enquiry message is generally transmitted initially after the UE is associated with the base station, the base station may request the UE capability enquiry message under any condition as needed.

The UE receiving a UE capability report request from the base station in the above step configures the UE capability according to the RAT type and band information requested by the base station. The method by which the UE configures the UE capability in the NR system is summarized below.

If the UE receives a list of LTE and/or NR bands from the base station via the UE capability request, the UE configures a band combination (BC) for EN-DC and NR stand-alone (SA). That is, the UE configures a candidate list of BCs for the EN-DC and NR SA based on the bands requested from the base station via FreqBandList. Additionally, the bands have priority in the order listed in the FreqBandList.

If the base station requests the UE capability report by setting a "eutra-nr-only" flag or a "eutra" flag, the UE completely removes NR SA BCs from the candidate list of BCs configured above. This operation may occur only when the LTE base station (eNB) requests the "eutra" capability.

Subsequently, the UE removes fallback BCs from the candidate list of BCs configured in the above step. Here, the fallback BC refers to a BC that may be obtained by removing a band corresponding to at least one SCell from any BC, and may be omitted because the BC before removing the band corresponding to at least one SCell already covers the fallback BC. This step applies to the MR-DC as well, that is, to LTE bands. The BCs remaining after this step is a final "candidate BC list."

The UE selects the BCs to be reported by selecting BCs matching the requested RAT type from the above final "candidate BC list". In this step, the UE configures the supportedBandCombinationList in a predetermined order. That is, the UE configures the BC and UE capability to be reported according to the pre-configured rat-Type order (nr -> eutra-nr -> eutra). In addition, the UE configures a featureSetCombination for the configured supportedBandCombinationList, and configures a list of "candidate feature set combinations" from the list of candidate BCs from which the list of fallback BCs (including capabilities of the same or lower level) has been removed. The "candidate feature set combination" includes feature set combinations for both NR and EUTRA-NR BC and may be obtained from the feature set combinations of the UE-NR-Capabilities and UE-MRDC-Capabilities containers.

Furthermore, if the requested rat Type is eutra-nr and has an influence, the featureSetCombinations are included in both the UE-MRDC-Capabilities and UE-NR-Capabilities containers. However, the feature set of the NR is included only in the UE-NR-Capabilities.

After the UE capability is configured, the UE delivers the UE capability information message including the UE capability to the base station. Based on the UE capabilities received from the UE, the base station subsequently performs appropriate scheduling and transmission/reception management for the corresponding UE.

Hereinafter, embodiments of the present disclosure will be described in detail with reference to the accompanying drawings. The contents of the present disclosure are applicable to frequency division duplex (FDD), time division duplex (TDD) and/or cross division duplex (XDD) (and/or subband non-overlapping full duplex (SBFD), full duplex) systems. Hereinafter, in the present disclosure, the higher signaling (or higher layer signaling) refers to a signal delivery method in which signals are transferred from the base station to the UE via the physical downlink data channel, or from the UE to the base station via the physical uplink data channel, and may also be referred to as RRC signaling, PDCP signaling, or a medium access control (MAC) control element (MAC CE).

Hereinafter, in the present disclosure, when the UE determines whether cooperative communication is applied, various methods, such as a method in which PDCCH(s) assigning PDSCH to which cooperative communication is applied has a specific format, a method in which PDCCH(s) assigning PDSCH to which cooperative communication is applied includes a specific indicator that notifies whether to apply the cooperative communication, a method in which PDCCH(s) assigning PDSCH to which cooperative communication is applied is scrambled by a specific RNTI, or a method for assuming that cooperative communication is applied in a specific section indicated by a higher layer, may be used. Thereafter, for convenience of description, the case in which the UE receives a PDSCH with cooperative transmission applied based on conditions similar to those described above will be referred to as a non-coherent joint transmission (NC-JT) case.

Hereinafter, in the present disclosure, determining a priority between A and B may be referred to in various ways, such as selecting one having a higher priority according to a predefined priority rule and performing the corresponding operation, or omitting or dropping an operation for one having a lower priority.

Hereinafter, the present disclosure describes the above examples through multiple embodiments, but these embodiments are not independent and one or more embodiments can be applied simultaneously or in combination.

For convenience in the following description, cells, transmission points, panels, beams, or/and transmission directions, etc., which may be distinguished by higher layer/L1 parameter such as TCI state or spatial relation information, or by indicators such as cell ID, TRP ID, and panel ID, may be uniformly referred to as a transmission reception point (TRP) (transmission point), beam, or TCI state. Therefore, in actual application, the TRP, beam, or TCI state may be appropriately replaced with one of the above-described terms.

Hereinafter, in the present disclosure, when the UE determines whether cooperative communication is applied, various methods, such as a method in which PDCCH(s) assigning PDSCH to which cooperative communication is applied has a specific format, a method in which PDCCH(s) assigning PDSCH to which cooperative communication is applied includes a specific indicator that notifies whether to apply the cooperative communication, a method in which PDCCH(s) assigning PDSCH to which cooperative communication is applied is scrambled by a specific RNTI, or a method for assuming that cooperative communication is applied in a specific section indicated by a higher layer, may be used. Thereafter, for convenience of description, the case in which the UE receives a PDSCH with cooperative transmission applied based on conditions similar to those described above will be referred to as a NC-JT case.

Hereinafter, embodiments of the present disclosure will be described in detail with reference to the accompanying drawings. Hereinafter, a base station is an entity that performs resource assignment of a UE, and may be at least one of a gNode B, gNB, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. Hereinafter, while the present disclosure is described below using the 5G system as an example, the embodiments of the present disclosure may also be applied to other communication systems with similar technical backgrounds or channel types. For example, LTE or LTE-A mobile communications, as well as mobile communication technologies developed after the 5G may be included. Therefore, the embodiments of the present disclosure may be applied to other communication systems with some modifications, as determined by those skilled in the art, without significantly departing from the scope of the present disclosure. The contents of the present disclosure are applicable to FDD, TDD, and XDD (or SBFD, full duplex) systems.

In addition, in describing the present disclosure, when it is decided that a detailed description for the functions or configurations related to the present disclosure may unnecessarily obscure the gist of the present disclosure, the detailed description therefor will be omitted. Further, the following terms are defined in consideration of the functions in the present disclosure and may be construed in different ways by the intention of users and operators, practice, etc. Therefore, the definitions thereof should be construed based on the contents throughout the present specification.

Hereinafter, in describing the present disclosure, the higher layer signaling may be signaling corresponding to at least one combinations of the following signaling types.
- MIB (Master Information Block)
- SIB (System Information Block) or SIB X (X=1, 2, ...)
- RRC (Radio Resource Control)
- MAC (Medium Access Control) CE (Control Element)

In addition, the L1 signaling may be signaling corresponding to at least one combinations of signaling methods using physical layer channels or signaling described below.
- PDCCH (Physical Downlink Control Channel)
- DCI (Downlink Control Information)
- UE-specific DCI
- Group common DCI
- Common DCI
- Scheduling DCI (e.g., DCI used for scheduling downlink or uplink data)
- Non-scheduling DCI (e.g., DCI not used for scheduling downlink or uplink data)
- PUCCH (Physical Uplink Control Channel)
- UCI (Uplink Control Information)

Hereinafter, in the present disclosure, determining a priority between A and B may be referred to in various ways, such as selecting one having a higher priority according to a predefined priority rule and performing the corresponding operation, or omitting or dropping an operation for one having a lower priority.

Hereinafter, the term "slot" as used in the present disclosure is a general term that may refer to a specific time unit corresponding to the transmit time interval (TTI). Specifically, the slot may refer to a slot used in a 5G NR system, or a slot or subframe used in a 4G LTE system.

Hereinafter, in the present disclosure, transmitting the SRS antenna switching may be understood as transmitting the SRS based on the SRS antenna switching described above and/or transmitting the SRS for antenna switching (or the SRS for antenna switching purpose). Hereinafter, in the present disclosure, the SRS antenna switching transmitted by/from the UE may be understood as the SRS transmitted based on the SRS antenna switching and/or the SRS for antenna switching (or the SRS for antenna switching purpose) transmitted by the UE.

Hereinafter, the present disclosure describes the above examples through multiple embodiments, but these embodiments are not independent and one or more embodiments can be applied simultaneously or in combination.

As described above with respect to the antenna switching, since reciprocity is established between the uplink and downlink channels in the TDD system, if channel information of one of the two channels may be acquired, information on the other channel may also be estimated. Since the base stations are composed of a larger number of transmit antennas than UEs, to estimate the downlink channel between the base station and the UE, the base station needs to transmit a larger number of reference signal (RS) ports/reference signals based on the larger number of reference signal ports to the UE, compared to uplink channel estimation. For example, to orthogonally estimate the downlink channel between each transmit antenna port of the base station and all UE antenna ports, the number of channel state information- reference signals (CSI-RSs) equal to the number of transmit antennas of the base station is required. On the other hand, to estimate the downlink channel based on the reciprocity with the uplink channel, the UE may transmit only the number of sounding reference signals (SRS) equal to the number of receive antennas of the UE to the base station.

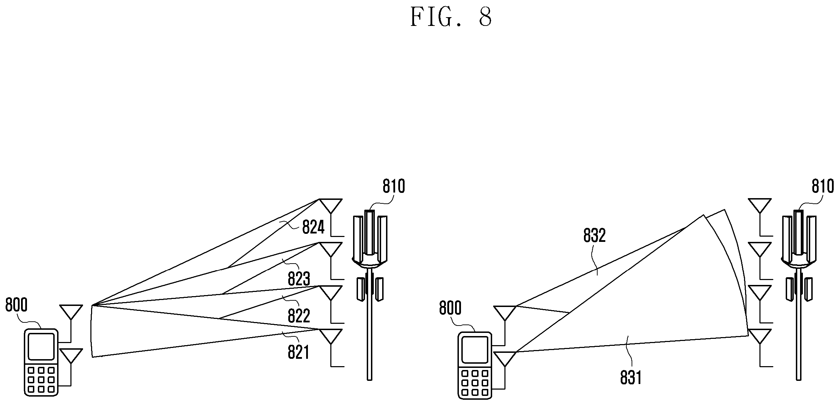

FIG. 8 is an example comparing a method for estimating a downlink channel based on CSI-RS with a method for estimating a downlink channel based on SRS and reciprocity. In FIG. 8, it is assumed that a UE 800 receives a downlink channel via two receive antennas and a base station 810 transmits the downlink channel via four transmit antennas.

Referring to FIG. 8, when the base station 810 transmits CSI-RSs 821, 822, 823, and 824 for each transmit antenna port to the UE 800, the UE may measure the downlink channel. Subsequently, the UE 800 reports the channel state information (hereinafter CSI) of the downlink channel estimated from the received CSI-RSs 821, 822, 823, and 824 to the base station 810.

On the other hand, when the UE 800 transmits SRSs 831 and 832 for each receive antenna port to the base station 810, the base station may measure the uplink channel. As such, when the base station measures the uplink channel based on the SRS and estimates the downlink channel through the measured uplink channel, it has the advantage that downlink channel information may be obtained without quantization errors in the downlink channel caused by CSI feedback, and that, considering the number of antenna ports at the base station and the UE, the downlink channel may be estimated using a smaller number of SRS ports compared to the total number of CSI-RS ports.

When the high-performance base station with a very large number of transmit antenna ports are considered (e.g., a base station composed of 32 transmit antenna ports), the advantages of SRS-based downlink channel estimation may be further enhanced. On the other hand, the transmit power of the SRS transmitted by the UE is much smaller than that of the CSI-RS transmitted by the base station. Therefore, when the distance between the base station and the UE is very large or sufficient uplink coverage is not secured, it may be difficult for the base station to successfully receive the SRS, or it may be difficult to estimate the downlink channel based on the reciprocity of the uplink channel because the estimation error of the uplink channel becomes very large. Despite these disadvantages, when sufficient coverage of the uplink channel between the base station and the UE may be secured, using the method for acquiring SRS-based downlink channel information may obtain significant benefits from a system perspective, in that it enables efficient use of RS resources and allows acquisition of downlink channel information without quantization errors.

The UE may support transmission via m antennas and reception via n antennas, such as in 'mTnR'. Considering the complexity and cost of transmit antennas, the number m of transmit antennas of the UE may be less than or equal to the number n of receive antennas.

When the number m of transmit antennas and the number n of receive antennas are equal, a separate antenna switching process is not required to acquire the SRS-based downlink channels, as described above. This may be understood as meaning that a radio frequency (RF) chain for uplink transmission is implemented on the corresponding antenna along with all receive antennas.

On the other hand, when the number n of receive antennas is greater than the number m of transmit antennas, the antenna switching process may be required to transmit SRS through all n receive antennas, as described above. In the present disclosure, transmitting the RS (e.g., SRS) through the receive antenna may mean that the RS (e.g., SRS) is transmitted by being associated with the receive antenna (or antenna port). Specific details may be referenced to the description of the antenna switching described above. For example, when the UE is implemented with two transmit antennas and four receive antennas, the UE needs to be implemented such that, in order to transmit the SRS for downlink channel estimation for the four receive antennas, each of the two transmit antennas is switched once to transmit the SRS signals through a total of four antennas.

Considering the cost and complexity of the UE, the number of transmit antennas may be smaller than the number of receive antennas. That is, since receive modules, such as a receive filter, may be associated with each receive antenna part of the UE, the receive module may be implemented so that downlink signals may be received via n receive antennas. On the other hand, since transmitting RF chain modules, such as a transmitting filter, a low noise amplifier (LNA), and a power amplifier (PA), are associated with only some transmit antenna parts of the total antennas, the transmitting RF chain modules may be implemented so that the uplink signals may be transmitted to only m transmit antennas. This may be implemented in consideration of the heat generation and cost of the UE, the interference between components, etc. When the UE supports mTnR and m is smaller than n, the antenna switching may be performed to acquire the SRS-based downlink channel as described above.

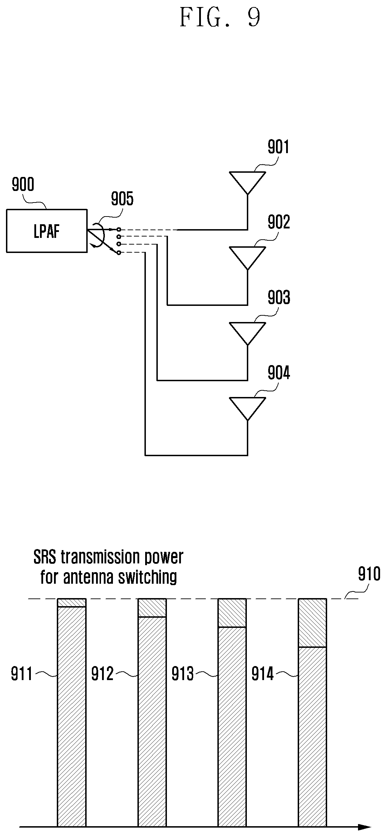

FIG. 9 illustrates an example of a case where, when the UE supports 1T4R, the UE performs the SRS antenna switching and the base station acquires the downlink channel.

Referring to FIG. 9, the UE may perform the uplink transmission based on one transmit antenna port using one transmit module (e.g., which may be constituted by an LNA, a PA and a filter (LPAF)) 900. When the UE performs antenna switching for four receive antennas 901, 902, 903, and 904, the UE may transmit SRS by sequentially switching the single transmit module 900 from the first antenna 901 to the fourth antenna 904 using a switch 905.

In this case, due to pathloss, etc., caused by a form factor of the UE and the arrangement location of the receive antenna, the SRS may be transmitted with less power than the power applied by the transmit module. This may be defined as insertion loss (IL). In addition, the UE may intentionally reduce a target power value for interference avoidance, interference prevention, etc., not only due to the form factor of the UE, the pathloss, etc., but also depending on whether other components (e.g., camera, Bluetooth, Wi-Fi, or other RF components) of the UE are operating. That is, when performing the SRS antenna switching, an imbalance may occur in the SRS transmit power 911, 912, 913, and 914 transmitted to each antenna, due to the insertion loss as well as the interactions between other components of the UE, etc.

As in an example illustrated in FIG. 9, the magnitude of the SRS transmit power 912 to 914 transmitted to the second to fourth antennas may be relatively smaller than the SRS transmit power 911 transmitted to the first antenna. This may be defined as an insertion loss imbalance (IL imbalance). In other words, due to the transmit module of the UE and the antenna arrangement, the interactions between other elements, etc., a problem may arise where the UE is unable to transmit the SRS to each receive antenna with uniform transmit power.

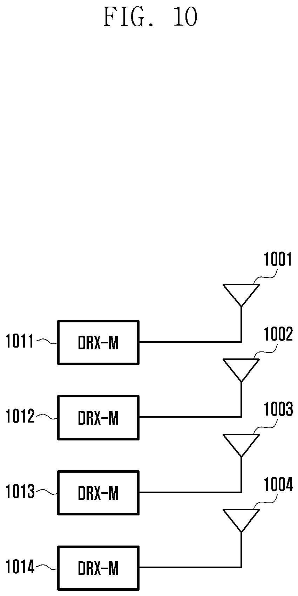

FIG. 10 is a diagram illustrating an example of a UE structure supporting four receive antennas. Specifically, FIG. 10 is an example of a UE supporting four receive antennas 1001 to 1004.

Referring to FIG. 10, unlike the transmit module, receive modules (DRX-Ms, diversity Rx modules) 1011 to 1014 for diversity reception have a lower cost and a simpler structure than the transmit module, and thus may be arranged and operated at all receive antennas. Therefore, since there may not be a significant difference in the insertion loss between each receive antenna 1001 to 1004 and the receive modules 1011 to 1014, unlike the transmission case described above in FIG. 9, the imbalance between the downlink channels or the downlink reference signals, such as CSI-RS, received by each antenna may be very small or may not exist.

As illustrated in FIGS. 9 and 10, a difference may occur between the downlink channel estimated based on the SRS transmitted by the UE and the downlink channel received by the UE, depending on the presence or absence of the IL imbalance. That is, while the base station ideally expects the downlink channel received by the UE and the downlink channel acquired through the SRS antenna switching to be identical, the occurrence of the IL imbalance may result in an estimation error between the actual downlink channel received by the UE and the downlink channel estimated by the base station through the SRS antenna switching. If the accuracy of the downlink channel estimated by the base station through the SRS antenna switching may be improved, the base station may perform accurate precoding on the downlink channel transmitted to the UE, and may maximize beamforming gain through accurate precoding to increase downlink throughput.

In the present disclosure, a method for reporting, by a UE, additional information for compensating for errors in a downlink channel estimated by a base station through SRS antenna switching, and improving, by the base station, accuracy of the downlink channel estimated by SRS antenna switching based on the reported additional information will be described in detail. The following embodiments are not independent, and one or more embodiments can be applied simultaneously or in combination.

### <First Embodiment: Method for configuring a plurality of precoded (multiple precoded) CSI-RSs for CSI comparison>

The first embodiment specifically describes a method in which a base station transmits a plurality of precoded CSI-RSs to be compared for a UE to calculate additional information in order to compensate for errors of a downlink channel estimated by the base station through SRS antenna switching.

When the base station and the UE select a precoder for downlink channel transmission based on the same precoder set (when the UE selects a precoder for CSI report), the precoder determined by the base station as the downlink channel estimated by the SRS antenna switching and the precoder determined by the UE through the received CSI-RS may be selected as different values depending on the channel estimation error caused by the occurrence of the above-described IL imbalance. When the difference between the precoders selected based on the downlink channel estimation error may be compensated in this way, the base station may calculate a more accurate precoder by using information that may compensate for the downlink channel estimated by the SRS antenna switching and the precoder.

Meanwhile, the actual downlink channel may be received by the UE, but due to CSI feedback overhead, etc., the UE may not report the received downlink channel to the base station without quantization error. Therefore, even if the UE selects the precoder based on the received downlink channel and performs the CSI report, the base station may only identify the information on the precoder determined based on the SRS antenna switching and the precoder reported by the UE, and there is a problem in that the base station may not identify an effective channel in which the actually precoded information is transmitted through the actual channel and received by the UE.

The uplink channel *Ĥ_{U}* with an error caused by the IL imbalance is explained according to Equation 2 below.

$\left[{h}_{1 U} {h}_{2 . U}… {h}_{n . U}\right] ⋅ α \left(t\right) = {H}_{U} ⋅ a \left(t\right) = {\hat{H}}_{U} , where a \left(t\right) = \left[\begin{matrix}{α}_{1} \left(t\right) & 0 & 0 & 0 \\ 0 & {α}_{2} \left(t\right) & 0 & 0 \\ ⋮ & ⋮ & ⋱ & ⋮ \\ 0 & 0 & 0 & {α}_{n} \left(t\right)\end{matrix}\right]$

Here, n refers to the number of receive antennas of the UE, ***h**_{x,U}* refers to the uplink channel received by the base station via the SRS antenna switching transmitted through an x-th receive antenna of the UE, and the magnitude of the vector ***h***_{*x*,U} may be defined as [the number *T_{gNB}* × 1 of transmit/receive antennas of the base station]. It is assumed that the base station is implemented with *T_{gNB}* transmit antennas and *T_{gNB}* receive antennas that are the same number. ***α***(t) refers to a diagonal matrix to express the IL imbalance caused by the insertion loss and other components of the UE. Each element *αₓ*(*t*) refers to the magnitude of the IL imbalance that occurs when the SRS is transmitted through the x-th receive antenna of the UE at time point t. Finally, the uplink channel ***Ĥ****_{U}* received by the base station refers to the uplink channel in which the estimation error occurs due to the inclusion of the IL imbalance, and the magnitude of the matrix ***Ĥ****_{U}* may be defined as [the number *T_{gNB}* of transmit/receive antennas of the base station × the number n of receive antennas of the UE]. The base station may estimate, based on the received uplink channel ***Ĥ****_{U}*, the downlink channel ***Ĥ***_{D} as ${\hat{H}}_{D} = {H}_{U}^{H}$ according to channel reciprocity, and determine a precoder ***Ŵ****_{SRS}* that may maximize the throughput of the downlink data (or, using a method that may satisfy specific target performance depending on the implementation of the base station) based on the estimated downlink channel.

Meanwhile, the UE may receive the CSI-RS from the base station, calculate the CSI, and report the CSI to the base station. The UE may estimate the downlink channel $\left[{h}_{1 D} {h}_{2 . D}… {h}_{{T}_{uh} , {H}^{D}}\right] = {H}_{D}$ from the received CSI-RS. Here, *T_{gNB}* refers to the number of transmit/receive antennas of the base station, and ***h**_{y,D}* refers to the downlink channel received by the UE via the CSI-RS transmitted through a y-th transmit/receive antenna of the base station, which may be defined as [the number n × 1 of receive antennas of the UE]. That is, the size of the downlink channel ***H***_{D} finally received by the UE may be defined as [the number n of receive antennas of the UE × the number *T_{gNB}* of transmit/receive antennas of the base station]. The UE may determine the PMI for the downlink channel ***H***_{D} estimated by receiving the CSI-RS. The UE may multiplex the CSI including the determined PMI with the PUSCH and report the CSI to the base station. The base station may determine the precoder ***Ŵ****_{CSI}* through the PMI included in the CSI reported by the UE. Here, ***Ŵ****_{SRS}* calculated by the base station and ***Ŵ****_{CSI}* calculated by the UE may be precoders selected using the same type of precoding scheme (e.g., both may be precoders selected using an eigen decomposition-based precoding method). Alternatively, depending on implementations between each base station and UE, the precoder may be selected by different types of precoding schemes.

The base station may select a method for supporting downlink channel transmission as follows.
- Whether to transmit the downlink channel by acquiring the downlink channel based on the SRS antenna switching;
- Whether to transmit the downlink channel by acquiring the downlink channel information based on the CSI-RS transmission and the CSI report of the UE; or
- It may be determined whether to transmit the downlink channel by improving the accuracy of the SRS antenna switching-based downlink channel estimation method using both the SRS antenna switching and CSI-RS.

The base station may determine one of the above-described methods after receiving the SRS for the SRS antenna switching and the CSI report based on CSI-RS. Alternatively, the base station may determine one of the above-described methods after receiving only the SRS for the SRS antenna switching or only the CSI report based on the CSI-RS (after receiving either the SRS for the SRS antenna switching or the CSI report based on the CSI-RS).

When the base station improves the accuracy of the downlink channel estimation method based on the SRS antenna switching by using both the SRS antenna switching and CSI-RS, it may transmit the plurality of precoded CSI-RS to the UE to improve the accuracy of downlink channel estimation, and the UE may feed back to the base station the compensate information (compensate information for compensating for the estimation error of the downlink channel estimated based on the SRS antenna switching is hereinafter referred to as the 'compensate information') for compensating for the estimation error of the downlink channel estimated based on the SRS antenna switching using the plurality of received precoded CSI-RS. Since the base station may not identify the effective channel received by the UE through each precoder, the UE measures the effective channel and reports the information to the base station to compensate for the difference between the effective channels. This allows the base station to identify the difference between the effective channels and compensate for the estimated downlink channel based on the SRS antenna switching, thereby improving the downlink throughput performance. In this way, the CSI report configuration may be defined for the UE to report the compensate information to the base station using the plurality of precoded CSI-RSs. A specific method for configuring the CSI report is presented in the third embodiment.

The base station may transmit the plurality of precoded CSI-RSs to the UE using the following method to be used by the UE to calculate the compensate information.
- The base station may determine the first precoded CSI-RS by referring to a precoder ***Ŵ****_{SRS}* determined by the base station based on the SRS antenna switching transmitted by the UE. Here, the meaning of "referencing" may refer to applying the precoder ***Ŵ****_{SRS}* determined by the base station to transmit the CSI-RS as is without further modification, or applying the precoder ***Ŵ****_{SRS}* to transmit the CSI-RS after modifying ***Ŵ****_{SRS}* according to the implementation of base station. The first precoded CSI-RS may be composed of the plurality of CSI ports.
- The base station may determine the second precoded CSI-RS by referring to a precoder ***Ŵ****_{CSI}* determined based on the CSI reported by the UE. Likewise, the meaning of "referencing" may refer to applying the precoder ***Ŵ****_{CSI}* determined based on the CSI reported by the UE to transmit the CSI-RS as is without further modification, or applying the precoder ***Ŵ****_{CSI}* to transmit the CSI-RS after modifying ***Ŵ****_{CSI}* according to the implementation of base station. The second precoded CSI-RS may be composed of the plurality of CSI ports.
- When the base station transmits the first and second precoded CSI-RS to the UE, it may consider certain constraints for transmitting the two precoded CSI-RS. For example, the two precoded CSI-RS resources may be composed of the same number of CSI ports. As another example, the two precoded CSI-RS resources may need to be transmitted as physical resource elements that do not overlap in the time and/or frequency domain. Alternatively, the two precoded CSI-RS resources may need to be transmitted as the physical resource elements that overlap in the time and/or frequency domain. When the two precoded CSI-RS are transmitted periodically or semi-persistently, the periods of the two precoded CSI-RS may be identical. Alternatively, the periods of the two precoded CSI-RS may have a relationship (e.g., the period of the first precoded CSI-RS may be k times the period of the second precoded CSI-RS).

In this way, the base station may transmit the plurality of precoded CSI-RSs to the UE, and the UE may determine information for compensating for the downlink channel estimation errors based on the plurality of received precoded CSI-RSs, as in the second embodiment.

### <Second Embodiment: Method for Determining Information for Compensating for Downlink Channel Estimation Errors by Comparing Plurality of Precoded CSI-RSs>

In the second embodiment, a method is described in detail, in which a UE compares a plurality of received precoded CSI-RSs to identify a difference between two effective channels, and, based on the identified difference, calculates, generates, or acquires information for compensating for estimation errors in downlink channel estimation using SRS antenna switching.

In the first embodiment described above, the base station may transmit the plurality of precoded CSI-RSs to the UE to instruct the UE to determine the compensate information. The UE receives the plurality of precoded CSI-RSs transmitted by the base station according to the first embodiment. When the base station transmits the first and second precoded CSI-RS, it is assumed that the base station has applied the precoding without modifying the precoding when transmitting the CSI-RS. The UE may estimate the effective channel ***H***_{D} · ***Ŵ****_{SRS}* = ***H_{SRS}*** through the first precoded CSI-RS and estimate the effective channel ***H***_{D} · ***Ŵ****_{CSI}* = ***H_{CSI}*** through the second precoded CSI-RS. This is merely an example for the convenience of description, and the base station may transmit the CSI-RS by applying precoders other than ***Ŵ****_{SRS}* and ***Ŵ****_{CSI}* to the first precoded CSI-RS and the second precoded CSI-RS. Since the two effective channels ***H***_{SRS} and ***H***_{CSI} estimated by the UE and were transmitted to the UE through different precoders, the difference arises between the two effective channels.

Finally, the base station may expect to perform the compensate at the base station part based on the SRS antenna switching and the compensate information to estimate a downlink channel with a small estimation error even without receiving CSI-RS-based CSI feedback, and to determine a downlink precoder that may increase downlink throughput based on this. Therefore, when the UE may derive the effective channel identical or similar to ***H***_{CSI} by compensating for ***H***_{SRS} estimated through the CSI precoded based on the SRS antenna switching with any information ***W*** (compensate information), the UE may report this information ***W*** to the base station. This allows the base station to compensate for the channel obtained using the SRS antenna switching (only) with the information ***W***, thereby obtaining the compensated downlink channel with a small estimation error even without transmitting the CSI-RS and receiving the CSI report.

In this way, the compensate information ***W*** for deriving an effective channel identical or similar to ***H***_{CSI} may be determined in any method depending on the implementation of the UE. As examples, the UE may utilize the following methods:
- [Method 1] The UE may select a ***W*** that minimizes the difference between each effective channel and report the selected ***W*** to the base station. As a method of selecting a ***W*** that minimizes the difference, the UE may select a ***W*** that minimizes a mean squared error (MSE) as shown in Equation 3 below and report the selected ***W*** to the base station. The UE may report the ***W*** satisfying Equation 3 to the base station.$W = {arg}_{i} min MSE \left({H}_{SRS}⋅{W}_{i},{H}_{CSI}\right)$
- [Method 2] The UE may select a ***W*** that may maximize the correlation between each effective channel and report the selected W to the base station. As a method for selecting the *W* that maximizes the correlation, the following Equation 4 may be considered. The UE may report the ***W*** satisfying Equation 4 to the base station.
   $W = {arg}_{i} max corr \left({H}_{SRS}⋅{W}_{i}.{H}_{CSI}\right)$

Next, depending on the implementation of the UE, candidates for determining ***W*** based on the methods described in [Method 1] and [Method 2] or any other implementation of the UE not described above may be determined as follows:
- [Candidate 1] Candidate precoder matrices based on the discrete Fourier transform (DFT) may be considered. The candidate matrices may be generated based on DFT vectors generated in various phases.
- [Candidate 2] Candidate precoder matrices based on the non-DFT may be considered. The candidate matrices may be generated based on computer-generated vectors, and each vector may maintain orthonomal (orthogonal) properties.
- [Candidate 3] Candidate precoder matrices based on Eigen decomposition may be considered. The candidate matrices may be composed of eigen basis selected based on an eigen space generated for various randomly generated channels. Similarly, the vectors within the matrices may maintain orthogonal properties.
- [Candidate 4] Candidate precoder matrices for port selection may be considered. Candidate matrices may be generated based on vectors in which only some elements have non-zero values and the remaining elements are zero.

In addition to [Candidate 1] to [Candidate 4], candidates for determining W or W may be configured with any matrix candidates capable of minimizing the difference between two effective channels or maximizing the correlation according to the above-described [Method 1] or [Method 2] or other methods. According to an embodiment of the present disclosure, the base station and the UE may operate based on a common codebook to each other. That is, the base station and the UE may support a framework for reporting the compensate information based on any agreed codebook, the base station may configure the higher layer parameters for the UE based on the framework, and the UE may report capability reports to the base station indicating that it may support the corresponding capability based on the framework, and may also report the compensate information calculated by the UE to the base station.

### <Third Embodiment: Method for Reporting Calculated Channel Estimation Error Compensate Information>

In the third embodiment, a method for reporting the compensate information calculated by a UE to a base station according to the first and second embodiments, and a method for the base station to configure the higher layer parameters to receive the report, are described in detail.

Before describing a specific example, the following signaling between the base station and the UE may be assumed in the third embodiment. The base station may receive, from the UE, a UE capability report indicating that it may support the enhanced SRS antenna switching-based downlink channel estimation using the compensate information. Based on the UE capability report provided by the UE, the base station may configure the higher layer parameters to support the enhanced SRS antenna switching-based downlink channel estimation method using the compensate information in the UE. In this case, the base station may additionally configure an RRC parameter 'enableCompensationSRS' (or RRC parameter with any name indicating support for the enhanced SRS antenna switching-based downlink channel estimation method using the compensate information) in the UE. Hereinafter, in the specific example, it is assumed that the base station has configure the RRC parameter 'enableCompensationSRS', etc., in the UE. In the present disclosure, a name of RRC information element (RRC IE) is an example, and the present disclosure is not limited to a specific name.

In order for the base station to transmit and the UE to receive the plurality of precoded CSI-RSs described in the first embodiment, the base station may include a configuration for all CSI-RS resources within a configuration for CSI resources. For example, the base station may configure a plurality of NZP-CSI-RS-ResourceSets within the higher layer parameter CSI-ResourceConfig for CSI resources to the UE. When the plurality of NZP-CSI-RS-ResourceSets are configured, each NZP-CSI-RS-ResourceSet may be used to configure each precoded CSI-RS. Alternatively, the base station may configure one NZP-CSI-RS-ResourceSet within the higher layer parameter CSI-ResourceConfig for CSI resources to the UE and configure the plurality of NZP-CSI-RS-Resources within the NZP-CSI-RS-ResourceSet. When the plurality of NZP-CSI-RS-Resource are configured within the single NZP-CSI-RS-ResourceSet, each NZP-CSI-RS-Resource may be used to configure each precoded CSI-RS.

When one CSI-ResourceConfig includes the plurality of precoded CSI-RSs configurations, the plurality of precoded CSI-RSs may be configured to be received in association with the single CSI report configuration. That is, the CSI-ResourceConfig including the plurality of precoded CSI-RSs may be configured to be associated with any CSI-ReportConfig. When the CSI report for any one CSI-ReportConfig is scheduled/configured, the UE may receive the plurality of precoded CSI-RSs according to the CSI-ResourceConfig associated with the corresponding CSI-ReportConfig, calculate the compensate information for each of the plurality of precoded CSI-RSs, and report the calculated compensate information to the base station. Here, the conventional values may be used for 'reportQuantity' within the CSI-ReportConfig, or a quantity for reporting the compensate information may be defined and indicated based on this. For example, the 'reportQuantity' within the CSI-ReportConfig may be configured to a value such as 'PMI_forcompen' or 'SRS_compen'. Alternatively, the 'reportQuantity' may be configured to a value of any name to instruct the UE to report the compensate information.

The reporting method for the UE to report the compensate information may be performed aperiodically by being triggered via the DCI according to the configuration of CSI-ReportConfig. Alternatively, the reporting method for the UE to report the compensate information may be performed semi-persistently through the higher layer parameters and DCI for activation according to the configuration of CSI-ReportConfig. Alternatively, the reporting method for the UE to report the compensate information may be set/performed periodically through the higher layer parameters according to the configuration of CSI-ReportConfig.

Additionally, as described in the first embodiment, an index of the SRS resource set for the SRS antenna switching used to determine the precoded CSI-RS may be configured within CSI-ReportConfig, and the SRS resource set associated with reporting the compensate information may be configured as the higher layer parameter.

Alternatively, in order for the base station to transmit and the UE to receive the plurality of precoded CSI-RSs described in the first embodiment, the base station may configure CSI resources for each CSI-RS resource. The base station may configure the plurality of the higher layer parameters for CSI resources, CSI-ResourceConfig, for each precoded CSI-RS in the UE. That is, the base station may configure each of the two CSI-ResourceConfigs for the UE for the two precoded CSI-RSs. The base station may configure one NZP-CSI-RS-ResourceSet in each CSI-ResourceConfig and configure (at least) one NZP-CSI-RS-Resource within one NZP-CSI-RS-ResourceSet for the corresponding precoded CSI-RS.

The plurality of CSI-ResourceConfigs configured for each precoded CSI-RS may be associated with any one CSI-ReportConfig. That is, any one CSI-ReportConfig may be associated with the plurality of CSI-ResourceConfigs, and each CSI-ResourceConfig may be a resource setting for each precoded CSI-RS.

When the CSI report for any one CSI-ReportConfig is scheduled/configured, the UE may receive the plurality of precoded CSI-RSs according to the plurality of CSI-ResourceConfig associated with the corresponding CSI-ReportConfig, calculate the compensate information for each of the plurality of precoded CSI-RSs, and report the calculated compensate information to the base station. Here, the conventional values may be used for 'reportQuantity' within the CSI-ReportConfig, or the quantity for reporting the compensate information may be defined and indicated. For example, the 'reportQuantity' within the CSI-ReportConfig may be configured to a value such as 'PMI_forcompen' or 'SRS_compen'. Alternatively, the 'reportQuantity' may be configured to a value of any name to instruct the UE to report the compensate information.

The reporting method for the UE to report the compensate information may be performed aperiodically by being triggered via the DCI according to the configuration of CSI-ReportConfig. Alternatively, the reporting method for the UE to report the compensate information may be performed semi-persistently through the higher layer parameters and DCI for activation according to the configuration of CSI-ReportConfig. Alternatively, the reporting method for the UE to report the compensate information may be configured/performed periodically through the higher layer parameters according to the configuration of CSI-ReportConfig.

Additionally, as described in the first embodiment, an index of the SRS resource set for the SRS antenna switching used to determine the precoded CSI-RS may be configured within CSI-ReportConfig, and the SRS resource set associated with reporting the compensate information may be configured as the higher layer parameter.

Alternatively, the resource setting and the configuration for reporting the compensate information that are independent of the CSI resource configuration and the CSI report configuration may be considered. The configuration for the precoded CSI-RS, the reporting format for reporting the precoded CSI-RS, and the configuration for indicating the uplink channel may be added newly. The reporting method for reporting the compensate information may be executed aperiodically by being triggered via the DCI depending on the report setting. Alternatively, the reporting method for reporting the compensate information may be executed semi-persistently via the higher layer parameter and the DCI for activation depending on the report setting. Alternatively, the reporting method for reporting the compensate information may be executed periodically via the higher layer parameter depending on the report setting.

Additionally, as described in the first embodiment, an index of the SRS resource set for the SRS antenna switching used to determine the precoded CSI-RS may be included in the report setting, and the SRS resource set associated with reporting the compensate information may be configured as the higher layer parameter.

### <Fourth Embodiment: Method for Supporting Downlink Channel Transmission Based on Estimation Error Compensate Information>

A fourth embodiment describes a method in which a base station estimates an SRS antenna switching-based downlink channel using an enhanced method and supports downlink channel transmission to a UE by utilizing the compensate information received from the UE according to the first to third embodiments.

The base station may receive the compensate information transmitted by the UE according to the operations of the base station and the UE described in the first to third embodiments. Based on this, the base station may acquire the compensate information to compensate for the estimation error of the downlink channel estimated by the SRS antenna switching. The base station may apply the received compensate information to the downlink channel estimated by the SRS antenna switching according to the implementation method of the base station.

After receiving a report on the compensate information from the UE, the base station may estimate the downlink channel using only the SRS antenna switching and the received compensate information without receiving additional reports on the compensate information for a certain period of time. In other words, the base station may estimate the downlink channel between the UE and the base station by scheduling/configuring only the SRS antenna switching without transmitting CSI-RS for a certain time interval to estimate the downlink channel.

The certain time interval during which the base station does not transmit the CSI-RS for downlink channel estimation may be determined by the implementation of the base station or may be a time window predefined by the base station and the UE. When the base station and the UE predefine a certain time interval during which the CSI-RS is not transmitted for the downlink channel estimation, the base station may configure, for the UE, the information on the certain time interval as the higher layer parameter. When the base station determines a certain time interval according to an implementation of the base station, the base station may determine the certain time interval by comprehensively considering a downlink channel estimated based on SRS antenna switching transmitted by the UE, ACK (acknowledgement) and NACK (negative ACK) for a downlink channel transmitted to the UE based on the estimated downlink channel, a retransmission rate, or the like.

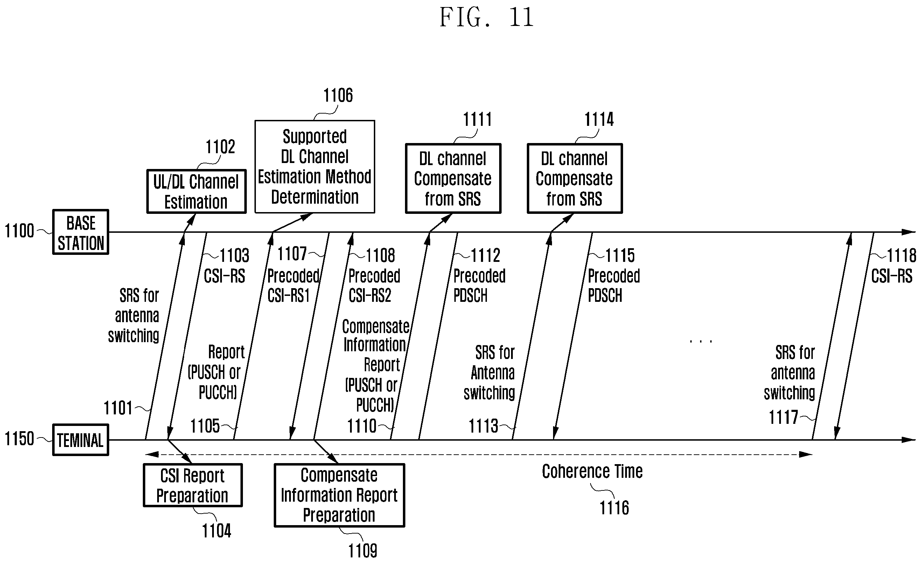

FIG. 11 is a diagram illustrating an example of an operation sequence of a base station and a UE according to an embodiment. Various modifications may be made to the method illustrated in FIG. 11. For example, although illustrated as a series of steps, various steps in each drawing may overlap, occur in parallel, occur in different orders, or occur multiple times. In other examples, steps may be omitted or replaced with other steps.

Referring to FIG. 11, a base station 1100 may schedule/configure the SRS antenna switching for a UE 1150. In this case, the SRS antenna switching may be scheduled/configured based on DCI or the higher layer parameter.

In operation 1101, the UE may transmit the scheduled/configured SRS antenna switching to the base station. That is, the UE may transmit the SRS for the scheduled/configured SRS antenna switching (SRS according to the SRS antenna switching) to the base station.

In operation 1102, the base station may estimate the uplink channel through the SRS resulting from the received SRS antenna switching and estimate the downlink channel through reciprocity.

In operation 1103, the base station may transmit the CSI-RS to the UE. In this case, the CSI-RS transmitted by the base station may be scheduled/configured based on the DCI or the higher layer parameters.

In operation 1104, the UE may prepare the CSI report based on the received CSI-RS.

In operation 1105, the UE may transmit the prepared CSI to the base station, and may transmit the CSI by multiplexing the CSI via the PUSCH or PUCCH depending on the CSI report configuration. In this case, the CSI report may be scheduled/configured based on the DCI or the higher layer parameter.

In operation 1106, the base station may select a downlink channel estimation method to support based on a CSI report received from the UE, downlink channel information estimated based on the SRS antenna switching, or the like.

When the base station does not support the enhanced SRS antenna switching-based downlink channel estimation using the compensate information, the base station may support the UE using the SRS antenna switching or CSI-RS-based downlink channel estimation method without performing a series of processes to determine and report separate compensate information during a specific time interval (coherent time, coherence time, 1116). Alternatively, it may not support the enhanced SRS antenna switching-based downlink channel estimation using the compensate information for a longer period of time, such as during the reconfiguration for the higher layer parameter or the cell re-search, rather than during the specific time interval 1116.

When the base station supports the enhanced SRS antenna switching-based downlink channel estimation using the compensate information, in operations 1107 and 1108, the base station may transmit the plurality of precoded CSI-RSs (precoded CSI-RS1 and precoded CSI-RS2) to the UE. Alternatively, the precoded CSI-RS may be referred to as beamformed CSI-RS. More specific contents refer to the description of the first embodiment described above.

In operation 1109, the UE may prepare a report by calculating the compensate information (the compensation information, compen. info.) based on the plurality of received precoded CSI-RS. More specific contents refer to the description of the second embodiment described above.

In operation 1110, the UE may report the compensate information to the base station according to the higher layer configuration for reporting the compensate information. Similar to the CSI, the compensate information may be multiplexed with the PUSCH or PUCCH and reported to the base station according to the higher layer configuration. More specific contents refer to the description of the third embodiment described above.

In operation 1111, the base station may perform the enhanced downlink channel estimation by applying the received compensate information to the downlink channel estimated by the SRS antenna switching.

Thereafter, in operation 1112 (when there is downlink data to be transmitted), the base station determines the precoder of the estimated downlink channel through the enhanced downlink channel estimation and may transmit the downlink channel to the UE.

Thereafter, the base station performs the enhanced downlink channel estimation through the SRS antenna switching 1113 transmitted by the UE and a process 1114 of applying the received compensate information, without a series of operations 1103 to 1110 for reporting the compensate information during a certain time interval (coherence time, 1116). In operation 1115, the base station may transmit downlink data to the UE based on the downlink channel estimated based on this.

After a certain time interval 1116 has elapsed from a certain time point (in FIG. 11, a time point of SRS antenna switching transmission 1101, which is a time point of reporting the compensate information, is used as a reference, but a time point at which the compensate information is reported 1110 or another time point may be used as the reference), in operation 1117, the base station may schedule/configure SRS antenna switching for the UE to perform a series of operations 1103 to 1110 for reporting the compensate information, and the UE may perform SRS antenna switching.

Thereafter, in operation 1118, the base station may transmit the CSI-RS to the UE to transmit the plurality of precoded CSI-RSs. Thereafter, operations to support enhanced downlink channel estimation, such as CSI reporting 1105, transmission and reception of a plurality of precoded CSI-RSs 1107 and 1108, reporting of compensate information 1110, may be repeatedly performed at certain time intervals or may be triggered based on the DCI.

More specific contents of the operation of the terminal/base station according to an embodiment of the present disclosure described above may refer to the description of an embodiment of the present disclosure described above.

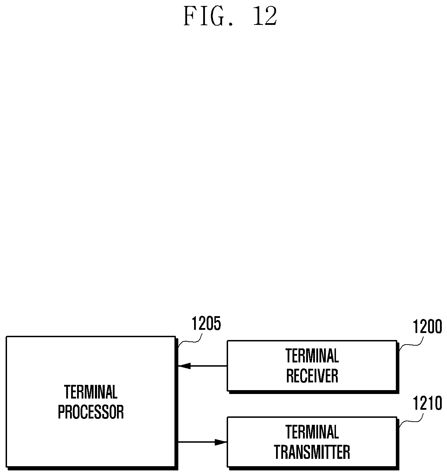

FIG. 12 is a diagram illustrating a structure of a terminal in the wireless communication system according to an embodiment of the present disclosure.

Referring to FIG. 12, the terminal may include a transceiver, which refers to a terminal receiver 1200 and a terminal transmitter 1210, a memory (not illustrated), and a terminal processor (or a terminal controller or processor) 1205. According to the communication method of the terminal described above, the transceiver 1200 and 1210, the memory, and the terminal processor 1205 of the terminal may operate. However, the components of the terminal are not limited to the examples described above. For example, the terminal may include more or fewer components than the components described above. In addition, the transceiver, the memory, and the processor may also be implemented in the form of one chip.

The transceiver may transmit and receive a signal to and from a base station. Here, the signal may include control information and data. To this end, the transceiver may include an RF transmitter that up-converts the frequency of the transmitted signal and amplifies the transmitted signal, an RF receiver that performs low-noise amplification on the received signal and down-converts the frequency of the received signal, etc. However, this is only one example of the transceiver, and the components of the transceiver are not limited to the RF transmitter and the RF receiver.

In addition, the transceiver may receive a signal via a radio channel, output the signal to the processor, and transmit the signal output from the processor via the radio channel.

The memory may store programs and data necessary for the operation of the terminal. In addition, the memory may store the control information or data included in the signal transmitted and received by the terminal. The memory may be configured as storage media, such as a ROM, a RAM, a hard disk, a CD-ROM, or a DVD, or a combination of the storage media. Furthermore, the number of memories may be plural.

In addition, the processor may control a series of processes so that the terminal may operate according to the embodiments described above. For example, the processor may receive a DCI composed of two layers and control the components of the terminal to simultaneously receive a plurality of PDSCHs. The number of processors may be plural, and the processor may execute the programs stored in the memory to perform control operations for components of the terminal.

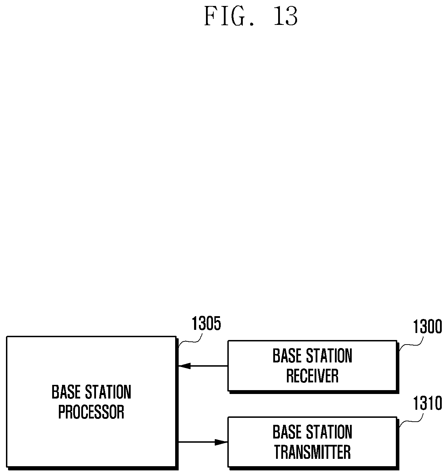

FIG. 13 is a diagram illustrating a structure of a base station in the wireless communication system according to an embodiment of the present disclosure.

Referring to FIG. 13, the base station may include a transceiver, which refers to a base station receiver 1300 and a base station transmitter 1310, a memory (not illustrated), and a base station processor (or a base station controller or processor) 1305. According to the communication method of the base station described above, the transceiver 1300 and 1310, the memory, and the base station processor 1305 of the base station may operate. However, the components of the base station are not limited to the examples described above. For example, the base station may include more or fewer components than the components described above. In addition, the transceiver, the memory, and the processor may also be implemented in the form of one chip.

The transceiver may transmit and receive a signal to and from a terminal. Here, the signal may include control information and data. To this end, the transceiver may include an RF transmitter that up-converts the frequency of the transmitted signal and amplifies the transmitted signal, an RF receiver that performs low-noise amplification on the received signal and down-converts the frequency of the received signal, etc. However, this is only one example of the transceiver, and the components of the transceiver are not limited to the RF transmitter and the RF receiver.

In addition, the transceiver may receive a signal via a radio channel, output the signal to the processor, and transmit the signal output from the processor via the radio channel.

The memory may store programs and data necessary for the operation of the base station. In addition, the memory may store the control information or data included in the signal transmitted and received by the base station. The memory may be configured as storage media, such as a ROM, a RAM, a hard disk, a CD-ROM, or a DVD, or a combination of the storage media. Furthermore, the number of memories may be plural.

The processor may control a series of processes so that the base station may operate according to the embodiments of the present disclosure described above. For example, the processor may control each component of the base station to configure and transmit two layers of DCIs including assignment information for a plurality of PDSCHs. The number of processors may be plural, and the processor may perform control operations for components of the base station by executing a program stored in the memory.

The methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage media are configured to be executable by one or more processors in an electronic device. One or more programs include instructions for causing an electronic device to execute methods according to embodiments described in a claim or specification of the present disclosure.

Such programs (software modules, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, it may be stored in a memory composed of a combination of some or all thereof. In addition, each of a plurality of constituent memories may be included.

In addition, the program may be stored in an attachable storage device that may be accessed through a communication network such as the Internet, the Intranet, a local area network (LAN), wide LAN (WLAN), or a storage area network (SAN), or a combination thereof. Such a storage device may be connected to a device implementing an embodiment of the present disclosure through an external port. In addition, a separate storage device on the communication network may be connected to the device implementing the embodiment of the present disclosure.

In the specific embodiments of the present disclosure described above, the components included in each embodiment are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the component may be configured in plural.

Meanwhile, the embodiments of the present disclosure disclosed in this specification and drawings are merely specific examples presented to easily describe the technical contents of the present disclosure and to help understanding of the present disclosure, and are not intended to limit the scope of the present disclosure. That is, it is obvious to a person having ordinary skill in the art to which the present disclosure pertains that other modifications based on the technical idea of the present disclosure are possible. In addition, each embodiment may be combined with each other and operated as needed. For example, portions of one embodiment and another embodiment of the present disclosure may be combined with each other to operate a base station and a terminal. For example, portions of the first and second embodiments of the present disclosure may be combined with each other to operate the base station and the terminal. In addition, while the embodiments have been presented based on an FDD LTE system, other modifications based on the technical ideas of the embodiments may also be practiced in other systems, such as a TDD LTE system, 5G, or NR system.

Meanwhile, the order of description in the drawings describing the method of the present disclosure does not necessarily correspond to the order of execution, and the order of precedence may be changed or executed in parallel.

Alternatively, the drawings describing the method of the present disclosure may omit some components and include only some components, without departing from the essence of the present disclosure.

In addition, the method of the present disclosure may be executed by combining some or all of the contents included in each embodiment, without departing from the essence of the present disclosure.

Various embodiments of the present disclosure have been described above. The foregoing description of the present disclosure is for illustrative purposes, and the embodiments of the present disclosure are not limited to the disclosed embodiments. It will be understood by those of ordinary skill in the art to which the present disclosure pertains that various modifications can be made in other specific forms without departing from the technical idea or essential features of the present disclosure. It should be interpreted that the scope of the present disclosure is defined by the following claims rather than the above-mentioned detailed description and all modifications or alterations deduced from the meaning, the scope, and equivalences of the claims are included in the scope of the present disclosure.

## Claims

1. A method performed by a terminal in a communication system, the method comprising:
receiving, via higher layer signaling, a sounding reference signal (SRS)-related configuration including a usage parameter indicating antenna switching;
transmitting an SRS corresponding to the antenna switching;
receiving a channel state information reference signal (CSI-RS);
transmitting CSI report based on the CSI-RS;
receiving a plurality of precoded CSI-RSs, wherein the plurality of precoded CSI-RSs includes a first precoded CSI-RS corresponding to the SRS and a second precoded CSI-RS corresponding to the CSI report; and
transmitting compensate information based on the plurality of precoded CSI-RSs, wherein the compensate information is for compensating for an SRS-based downlink channel estimation corresponding to the antenna switching.

2. The method of claim 1, wherein the compensate information is for compensating for the SRS-based downlink channel estimation corresponding to the antenna switching during a certain time interval in which the SRS-based downlink channel estimation corresponding to the antenna switching is applied,
wherein the certain time interval is predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and
wherein the downlink channel received within the certain time interval is based on precoding related to the SRS-based downlink channel estimation corresponding to the antenna switching compensated according to the compensate information.

3. The method of claim 1, wherein the plurality of precoded CSI-RSs are received based on a plurality of CSI-RS resource configurations, and the plurality of CSI-RS resource configurations are associated with a CSI report configuration,
wherein the plurality of CSI-RS resource configurations and the CSI report configuration are received via the higher layer signaling, and
wherein the CSI report configuration includes a reportQuantity parameter that indicates reporting of a CSI related quantity corresponding to the compensate information.

4. The method of claim 1, wherein the transmitting of the compensate information comprises:
determining a first precoder based on the first precoded CSI-RS;
determining a second precoder based on the second precoded CSI-RS;
determining a channel estimation corresponding to the CSI-RS and a first effective channel estimation based on the first precoder;
determining a second effective channel estimation based on the channel estimation corresponding to the CSI-RS and the second precoder;
determining a compensate value corresponding to the precoder based on the first effective channel estimation and the second effective channel estimation, the compensate value being a value in which a difference between the first effective channel estimation and the second effective channel estimation is minimized, or a value in which a correlation between the first effective channel estimation and the second effective channel estimation is maximized; and
transmitting compensate information including the compensate value.

5. The method of claim 1, further comprising:
transmitting UE capability information related to whether support for the SRS-based downlink channel estimation corresponding to the antenna switching is enabled based on the compensate information; and
receiving, via the higher layer signaling, information indicating activation for the SRS-based downlink channel estimation corresponding to the antenna switching based on the compensate information.

6. A terminal in a communication system, the terminal comprising:
a transceiver; and
a processor coupled with the transceiver, wherein the processor is configured to:
receive, via higher layer signaling, a sounding reference signal (SRS)-related configuration including a usage parameter indicating antenna switching;
transmit an SRS corresponding to the antenna switching;
receive a channel state information reference signal (CSI-RS);
transmit CSI report based on the CSI-RS;
receive a plurality of precoded CSI-RSs, wherein the plurality of precoded CSI-RSs includes a first precoded CSI-RS corresponding to the SRS and a second precoded CSI-RS corresponding to the CSI report; and
transmit compensate information based on the plurality of precoded CSI-RSs, wherein the compensate information is for compensating for an SRS-based downlink channel estimation corresponding to the antenna switching.

7. The terminal of claim 6, wherein the compensate information is for compensating for the SRS-based downlink channel estimation corresponding to the antenna switching during a certain time interval in which the SRS-based downlink channel estimation corresponding to the antenna switching is applied,
wherein the certain time interval is predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and
wherein the downlink channel received within the certain time interval is based on precoding related to the SRS-based downlink channel estimation corresponding to the antenna switching compensated according to the compensate information.

8. The terminal of claim 6, wherein the plurality of precoded CSI-RSs are received based on a plurality of CSI-RS resource configurations,
wherein the plurality of CSI-RS resource configurations are associated with a CSI report configuration,
wherein the plurality of CSI-RS resource configurations and the CSI report configuration are received via the higher layer signaling, and
wherein the CSI report configuration includes a reportQuantity parameter that indicates reporting of a CSI related quantity corresponding to the compensate information.

9. The terminal of claim 6, wherein, in transmitting the compensate information, the processor is configured to:
determine a first precoder based on the first precoded CSI-RS;
determine a second precoder based on the second precoded CSI-RS;
determine a channel estimation corresponding to the CSI-RS and a first effective channel estimation based on the first precoder;
determine a channel estimation corresponding to the CSI-RS and a second effective channel estimation based on the second precoder;
determine a compensate value corresponding to the precoder based on the first effective channel estimation and the second effective channel estimation, the compensate value being a value in which a difference between the first effective channel estimation and the second effective channel estimation is minimized, or a value in which a correlation between the first effective channel estimation and the second effective channel estimation is maximized; and
transmit compensate information including the compensate value.

10. The terminal of claim 6, wherein the processor is configured to:
transmit UE capability information related to whether support for the SRS-based downlink channel estimation corresponding to the antenna switching is enabled based on the compensate information; and
receive, via the higher layer signaling, information indicating activation for the SRS-based downlink channel estimation corresponding to the antenna switching based on the compensate information.

11. A method performed by a base station in a communication system, the method comprising:
transmitting, via higher layer signaling, a sounding reference signal (SRS)-related configuration including a usage parameter indicating antenna switching;
receiving an SRS corresponding to the antenna switching;
transmitting a channel state information reference signal (CSI-RS);
receiving CSI report corresponding to the CSI-RS;
transmitting a plurality of precoded CSI-RSs, wherein the plurality of precoded CSI-RSs includes a first precoded CSI-RS corresponding to the SRS and a second precoded CSI-RS corresponding to the CSI report; and
receiving compensate information based on the plurality of precoded CSI-RSs, wherein the compensate information is for compensating for an SRS-based downlink channel estimation corresponding to the antenna switching.

12. The method of claim 11, wherein the compensate information is for compensating for the SRS-based downlink channel estimation corresponding to the antenna switching during a certain time interval in which the SRS-based downlink channel estimation corresponding to the antenna switching is applied,
wherein the certain time interval is predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and
wherein the downlink channel transmitted within the certain time interval is based on precoding related to the SRS-based downlink channel estimation corresponding to the antenna switching compensated according to the compensate information.

13. The method of claim 11, wherein the plurality of precoded CSI-RSs are based on a plurality of CSI-RS resource configurations, and the plurality of CSI-RS resource configurations are associated with a CSI report configuration,
wherein the plurality of CSI-RS resource configurations and the CSI report configuration are transmitted via the higher layer signaling, and
wherein the CSI report configuration includes a reportQuantity parameter that indicates reporting of a CSI related quantity corresponding to the compensate information.

14. A base station in a communication system, the base station comprising:
a transceiver; and
a processor coupled with the transceiver, wherein the processor is configured to:
transmit, via higher layer signaling, a sounding reference signal (SRS)-related configuration including a usage parameter indicating antenna switching;
receive an SRS corresponding to the antenna switching;
transmit a channel state information reference signal (CSI-RS);
receive CSI report corresponding to the CSI-RS;
transmit a plurality of precoded CSI-RSs, wherein the plurality of precoded CSI-RSs includes a first precoded CSI-RS corresponding to the SRS and a second precoded CSI-RS corresponding to the CSI report; and
receive compensate information based on the plurality of precoded CSI-RSs, wherein the compensate information is for compensating for an SRS-based downlink channel estimation corresponding to the antenna switching.

15. The base station of claim 14, wherein the compensate information is for compensating for the SRS-based downlink channel estimation corresponding to the antenna switching during a certain time interval in which the SRS-based downlink channel estimation corresponding to the antenna switching is applied,
wherein the certain time interval is predefined, configured via the higher layer signaling, or determined based on a downlink channel related to the SRS-based downlink channel estimation corresponding to the antenna switching and hybrid automatic repeat request (HARQ-ACK)-related information corresponding to the downlink channel, and
wherein the downlink channel transmitted within the certain time interval is based on precoding related to the SRS-based downlink channel estimation corresponding to the antenna switching compensated according to the compensate information.
